# EUROPÄISCHE PATENTANMELDUNG

(11) **EP 2 062 476 A1**
(43) Veröffentlichungstag der Anmeldung: **27.05.2009**
(21) Anmeldenummer: 07119616.6
(22) Anmeldetag: 30.10.2007
(51) Int. Cl.: A01N 31/12, A01P 7/04, A01N 41/06, A01N 43/80, A01N 43/90, A01N 43/40, A01N 43/54, A01N 43/58, A01N 43/707

(54) **Insektizide Zusammensetzungen von 2-Cyano(het)-arylsulfonamidverbindungen und ihre isomeren Formen mit verbesserter Wirkung**

(71) Anmelder: Bayer CropScience AG, 40789 Monheim (DE)
(72) Erfinder: Die Erfindernennung liegt noch nicht vor

(57) **Zusammenfassung**

Die vorliegende Erfindung beinhaltet 2-Cyano(het)-arylsulfonsäureamide der Formel (I) und deren isomere Formen (I-A) und (I-B) 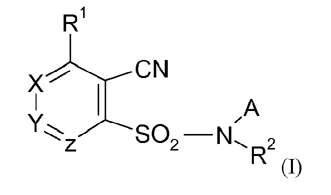 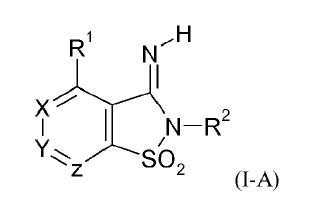 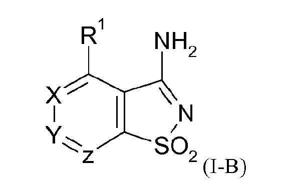 wobei
A, R₁, R₂, X,Y,Z die oben angegebenen Bedeutung haben- zur Bekämpfung von tierischen Schädlingen unter Verwendung von Penetrations förderern und/oder Ammonium- oder Phosphoniumsalzen.

## Beschreibung

Die Erfindung betrifft die Steigerung der Wirkung von Pflanzenschutzmitteln insbesondere von 2-Cyano(het)-arylsulfonamidverbindungen der Formel (I), deren isomeren Formen (I-A) und (I-B), bei denen die Variablen R¹ bis R⁵, sowie die Gruppen A, X, Y, und Z wie in Anspruch 2 definiert sind, und/oder ihre landwirtschaftlich nützlichen Salze durch die Zugabe von Ammonium- oder Phosphoniumsalzen und gegebenenfalls Penetrationsförderen, sowie die entsprechenden Mittel, Verfahren zu ihrer Herstellung und ihre Anwendung im Pflanzenschutz, insbesondere als Insektizide und/oder Akarizide. Die vorliegende Erfindung betrifft weiterhin die Verwendung von Verbindungen (I), (I-A) oder (I-B) und/oder ihren Salzen durch die Zugabe von Ammonium- oder Phosphoniumsalzen für die Bekämpfung von tierischen Schädlingen; landwirtschaftliche Zusammensetzungen, die eine pestizidwirksame Menge an mindestens einer Verbindung der allgemeinen Formel I, (I-A) oder (I-B) und/oder an mindestens einem landwirtschaftlich nützlichen Salz von I, (I-A) oder (I-B) und an mindestens einem inerten flüssigen und/oder festen landwirtschaftlich annehmbaren Träger sowie mindestens einen Penetrationsförderer und/oder Ammonium-oder Phosphoniumsalze enthalten; sowie ein Verfahren zur Bekämpfung von tierischen Schädlingen, bei dem man die tierischen Schädlinge, ihre Umwelt, ihre Brutstätten, ihre Nahrungsquelle, die Pflanze, den Samen, den Boden, die Oberfläche, die Substanz oder die Umwelt, in der die tierischen Schädlinge wachsen oder wachsen können, oder die Substanzen, Pflanzen, Samen, Böden, Oberflächen oder Räume, die gegen Befall oder Verseuchung mit den Tieren geschützt werden sollen, mit einer pestizidwirksamen Menge an mindestens einer 2-Cyano(het)-arylsulfonamidverbindung der allgemeinen Formel (I),(I-A) oder (I-B) und/oder mindestens einem landwirtschaftlich annehmbaren Salz davon behandelt.

Tierische Schädlinge zerstören stehende und geerntete Kulturen und greifen Holzgebäude und - bauwerke an, wodurch sie große wirtschaftliche Verluste bei der Nahrungsmittelversorgung sowie an Immobilien verursachen. Obwohl eine Vielzahl von pestiziden Mitteln bekannt ist, besteht nach wie vor ein Bedarf an neuen Mitteln für die Bekämpfung von tierischen Schädlingen, da die zu bekämpfenden Schädlinge eine Resistenz gegen diese Mittel entwickeln können. Insbesondere sind tierische Schädlinge wie Insekten und Spinnmilben schwer wirksam bekämpfbar.

Die EP 0033984 beschreibt substituierte 2-Cyanoarylsulfonamidverbindungen mit blattlausabtötender Wirksamkeit. Weiterhin bekannt wurden 2-Cyanoarylsulfonamide in WO 2005/035486 und WO 2006/056433 mit insektizider Wirkung. Deren Anwendung für Boden- und Saatgutanwendungen ist in W02006/100271 und WO 2006/100288 beschrieben. Außerdem sind auch noch isomere Formen von 2-Cyanoarylsulfonamiden sowie Derivate der isomeren Formen und deren insektizide Wirkung beschrieben in EP 86748, EP 110829, EP 133418, EP 138762, DE 3544436, EP 191734, EP 207891, JP 1989/319467, JP 1990/006496. Weiterhin sind auch 2-Cyano(het)-arylsulfonamide sowie Derivate der isomeren Formen und deren insektizide Wirkung beschrieben in WO 07/04558 und WO 07/014913. Auf diese Veröffentlichungen wird hiermit ausdrücklich Bezug genommen.

Alle in den erfindungsgemäßen Mitteln enthaltenen Wirkstoffe sind bereits bekannt und können nach im Stand der Technik beschriebenen Verfahren (siehe oben genannte Referenzen) hergestellt werden. Ihre pestizide Wirkung ist gut, jedoch insbesondere bei niedrigen Aufwandmengen und Konzentrationen nicht immer voll zufrieden stellend. Es besteht deshalb ein Bedarf für eine Wirkungssteigerung der die Verbindungen enthaltenden Pflanzenschutzmittel.

Ziel der vorliegenden Erfindung sind daher Mittel und Verfahren zur Verbesserung der Wirksamkeit von Verbindungen der allgemeinen Formel (I), (I-A) und (I-B), insbesondere gegen Insekten und Spinnmilben, die schwierig zu bekämpfen sind.

In der Literatur wurde bereits beschrieben, dass sich die Wirkung verschiedener Wirkstoffe durch Zugabe von Ammoniumsalzen steigern lässt. Dabei handelt es sich jedoch um als Detergens wirkende Salze (z.B. WO 95/017817) bzw. Salze mit längeren Alkyl- und / oder Arylsubstituenten, die permeabilisierend wirken oder die Löslichkeit des Wirkstoffs erhöhen (z.B. EP-A 0 453 086, EP-A 0 664 081, FR-A 2 600 494, US 4 844 734, US 5 462 912, US 5 538 937, US-A 03/0224939, US-A 05/0009880, US-A 05/0096386). Weiterhin beschreibt der Stand der Technik die Wirkung nur für bestimmte Wirkstoffe und / oder bestimmte Anwendungen der entsprechenden Mittel. In wieder anderen Fällen handelt es sich um Salze von Sulfonsäuren, bei denen die Säuren selber paralysierend auf Insekten wirken (US 2 842 476). Eine Wirkungssteigerung z.B. durch Ammoniumsulfat ist beispielsweise für die Herbizide Glyphosat und Phosphinothricin beschrieben (US 6 645 914, EP-A2 0 036 106). Desweiteren werden Kombinationen von Ammoniumsalzen mit insektiziden Wirkstoffen beschrieben in WO 07/068356, WO 07/068428, WO 07/068355, WO 07/068357, WO 07/068350, nicht jedoch in Kombination mit 2-Cyano(het)-arylsulfonamidverbindungen. Auf diese Veröffentlichungen wird hiermit ausdrücklich Bezug genommen. Auch der Einsatz von Ammoniumsulfat als Formulierhilfsmittel ist für bestimmte Wirkstoffe und Anwendungen beschrieben (WO 92/16108), es dient dort aber zur Stabilisierung der Formulierung, nicht zur Wirkungssteigerung.

Es wurde nun völlig überraschend gefunden, dass sich die Wirkung von Insektiziden und/oder Akariziden aus der Klasse der 2-Cyano(het)-arylsulfonamide (I), und deren isomeren Formen (I-A) und (I-B) durch den Zusatz von Ammonium- oder Phosphoniumsalzen zur Anwendungslösung oder durch den Einbau dieser Salze in eine Formulierung enthaltend 2-Cyano(het)-arylsulfonamide (I), und deren isomere Formen (I-A) und (I-B), deutlich steigern lässt. Gegenstand der vorliegenden Erfindung ist also die Verwendung von Ammonium- oder Phosphoniumsalzen zur Wirkungssteigerung von Pflanzenschutzmitteln, die insektizid und / oder akarizid wirksame 2-Cyano(het)-arylsulfonamide (I), und deren isomeren Formen (I-A) und (I-B) als Wirkstoff enthalten. Gegenstand der Erfindung sind ebenfalls Mittel, die insektizid wirksame 2-Cyano(het)-arylsulfonamide (I), und deren isomere Formen (I-A) und (I-B) und die Wirkung steigernde Ammonium- oder Phosphoniumsalze enthalten und zwar sowohl formulierte Wirkstoffe als auch anwendungsfertige Mittel (Spritzbrühen). Gegenstand der Erfindung ist schließlich weiterhin die Verwendung dieser Mittel zur Bekämpfung von Schadinsekten und/oder Spinnmilben.

Die 2-Cyano(het)-arylsulfonamidverbindungen (I) und deren isomere Formen (I-A), (I-B) sind beschrieben durch die allgemeinen Formeln 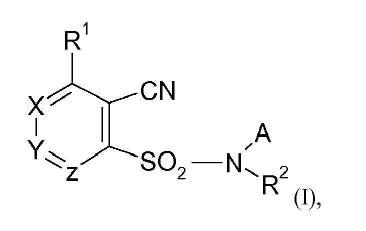 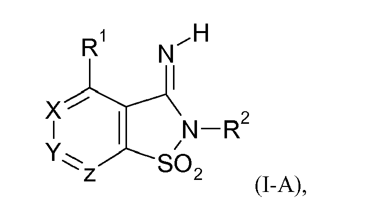 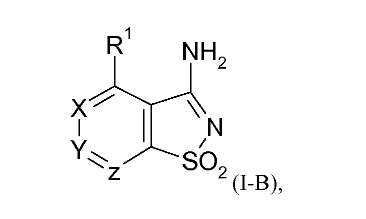 in welcher
- A: für Wasserstoff, C₁-C₆-Alkyl, C₂-C₆-Alkenyl oder C₁-C₆-Alkylcarbonyl steht, wobei die letztgenannten 3 Reste unsubstituiert, teilweise oder vollständig halogeniert sein können,
- X: für N, N-O oder C-R³ steht,
- Y: für N, N-O oder C-R⁴ steht,
- Z: für N, N-O oder C-R⁵ steht, mit der Maßgabe, dass mindestens eine der Gruppen X, Y oder Z für N oder N-O steht,
- R¹: für Wasserstoff, Halogen, C₁-C₄-Alkyl, C₁-C₄-Halogenalkyl, C₁-C₄-Halogenalkoxy, oder
- C₁-C₄: -Alkoxy steht, wobei der letztgenannte Rest einen oder zwei Reste aus der Gruppe C₁-C₄ Alkoxy tragen kann;
- R²: für Wasserstoff, C₁-C₆-Alkyl, C₂-C₆-Alkenyl, C₂-C₇-Alkinyl, C₃-C₈-Cycloalkyl oder C₁-C₄-Alkoxy, C₁-C₄-Alkylcarbonyl, wobei die sechs letztgenannten Reste unsubstituiert, teilweise oder vollständig halogeniert sein können und/oder einen, zwei oder drei Reste aus der Gruppe C₁-C₄-Alkoxy, C₁-C₄-Alkylthio, C₁-C₄-Alkylsulfinyl, C₁-C₄-Alkylsulfonyl, C₁-C₄-Halogenalkoxy, C₁-C₄-Halogenalkylthio, C₁-C₄-Alkylcarbonyl, C₁-C₄-Alkoxycarbonyl, Cyano, Amino, (C₁-C₄-Alkyl)amino, Di-(C₁-C₄-alkyl)amino, C₃-C₈-Cycloalkyl und Phenyl tragen können, wobei das Phenyl unsubstituiert, teilweise oder vollständig halogeniert sein kann und/oder einen, zwei oder drei Substituenten aus der Gruppe C₁-C₄-Alkyl, C₁-C₄-Halogenalkyl, C₁-C₄-Alkoxy, C₁-C₄ Halogenalkoxy tragen kann, steht;
- R³, R⁴ und R⁵: unabhängig voneinander für Wasserstoff, Halogen, Cyano, Nitro, C₁-C₆-Alkyl, C₃-C₈-Cycloalkyl, C₁-C₄-Halogenalkyl, C₁-C₄-Alkoxy, C₁-C₄-Alkylthio, C₁-C₄-Alkylsulfinyl, C₁-C₄-Alkylsulfonyl, C₁-C₄-Halogenalkoxy, C₁-C₄-Halogenalkylthio, C₂-C₆-Alkenyl, C₂-C₆-Alkinyl, C₁-C₄-Alkoxycarbonyl, Amino, (C₁-C₄-Alkyl)amino, Di-(C₁-C₄-alkyl)amino, Aminocarbonyl, (C₁-C₄-Alkyl)aminocarbonyl und Di-(C₁-C₄-alkyl)aminocarbonyl stehen.

Dabei können Verbindungen der Formel (I), in welchen A für Wasserstoff steht, gegebenenfalls in der isomeren Form (I-A) vorliegen; Verbindungen der Formel (I), in welchen A und R² für Wasserstoff stehen, können gegebenenfalls in der isomeren Form (I-B) vorliegen.

Die Verbindungen der Formel (I) und deren isomere Formen (I-A) und (I-B) besitzen eine breite insektizide und/oder akarizide Wirkung, die Wirkung lässt im Einzelnen aber zu wünschen übrig.

Die Wirkstoffe können in den erfindungsgemäßen Zusammensetzungen in einem breiten Konzentrationsbereich eingesetzt werden. Die Konzentration der Wirkstoffe in der Formulierung beträgt dabei üblicherweise 0,1 - 50 Gew.-%.

Ammonium- und Phosphoniumsalze, die erfindungsgemäß die Wirkung von Pflanzenschutzmitteln enthaltend 2-Cyano(het)-arylsulfonamide und deren isomere Formen (I-A) und (I-B) steigern, werden durch Formel (II) definiert 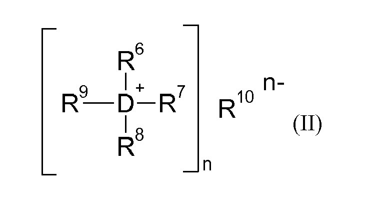 in welcher
- D: für Stickstoff oder Phosphor steht,
- D: bevorzugt für Stickstoff steht,
- R⁶,: R⁷, R⁸ und R⁹ unabhängig voneinander für Wasserstoff oder jeweils gegebenenfalls substituiertes C₁-C₈-Alkyl oder einfach oder mehrfach ungesättigtes, gegebenenfalls substituiertes C₁-C₈-Alkylen stehen, wobei die Substituenten aus Halogen, Nitro und Cyano ausgewählt sein können,
R⁶, R⁷, R⁸ und R⁹ bevorzugt unabhängig voneinander für Wasserstoff oder jeweils gegebenenfalls substituiertes C₁-C₄-Alkyl stehen, wobei die Substituenten aus Halogen, Nitro und Cyano ausgewählt sein können,
R⁶, R⁷, R⁸ und R⁹ besonders bevorzugt unabhängig voneinander für Wasserstoff, Methyl, Ethyl, n-Propyl, i-Propyl, n-Butyl, i-Butyl, s-Butyl oder t-Butyl stehen,
R⁶, R⁷, R⁸ und R⁹ ganz besonders bevorzugt für Wasserstoff stehen,
- n: für 1, 2, 3 oder 4 steht,
- n: bevorzugt für 1 oder 2 steht,
- R¹⁰: für ein anorganisches oder organisches Anion steht,
- R¹⁰: bevorzugt für Hydrogencarbonat, Tetraborat, Fluorid, Bromid, Jodid, Chlorid, Monohydrogenphosphat, Dihydrogenphosphat, Hydrogensulfat, Tartrat, Sulfat, Nitrat, Thiosulfat, Thiocyanat, Formiat, Laktat, Acetat, Propionat, Butyrat, Pentanoat, Citrat oder Oxalat steht,
- R¹⁰: besonders bevorzugt für Laktat, Sulfat, Monohydrogenphosphat, Dihydrogenphosphat, Nitrat, Thiosulfat, Thiocyanat, Citrat, Oxalat oder Formiat steht.
- R¹⁰: ganz besonders bevorzugt für Sulfat steht.

Die Ammonium- und Phosphoniumsalze der Formel (II) können in einem breiten Konzentrationsbereich zur Steigerung der Wirkung von Pflanzenschutzmitteln enthaltend 2-Cyano(het)-arylsulfonamide und/oder deren isomere Formen eingesetzt werden. Im Allgemeinen werden die Ammonium- oder Phosphoniumsalze im anwendungsfertigen Pflanzenschutzmittel in einer Konzentration von 0,5 bis 80 mmol/l, bevorzugt 0,75 bis 37,5 mmol/l, besonders bevorzugt 1,5 bis 25 mmol/l eingesetzt. Im Fall eines formulierten Produktes wird die Ammonium- und/oder Phosphoniumsalzkonzentration in der Formulierung so gewählt, dass sie nach Verdünnung der Formulierung auf die gewünschte Wirkstoffkonzentration in diesen angegebenen allgemeinen, bevorzugten oder besonders bevorzugten Bereichen liegt. Die Konzentration des Salzes in der Formulierung beträgt dabei üblicherweise 1 - 50 Gew.-%.

In einer bevorzugten Ausführungsform der Erfindung wird den Pflanzenschutzmitteln zur Wirkungssteigerung nicht nur ein Ammonium- und/oder Phosphoniumsalz, sondern zusätzlich ein Penetrationsförderer zugegeben. Es ist als völlig überraschend zu bezeichnen, dass selbst in diesen Fällen eine noch weiter gehende Wirkungssteigerung zu beobachten ist. Gegenstand der vorliegenden Erfindung ist also ebenfalls die Verwendung einer Kombination von Penetrationsförderer und Ammonium- und/oder Phosphoniumsalzen zur Wirkungssteigerung von Pflanzenschutzmitteln, die akarizid/insektizid wirksame, 2-Cyano(het)-arylsulfonamide und/oder deren isomere Formen (I-A) und (I-B) als Wirkstoff enthalten. Gegenstand der Erfindung sind ebenfalls Mittel, die insektizid wirksame 2-Cyano(het)-arylsulfonamide und/oder deren isomere Formen (I-A) und (I-B), Penetrationsförderer und Ammonium- und/oder Phosphoniumsalze enthalten und zwar sowohl formulierte Wirkstoffe als auch anwendungsfertige Mittel (Spritzbrühen). Gegenstand der Erfindung ist schließlich weiterhin die Verwendung dieser Mittel zur Bekämpfung von Schadinsekten.

Als Penetrationsförderer kommen im vorliegenden Zusammenhang alle diejenigen Substanzen in Betracht, die üblicherweise eingesetzt werden, um das Eindringen von agrochemischen Wirkstoffen in Pflanzen zu verbessern. Penetrationsförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die in der Literatur (Baur et al., 1997, Pesticide Science 51, 131-152) beschriebene Methode kann zur Bestimmung dieser Eigenschaft eingesetzt werden.

Als Penetrationsförderer kommen beispielsweise Alkanol-alkoxylate in Betracht. Erfindungsgemäße Penetrationsförderer sind Alkanol-alkoxylate der Formel

R-O-(-AO)_{V-}R' (III)

in welcher
- R: für geradkettiges oder verzweigtes Alkyl mit 4 bis 20 Kohlenstoffatomen steht,
- R^{'}: für Wasserstoff, Methyl, Ethyl, n-Propyl, i-Propyl, n-Butyl, i-Butyl, t-Butyl, n-Pentyl oder n-Hexyl steht,
- AO: für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
- v: für Zahlen von 2 bis 30 steht.
Eine bevorzugte Gruppe von Penetrationsförderern sind Alkanolalkoxylate der Formel

R-O-(-EO-)ₙ-R' (III-a)

in welcher
- R: die oben angegebene Bedeutung hat,
- R': die oben angegebene Bedeutung hat,
- EO: für -CH₂-CH₂-O- steht und
- n: für Zahlen von 2 bis 20 steht.
Eine weitere bevorzugte Gruppe von Penetrationsförderern sind Alkanol-alkoxylate der Formel

R-O-(-EO-)ₚ-(-PO-)_{q}-R' (III-b)

in welcher
- R: die oben angegebene Bedeutung hat,
- R': die oben angegebene Bedeutung hat,
- EO: für -CH₂-CH₂-O- steht,
- PO: für 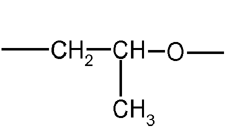
steht,
- p: für Zahlen von 1 bis 10 steht und
- q: für Zahlen von 1 bis 10 steht.
Eine weitere bevorzugte Gruppe von Penetrationsförderern sind Alkanol-Alkoxylate der Formel

R-O-(-PO-)ᵣ-(EO-)ₛ-R' (III-c)

in welcher
- R: die oben angegebene Bedeutung hat,
- R': die oben angegebene Bedeutung hat,
- EO: für -CH₂-CH₂-O- steht,
- PO: für 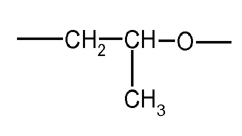
steht,
- r: für Zahlen von 1 bis 10 steht und
- s: für Zahlen von 1 bis 10 steht.
Eine weitere bevorzugte Gruppe von Penetrationsförderern sind Alkanol-alkoxylate der Formel R-O-(-EO-)ₚ-(-BO-)_{q}-R' (III-d)
in welcher
- R und: R^{'} die oben angegebenen Bedeutungen haben,
- EO: für CH₂-CH₂-O- steht,
- BO: für 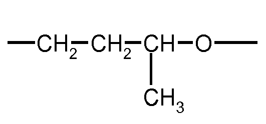
steht,
- p: für Zahlen von 1 bis 10 steht und
- q: für Zahlen von 1 bis 10 steht.
Eine weitere bevorzugte Gruppe von Penetrationsförderern sind Alkanol-alkoxylate der Formel

R-O-(-BO-)ᵣ-(-EO-)ₛ-R' (III-e)

in welcher
- R und: R^{'} die oben angegebenen Bedeutungen haben,
- BO: für 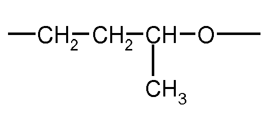
steht,
- EO: für CH₂-CH₂-O- steht,
- r: für Zahlen von 1 bis 10 steht und
- s: für Zahlen von 1 bis 10 steht.

### Eine weitere bevorzugte Gruppe von Penetrationsförderern sind Alkanol-Alkoxylate der Formel

CH₃-(CH₂)ₜ-CH₂-O-(-CH₂-CH₂-O-)ᵤ-R' (III-f)

in welcher
- R': die oben angegebene Bedeutung hat,
- t: für Zahlen von 8 bis 13 steht
- u: für Zahlen von 6 bis 17 steht.

In den zuvor angegebenen Formeln steht
- R: vorzugsweise für Butyl, i-Butyl, n-Pentyl, i-Pentyl, Neopentyl, n-Hexyl, i-Hexyl, n-Octyl, i-Octyl, 2-Ethyl-hexyl, Nonyl, i-Nonyl, Decyl, n-Dodecyl, i-Dodecyl, Lauryl, Myristyl, i-Tridecyl, Trimethyl-nonyl, Palmityl, Stearyl oder Eicosyl.
Als Beispiel für ein Alkanol-Alkoxylat der Formel (III-c) sei 2-Ethyl-hexyl-alkoxylat der Formel 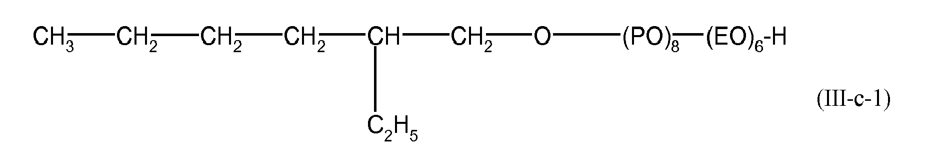 in welcher
- EO: für -CH₂-CH₂-O- steht,
- PO: für 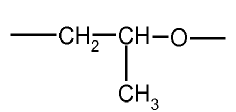
steht und die Zahlen 8 und 6 Durchschnittswerte darstellen, genannt. Als Beispiel für ein Alkanol-Alkoxylat der Formel (III-d) sei die Formel

CH₃-(CH₂)₁₀-O-(-EO-)₆-(-BO-)₂-CH₃ (III-d-1)

in welcher
- EO: für CH₂-CH₂-O- steht,
- BO: für 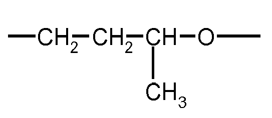
steht und die Zahlen 10, 6 und 2 Durchschnittswerte darstellen, genannt. Besonders bevorzugte Alkanol-Alkoxylate der Formel (III-f) sind Verbindungen dieser Formel, in denen
- t: für Zahlen von 9 bis 12 und
- u: für Zahlen von 7 bis 9
steht. Ganz besonders bevorzugt genannt sei Alkanol-Alkoxylat der Formel (III-f-1)

CH₃-(CH₂)ₜ-CH₂-O-(-CH₂-CH₂-O-)ᵤ-R' (III-f-1)

in welcher
- t: für den Durchschnittswert 10,5 steht und
- u: für den Durchschnittswert 8,4 steht.

Die Alkanol-Alkoxylate sind durch die obigen Formeln allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Die Alkanol-Alkoxylate der angegebenen Formeln sind bekannt und sind teilweise kommerziell erhältlich oder lassen sich nach bekannten Methoden herstellen (vgl. WO 98/35 553, WO 00/35 278 und EP-A 0 681 865).

Als Penetrationsförderer kommen beispielsweise auch Substanzen in Betracht, die die Löslichkeit der Verbindungen der Formel (I) im Spritzbelag fördern. Dazu gehören beispielsweise mineralische oder vegetabile Öle. Als Öle kommen alle üblicherweise in agrochemischen Mitteln einsetzbaren mineralischen oder vegetabilen - gegebenenfalls modifizierte - Öle in Frage. Beispielhaft genannt seien Sonnenblumenöl, Rapsöl, Olivenöl, Rizinusöl, Rüböl, Maiskernöl, Baumwollsaatöl und Sojabohnenöl oder die Ester der genannten Öle. Bevorzugt sind Rapsöl, Sonnenblumenöl und deren Methyl- oder Ethylester.

Die Konzentration an Penetrationsförderer kann in den erfindungsgemäßen Mitteln in einem weiten Bereich varIert werden. Bei einem formulierten Pflanzenschutzmittel liegt sie im allgemeinen bei 1 bis 95 Gew.-%, bevorzugt bei 1 bis 55 Gew.-%, besonders bevorzugt bei 15 - 40 Gew.-%. In den anwendungsfertigen Mitteln (Spritzbrühen) liegen die Konzentration im allgemeinen zwischen 0,1 und 10 g/l, bevorzugt zwischen 0,5 und 5 g/l.

Erfindungsgemäß hervorgehobene Kombinationen von Wirkstoff, Salz und Penetrationsförderer sind in folgender Tabelle aufgeführt."Gemäß Test" bedeutet dabei, dass jede Verbindung geeignet ist, die in dem Test für die Kutikelpenetration (Baur et al., 1997, Pesticide Science 51, 131-152) als Penetrationsförderer wirkt.

**Tabelle 1:**

| # | Wirkstoff | Salz | Penetrationsförderer |
|---|---|---|---|
| 1 | I, IA, IB | Ammoniumsulfat | Gemäß Test |
| 2 | I, IA, IB | Ammoniumlaktat | Gemäß Test |
| 3 | I, IA, IB | Ammoniumnitrat | Gemäß Test |
| 4 | I, IA, IB | Ammoniumthiosulfat | Gemäß Test |
| 5 | I, IA, IB | Ammoniumthiocyanat | Gemäß Test |
| 6 | I, IA, IB | Ammoniumcitrat | Gemäß Test |
| 7 | I, IA, IB | Ammoniumoxalat | Gemäß Test |
| 8 | I, IA, IB | Ammoniumformiat | Gemäß Test |
| 9 | I, IA, IB | Ammoniumhydrogenphosphat | Gemäß Test |
| 10 | I, IA, IB | Ammoniumdihydrogenphosphat | Gemäß Test |
| 11 | I, IA, IB | Ammoniumcarbonat | Gemäß Test |
| 12 | I, IA, IB | Ammoniumbenzoat | Gemäß Test |
| 13 | I, IA, IB | Ammoniumsulfit | Gemäß Test |
| 14 | I, IA, IB | Ammoniumbenzoat | Gemäß Test |
| 15 | I, IA, IB | Ammoniumhydrogenoxalat | Gemäß Test |
| 16 | I, IA, IB | Ammoniumhydrogencitrat | Gemäß Test |
| 17 | I, IA, IB | Ammoniumacetat | Gemäß Test |
| 18 | I, IA, IB | Tetramethylammoniumsulfat | Gemäß Test |
| 19 | I, IA, IB | Tetramethylammoniumlaktat | Gemäß Test |
| 20 | I, IA, IB | Tetramethylammoniumnitrat | Gemäß Test |
| 21 | I, IA, IB | Tetramethylammoniumthiosulfat | Gemäß Test |
| 22 | I, IA, IB | Tetramethylammoniumthiocyanat | Gemäß Test |
| 23 | I, IA, IB | Tetramethylammoniumcitrat | Gemäß Test |
| 24 | I, IA, IB | Tetramethylammoniumoxalat | Gemäß Test |
| 25 | I, IA, IB | Tetramethylammoniumformiat | Gemäß Test |
| 26 | I, IA, IB | Tetramethylammoniumhydrogenphosphat | Gemäß Test |
| 27 | I, IA, IB | Tetramethylammoniumdihydrogenphosphat | Gemäß Test |
| 28 | I, IA, IB | Tetraethylammoniumsulfat | Gemäß Test |
| 29 | I, IA, IB | Tetraethylammoniumlaktat | Gemäß Test |
| 30 | I, IA, IB | Tetraethylammoniumnitrat | Gemäß Test |
| 31 | I, IA, IB | Tetraethylammoniumthiosulfat | Gemäß Test |
| 32 | I, IA, IB | Tetraethylammoniumthiocyanat | Gemäß Test |
| 33 | I, IA, IB | Tetraethylammoniumcitrat | Gemäß Test |
| 34 | I, IA, IB | Tetraethylammoniumoxalat | Gemäß Test |
| 35 | I, IA, IB | Tetraethylammoniumformiat | Gemäß Test |
| 36 | I, IA, IB | Tetraethylammoniumhydrogenphosphat | Gemäß Test |
| 37 | I, IA, IB | Tetraethylammoniumdihydrogenphosphat | Gemäß Test |

Erfindungsgemäße Pflanzenschutzmittel können auch weitere Komponenten, beispielsweise Tenside bzw. Dispergierhilfsmittel oder Emulgatoren enthalten.

Als nicht-ionische Tenside bzw. Dispergierhilfsmittel kommen alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien, sowie Polyoxyalkylenamin-Derivate.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Tensiden bzw. Dispergierhilfsmitteln sind in Pflanzenöl wenig lösliche Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als Zusatzstoffe, die in den erfindungsgemäßen Formulierungen enthalten sein können, kommen Emulgatoren, schaumhemmende Mittel, Konservierungsmittel, Antioxydantien, Farbstoffe und inerte Füllmaterialien in Betracht.

Bevorzugte Emulgatoren sind ethoxylierte Alkylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. -ethoxy-propoxylate, wobei Sorbitan-Derivate, wie Polyethylenoxid-Sorbitan-Fettsäureester und Sorbitan-Fettsäureester, beispielhaft genannt seien.

Die folgenden Beispiele dienen zur Verdeutlichung der Erfindung und sind in keiner Weise beschränkend auszulegen.

Die Verbindungen der allgemeinen Formel (I) und (I-A) können in den Substituenten A, R¹ bis R⁵ ein oder mehrere Chiralitätszentren aufweisen, und liegen dann als Mischungen von Enantiomeren oder Diastereomeren vor. Die vorliegende Erfindung stellt sowohl die reinen Enantiomere oder Diastereomere als auch deren Mischungen bereit.

Salze der Verbindungen der Formel (I), (I-A) oder (I-B), die sich für die erfindungsgemäße Verwendung eignen, sind insbesondere landwirtschaftlich annehmbare Salze. Diese können auf traditionelle Art und Weise gebildet werden, z.B. dadurch, daß man die Verbindung mit einer Säure des betreffenden Anions umsetzt.

Geeignete landwirtschaftlich nützliche Salze sind insbesondere die Salze von denjenigen Kationen bzw. die Säureadditionssalze von denjenigen Säuren, deren Kationen bzw. Anionen auf die Wirkung der erfindungsgemäßen Verbindungen, die sich für die Bekämpfung von Schadinsekten oder -spinnentieren eignen, keine negativen Auswirkungen ausüben. Geeignete Kationen sind also insbesondere die Ionen der Alkalimetalle, vorzugsweise Lithium, Natrium und Kalium, der Erdalkalimetalle, vorzugsweise Calcium, Magnesium und Barium, sowie der Übergangsmetalle, vorzugsweise Mangan, Kupfer, Zink und Eisen, sowie das Ammoniumion, das gewünschtenfalls ein bis vier C₁-C₄-Alkylsubstituenten und/oder einen Phenyl- oder Benzylsubstituenten tragen kann, vorzugsweise DIsopropylammonium, Tetramethylammonium, Tetrabutylammonium, Trimethylbenzylammonium, weiterhin Phosphoniumionen, Sulfoniumionen, vorzugsweise Tri(C₁-C₄-alkyl)sulfonium und Sulfoxoniumionen, vorzugsweise Tri(C₁-C₄-alkyl)sulfoxonium.

Anionen von nützlichen Säureadditionssalzen sind in erster Linie Chlorid, Bromid, Fluorid, Hyrogensulfat, Sulfat, Dihydrogenphosphat, Hydrogenphosphat, Phosphat, Nitrat, Hydrogencarbonat, Carbonat, Hexafluorsilicat, Hexafluorphosphat, Benzoat und die Anionen der C₁-C₄-Alkansäuren, vorzugsweise Formiat, Acetat, Propionat und Butyrat. Diese können dadurch gebildet werden, daß man die Verbindungen der Formeln (Ia) und (Ib) mit einer Säure des entsprechenden Anions, vorzugsweise der Salzsäure, der Bromwasserstoffsäure, der Schwefelsäure, der Phosphorsäure oder der Salpetersäure, umsetzt.

Die in den oben genannten Definitionen der Variablen genannten organischen Reste, wie der Begriff Halogen, sind Sammelbegriffe für einzelne Aufzählungen von einzelnen Gruppenmitgliedern. Das Präfix "Cₙ-Cₘ" gibt jeweils die mögliche Anzahl Kohlenstoffatome in der Gruppe an.

Der Begriff Halogen bedeutet jeweils Fluor, Brom, Chlor oder Iod.

### Beispiele für weitere Bedeutungen sind:

Der Begriff "C₁-C₄-Alkyl" im vorliegenden Zusammenhang sowie die Alkylreste von Alkylamino und Dialkylamino bedeuten einen gesättigten geradkettigen oder verzweigten Kohlenwasserstoffrest mit 1 bis 4 Kohlenstoffatomen, also zum Beispiel Methyl, Ethyl, Propyl, 1-Methylethyl, Butyl, 1-Methylpropyl, 2-Methylpropyl oder 1,1-Dimethylethyl.

Der Begriff "C₁-C₆-Alkyl" bedeutet im vorliegenden Zusammenhang einen gesättigten geradkettigen oder verzweigten Kohlenwasserstoffrest mit 1 bis 6 Kohlenstoffatomen, also zum Beispiel einen der Reste, die unter C₁-C₄-Alkyl erwähnt wurden, sowie n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl.

Der Begriff "C₁-C₄-Halogenalkyl" bedeutet im vorliegenden Zusammenhang einen (wie oben erwähnten) geradkettigen oder verzweigten gesättigten Alkylrest mit 1 bis 4 Kohlenstoffatomen, wobei einige oder alle der Wasserstoffatome in diesen Resten durch Fluor, Chlor, Brom und/oder Iod ersetzt sein können, also zum Beispiel Chlormethyl, Dichlormethyl, Trichlormethyl, Fluormethyl, Difluormethyl, Trifluormethyl, Chlorfluormethyl, Dichlorfluormethyl, Chlordifluormethyl, 2-Fluorethyl, 2-Chlorethyl, 2-Bromethyl, 2-Iodethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl, 2-Fluorpropyl, 3-Fluorpropyl, 2,2-Difluorpropyl, 2,3-Difluorpropyl, 2-Chlorpropyl, 3-Chlorpropyl, 2,3-Dichlorpropyl, 2-Brompropyl, 3-Brompropyl, 3,3,3-Trifluorpropyl, 3,3,3-Trichlorpropyl, 2,2,3,3,3-Pentafluorpropyl, Heptafluorpropyl, 1-(Fluormethyl)-2-fluorethyl, 1-(Chlormethyl)-2-chlorethyl, 1-(Brommethyl)-2-bromethyl, 4-Fluorbutyl, 4-Chlorbutyl, 4-Brombutyl oder Nonafluorbutyl.

Der Begriff "C₁-C₄-Alkoxy" bedeutet im vorliegenden Zusammenhang einen (wie oben erwähnten) geradkettigen oder verzweigten gesättigten Alkylrest mit 1 bis 4 Kohlenstoffatomen, der über ein Sauerstoffatom gebunden ist, also zum Beispiel Methoxy, Ethoxy, n-Propoxy, 1-Methylethoxy, n-Butoxy, 1-Methylpropoxy, 2-Methylpropoxy oder 1,1-Dimethylethoxy.

Der Begriff "C₁-C₄-Halogenalkoxy" bedeutet im vorliegenden Zusammenhang einen wie oben erwähnten C₁-C₄-Alkoxyrest, der teilweise oder ganz durch Fluor, Chlor, Brom und/oder Iod substituiert ist, also zum Beispiel Chlormethoxy, Dichlormethoxy, Trichlormethoxy, Fluormethoxy, Difluormethoxy, Trifluormethoxy, Chlorfluormethoxy, Dichlorfluormethoxy, Chlordifluormethoxy, 2-Fluorethoxy, 2-Chlorethoxy, 2-Bromethoxy, 2-Iodethoxy, 2,2-Difluorethoxy, 2,2,2-Trifluorethoxy, 2-Chlor-2-fluorethoxy, 2-Chlor-2,2-difluorethoxy, 2,2-Dichlor-2-fluorethoxy, 2,2,2-Trichlorethoxy, Pentafluorethoxy, 2-Fluorpropoxy, 3-Fluorpropoxy, 2,2-Difluorpropoxy, 2,3-Difluorpropoxy, 2-Chlorpropoxy, 3-Chlorpropoxy, 2,3-Dichlorpropoxy, 2-Brompropoxy, 3-Brompropoxy, 3,3,3-Trifluorpropoxy, 3,3,3-Trichlorpropoxy, 2,2,3,3,3-Pentafluorpropoxy, Heptafluorpropoxy, 1-(Fluormethyl)-2-fluorethoxy, 1-(Chlormethyl)-2-chlorethoxy, 1-(Brommethyl)-2-bromethoxy, 4-Fluorbutoxy, 4-Chlorbutoxy, 4-Brombutoxy oder Nonafluorbutoxy.

Der Begriff "C₁-C₄-Alkylthio(C₁-C₄-Alkylsulfanyl: C₁-C₄-Alkyl-S-)" bedeutet im vorliegenden Zusammenhang einen geradkettigen oder verzweigten gesättigten Alkylrest mit 1 bis 4 Kohlenstoffatomen (wie oben erwähnt), der über ein Schwefelatom gebunden ist, also zum Beispiel Methylthio, Ethylthio, n-Propylthio, 1-Methylethylthio, Butylthio, 1-Methylpropylthio, 2-Methylpropylthio oder 1,1-Dimethylethylthio.

Der Begriff "C₁-C₄-Alkylsulfinyl" (C₁-C₄-Alkyl-S(=O)-) bedeutet im vorliegenden Zusammenhang einen (wie oben erwähnten) geradkettigen oder verzweigten gesättigten Kohlenwasserstoffrest mit 1 bis 4 Kohlenstoffatomen, der über das Schwefelatom der Sulfinylgruppe an einer beliebigen Bindung im Alkylrest gebunden ist, also zum Beispiel SO-CH₃, SO-C₂H₅, n-Propylsulfinyl, 1-Methylethylsulfinyl, n-Butylsulfinyl, 1-Methylpropylsulfinyl, 2-Methylpropylsulfinyl, 1,1-Dimethyl]ethylsulfinyl, n-Pentylsulfinyl, 1-Methylbutylsulfinyl, 2-Methylbutylsulfinyl, 3-Methylbutylsulfinyl, 1,1-Dimethylpropylsulfinyl, 1,2-Dimethylpropylsulfinyl, 2,2-Dimethylpropylsulfinyl oder 1-Ethylpropylsulfinyl.

Der Begriff "C₁-C₄-Alkylsulfonyl" (C₁-C₄-Alkyl-S(=O)₂-) bedeutet im vorliegenden Zusammenhang einen (wie oben erwähnten) geradkettigen oder verzweigten gesättigten Alkylrest mit 1 bis 4 Kohlenstoffatomen, der über das Schwefelatom der Sulfonylgruppe an einer beliebigen Bindung im Alkylrest gebunden ist, also zum Beispiel SO₂-CH₃, SO₂-C₂H₅, n-Propylsulfonyl, SO₂-CH(CH₃)₂, n-Butylsulfonyl, 1-Methylpropylsulfonyl, 2-Methylpropylsulfonyl oder SO₂-C(CH₃)₃.

Der Begriff "C₁-C₄-Halogenalkylthio" bedeutet im vorliegenden Zusammenhang einen wie oben erwähnten C₁-C₄-Alkylthiorest, der teilweise oder ganz durch Fluor, Chlor, Brom und/oder Iod substituiert ist, also zum Beispiel Fluormethylthio, Difluormethylthio, Trifluormethylthio, Chlordifluormethylthio, Bromdifluormethylthio, 2-Fluorethylthio, 2-Chlorethylthio, 2-Bromethylthio, 2-Iodethylthio, 2,2-Difluorethylthio, 2,2,2-Trifluorethylthio, 2,2,2-Trichlorethylthio, 2-Chlor-2-fluorethylthio, 2-Chlor-2,2-difluorethylthio, 2,2-Dichlor-2-fluorethylthio, Pentafluorethylthio, 2-Fluorpropylthio, 3-Fluorpropylthio, 2-Chlorpropylthio, 3-Chlorpropylthio, 2-Brompropylthio, 3-Brompropylthio, 2,2-Difluorpropylthio, 2,3-Difluorpropylthio, 2,3-Dichlorpropylthio, 3,3,3-Trifluorpropylthio, 3,3,3-Trichlorpropylthio, 2,2,3,3,3-Pentafluorpropylthio, Heptafluorpropylthio, 1-(Fluormethyl)-2-fluorethylthio, 1-(Chlormethyl)-2-chlorethylthio, 1-(Brommethyl)-2-bromethylthio, 4-Fluorbutylthio, 4-Chlorbutylthio, 4-Brombutylthio oder Nonafluorbutylthio.

Der Begriff "C₁-C₄-Alkoxycarbonyl" bedeutet im vorliegenden Zusammenhang einen (wie oben erwähnten) geradkettigen oder verzweigten Alkoxyrest mit 1 bis 4 Kohlenstoffatomen, der über das Kohlenstoffatom der Carbonylgruppe gebunden ist, also zum Beispiel Methoxycarbonyl, Ethoxycarbonyl, n-Propoxycarbonyl, 1-Methylethoxycarbonyl, n-Butoxycarbonyl, 1-Methylpropoxycarbonyl, 2-Methylpropoxycarbonyl oder 1,1-Dimethylethoxycarbonyl.

Der Begriff "C₁-C₄-Alkylcarbonyl" bedeutet im vorliegenden Zusammenhang einen (wie oben erwähnten) geradkettigen oder verzweigten Alkylrest mit 1 bis 4 Kohlenstoffatomen, der über das Kohlenstoffatom der Carbonylgruppe gebunden ist, also zum Beispiel Methylcarbonyl, Ethylcarbonyl, n-Propylcarbonyl, 1-Methylethylcarbonyl, n-Butylcarbonyl, 1-Methylpropylcarbonyl, 2-Methylpropylcarbonyl oder 1,1-Dimethylethylcarbonyl.

Der Begriff "(C₁-C₄-Alkylamino)carbonyl" bedeutet im vorliegenden Zusammenhang zum Beispiel Methylaminocarbonyl, Ethylaminocarbonyl, Propylaminocarbonyl, 1-Methylethylaminocarbonyl, Butylaminocarbonyl, 1-Methylpropylaminocarbonyl, 2-Methylpropylaminocarbonyl oder 1,1-Dimethylethylaminocarbonyl.

Der Begriff "Di-(C₁-C₄-alkyl)aminocarbonyl" bedeutet im vorliegenden Zusammenhang zum Beispiel N,N-Dimethylaminocarbonyl, N,N-Diethylaminocarbonyl, N,N-Di-(1-methylethyl)aminocarbonyl, N,N-Dipropylaminocarbonyl, N,N-Butylaminocarbonyl, N,N-Di-(1-methylpropyl)aminocarbonyl, N,N-Di(2-methylpropyl)aminocarbonyl, N,N-Di-(1,1-dimethylethyl)aminocarbonyl, N-Ethyl-N-methylaminocarbonyl, N-Methyl-N-propylaminocarbonyl, N-Methyl-N-(1-methylethyl)aminocarbonyl, N-Butyl-N-methylaminocarbonyl, N-Methyl-N-(1-methylpropyl)aminocarbonyl, N-Methyl-N-(2-methylpropyl)aminocarbonyl, N-(1,1-Dimethylethyl)-N-methylaminocarbonyl, N-Ethyl-N-propylaminocarbonyl, N-Ethyl-N-(1-methylethyl)aminocarbonyl, N-Butyl-N-ethylaminocarbonyl, N-Ethyl-N-(1-methylpropyl)aminocarbonyl, N-Ethyl-N-(2-methylpropyl)aminocarbonyl, N-Ethyl-N-(1,1-dimethylethyl)aminocarbonyl, N-(1-Methylethyl)-N-propylaminocarbonyl, N-Butyl-N-propylaminocarbonyl, N-(1-Methylpropyl)-N-propylaminocarbonyl, N-(2-Methylpropyl)-N-propylaminocarbonyl, N-(1,1-Dimethylethyl)-N-propylaminocarbonyl, N-Butyl-N-(1-methylethyl)aminocarbonyl, N-(1-Methylethyl)-N-(1-methylpropyl)aminocarbonyl, N-(1-Methylethyl)-N-(2-methylpropyl)aminocarbonyl, N-(1,1-Dimethylethyl)-N-(1-methylethyl)aminocarbonyl, N-Butyl-N-(1-methylpropyl)aminocarbonyl, N-Butyl-N-(2-methylpropyl)aminocarbonyl, N-Butyl-N-(1,1-dimethylethyl)aminocarbonyl, N-(1-Methylpropyl)-N-(2-methylpropyl)aminocarbonyl, N-(1,1-Dimethylethyl)-N-(1-methylpropyl)-aminocarbonyl oder N-(1,1-Dimethylethyl)-N-(2-methylpropyl)aminocarbonyl.

Der Begriff "C₂-C₆-Alkenyl" bedeutet im vorliegenden Zusammenhang einen geradkettigen oder verzweigten einfach ungesättigten Kohlenwasserstoffrest mit 2 bis 6 Kohlenstoffatomen und einer Doppelbindung in einer beliebigen Stellung, also zum Beispiel Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl.

Der Begriff "C₂-C₇-Alkinyl" bedeutet im vorliegenden Zusammenhang einen geradkettigen oder verzweigten aliphatischen Kohlenwasserstoffrest, der eine C-C - Dreifachbindung enthält und 2 bis 7 Kohlenstoffatome aufweist: zum Beispiel Ethynyl, prop-1-in-1-yl, prop-2-in-1-yl, n-but-1-in-1-yl, n-but-1-in-3-yl, n-but-1-in-4-yl, n-but-2-in-1-yl, n-pent-1-in-1-yl, n-pent-1-in-3-yl, n-pent-1-in-4-yl, n-pent-1-in-5-yl, n-pent-2-in-1-yl, n-pent-2-in-4-yl, n-pent-2-in-5-yl, 3-methylbut-1-in-3-yl, 3-methylbut-1-in-4-yl, n-hex-1-in-1-yl, n-hex-1-in-3-yl, n-hex-1-in-4-yl, n-hex-1-in-5-yl, n-hex-1-in-6-yl, n-hex-2-in-1-yl, n-hex-2-in-4-yl, n-hex-2-in-5-yl, n-hex-2-in-6-yl, n-hex-3-in-1-yl, n-hex-3-in-2-yl, 3-methylpent-1-in-1-yl, 3-methylpent-1-in-3-yl, 3-methylpent-1-in-4-yl, 3-methylpent-1-in-5-yl, 4-methylpent-1-in-1-yl, 4-methylpent-2-in-4-yl oder 4-methylpent-2-in-5-yl und dergleichen.

Der Begriff "C₃-C₈-Cycloalkyl" bedeutet im vorliegenden Zusammenhang einen einkernigen Kohlenwasserstoffrest mit 3 bis 8 Kohlenstoffatomen, zum Beispiel Cyclopropyl, Cyclobutyl, Cyclopentyl, Cyclohexyl, Cycloheptyl oder Cyclooctyl.

Unter den 2-Cyano(het)-arylsulfonamidverbindungen der allgemeinen Formel (I), (I-A) und (I-B) sind diejenigen bevorzugt, in denen die Variablen A, R¹ und R² unabhängig voneinander, jedoch insbesondere in Kombination, sowie die Variablen X, Y, Z, R³, R⁴, R⁵ die im folgenden angeführten Bedeutungen aufweisen:
- A: bedeutet Wasserstoff, C₁-C₄-Alkyl, insbesondere Methyl oder Ethyl, C₁-C₄-Alkylcarbonyl, insbesondere Acetyl
- R¹: bedeutet Wasserstoff, Fluor, Chlor, Brom, C₁-C₂-Alkyl, insbesondere Methyl, Trifluormethyl oder C₁-C₂-Alkoxy, , insbesondere Methoxy;
- R²: bedeutet Wasserstoff oder einen geradkettigen, cyclischen oder verzweigtkettigen Kohlenwasserstoffrest mit 1 bis 4 Kohlenstoffatomen, z.B. C₁-C₄-Alkyl, insbesondere Methyl, Ethyl, n-Propyl, 1-Methylethyl, Cyclopropyl, C₁-C₄-Alkoxy-C₁-C₄-alkyl, insbesondere 2-Methoxyethyl, C₁-C₄-Alkylthio-C₁-C₄-alkyl, insbesondere 2-Methylthioethyl oder C₂-C₄-Alkinyl, insbesondere prop-2-in-1-yl (Propargyl).
- X: bedeutet N oder C-R³,
- Y: bedeutet N oder C-R⁴,
- Z: bedeutet N oder C-R⁵, mit der Maßgabe, dass mindestens eine der Gruppen X, Y oder Z für N steht.
- R³, R⁴ und R⁵: bedeuten unabhängig voneinander Wasserstoff, Halogen, insbesondere Fluor oder Chlor, Amino, C₁-C₄-Alkyl, insbesondere Methyl oder Ethyl, C₁-C₄-Alkoxy, insbesondere Methoxy.

Ebenfalls bevorzugt sind diejenigen 2-Cyano(het)-arylsulfonamidverbindungen der allgemeinen Formel (I), (I-A) und (I-B) in denen R¹ C₁-C₄-Halogenalkoxy, speziell C₁-Halogenalkoxy, insbesondere Trifluormethoxy, Difluormethoxy oder Chlordifluormethoxy, bedeutet. In diesem Verbindungen weist A die oben angegebenen Bedeutungen, vorzugsweise Wasserstoff, Methyl oder Ethyl und R² die oben angegebenen Bedeutungen auf, vorzugsweise Wasserstoff oder einen geradkettigen, cyclischen oder verzweigtkettigen Kohlenwasserstoffrest mit 1 bis 4 Kohlenstoffatomen, z.B. C₁-C₄-Alkyl, speziell Methyl, Ethyl, n-Propyl, 1-Methylethyl, Cyclopropyl, C₁-C₄-Alkoxy-C₁-C₄-alkyl, speziell 2-Methoxyethyl, C₁-C₄-Alkylthio-C₁-C₄-alkyl, speziell 2-Methylthioethyl oder C₂-C₄-Alkinyl, speziell prop-2-in-1-yl (Propargyl).

Am stärksten bevorzugt sind Verbindungen der Formel (I) und (I-A), in denen A für Wasserstoff und R² aus der Reihe Methyl, Ethyl, 1-Methylethyl und prop-2-in-1-yl stammt.

Eine bevorzugte Ausführungsform der vorliegenden Erfindung betrifft 2-Cyano(het)-arylsulfonamidverbindungen der allgemeinen Formel (I), (I-A) und (I-B) in der die Variablen A, R¹ und R² die oben erwähnten Bedeutungen aufweisen, insbesondere diejenigen Bedeutungen, die als bevorzugt angeführt sind, und in denen X für C-R³, Y für N, sowie Z für C-R⁵ steht, wobei sich mindestens einer der Reste R³ oder R⁵ von Wasserstoff unterscheidet. Unter diesen Verbindungen sind diejenigen Verbindungen bevorzugt, in denen R³ und/oder R⁵ die oben erwähnten Bedeutungen aufweisen, insbesondere diejenigen Bedeutungen, die als bevorzugt angeführt. Ebenso sind Verbindungen bevorzugt, in denen R³ und R⁵ Wasserstoff bedeuten.

Beispiele für bevorzugte Verbindungen der Formel (I), welche gegebenenfalls in deren isomeren Formeln (I-A) und (I-B) vorliegen können, 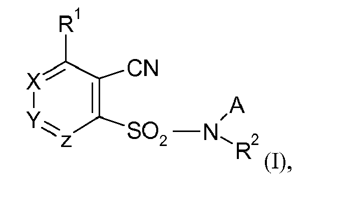 sind in den folgenden Tabellen A1 bis A11268 angeführt, wobei R¹, X, Y, Z, R³, R⁴, R⁵wie in den Tabellen definiert sind und A und R² in den Reihen der Tabelle A angegeben sind:

| | |
|---|---|
| Tabelle A1: | Verbindungen der Formel I, wobei X und Z für CH stehen, Y für N steht, R¹ für CH₃ steht und A und R² wie in einer Reihe in Tabelle A definiert sind. |
| | |
| Tabelle A2: | Verbindungen der Formel I, wobei X und Z für CH stehen, Y für N steht, R¹ für C₂H₅ steht und A und R² wie in einer Reihe in Tabelle A definiert sind. |
| | |
| Tabelle A3: | Verbindungen der Formel I, wobei X und Z für CH stehen, Y für N steht, R¹ für CF₃ steht und A und R² wie in einer Reihe in Tabelle A definiert sind. |
| | |
| Tabelle A4: | Verbindungen der Formel I, wobei X und Z für CH stehen, Y für N steht, R¹ für CCl₃ steht und A und R² wie in einer Reihe in Tabelle A definiert sind. |
| | |
| Tabelle A5: | Verbindungen der Formel I, wobei X und Z für CH stehen, Y für N steht, R¹ für F steht und A und R² wie in einer Reihe in Tabelle A definiert sind. |
| | |
| Tabelle A6: | Verbindungen der Formel I, wobei X und Z für CH stehen, Y für N steht, R¹ für Cl steht und A und R² wie in einer Reihe in Tabelle A definiert sind. |
| | |
| Tabelle A7: | Verbindungen der Formel I, wobei X und Z für CH stehen, Y für N steht, R¹ für Br steht und A und R² wie in einer Reihe in Tabelle A definiert sind. |
| | |
| Tabelle A8: | Verbindungen der Formel I, wobei X und Z für CH stehen, Y für N steht, R¹ für I steht und A und R² wie in einer Reihe in Tabelle A definiert sind. |
| | |
| Tabelle A9: | Verbindungen der Formel I, wobei X und Z für CH stehen, Y für N steht, R¹ für OCH₃ steht und A und R² wie in einer Reihe in Tabelle A definiert sind. |
| | |
| Tabelle A10: | Verbindungen der Formel I, wobei X und Z für CH stehen, Y für N steht, R¹ für OCF₃ steht und A und R² wie in einer Reihe in Tabelle A definiert sind. |
| | |
| Tabelle A11: | Verbindungen der Formel I, wobei X und Z für CH stehen, Y für N steht, R¹ für OCCl₃ steht und A und R² wie in einer Reihe in Tabelle A definiert sind. |
| | |
| Tabelle A12: | Verbindungen der Formel I, wobei X und Z für CH stehen, Y für N steht, R¹ für OCHF₂ steht und A und R² wie in einer Reihe in Tabelle A definiert sind. |
| | |
| Tabelle A13: | Verbindungen der Formel I, wobei X und Z für CH stehen, Y für N steht, R¹ für OCCIF₂ steht und A und R² wie in einer Reihe in Tabelle A definiert sind. |
| | |
| Tabelle A14: | Verbindungen der Formel I, wobei X und Z für CH stehen, Y für N steht, R¹ für OCH₂F steht und A und R² wie in einer Reihe in Tabelle A definiert sind. |
| | |
| Tabelle A15: | Verbindungen der Formel I, wobei X und Z für CH stehen, Y für N steht, R¹ für OCHCl₂ steht und A und R² wie in einer Reihe in Tabelle A definiert sind. |
| | |
| Tabelle A16: | Verbindungen der Formel I, wobei X und Z für CH stehen, Y für N steht, R¹ für OCH₂Cl steht und A und R² wie in einer Reihe in Tabelle A definiert sind. |
| | |
| Tabelle A17: | Verbindungen der Formel I, wobei X und Z für CH stehen, Y für N steht, R¹ für OCH₂-OCH₃ steht und A und R² wie in einer Reihe in Tabelle A definiert sind. |
| | |
| Tabelle A18: | Verbindungen der Formel I, wobei X und Z für CH stehen, Y für N steht, R¹ für OCH₂CH₃ steht und A und R² wie in einer Reihe in Tabelle A definiert sind. |
| | |
| Tabelle A19: | Verbindungen der Formel I, wobei X für CH steht, Z für C-Cl steht, Y für N steht, R¹ für CH₃ steht und A und R² wie in einer Reihe in Tabelle A definiert sind. |
| | |
| Tabelle A20: | Verbindungen der Formel I, wobei X für CH steht, Z für C-Cl steht, Y für N steht, R¹ für C₂H₅ steht und A und R² wie in einer Reihe in Tabelle A definiert sind. |
| | |
| Tabelle A21: | Verbindungen der Formel I, wobei X für CH steht, Z für C-Cl steht, Y für N steht, R¹ für CF₃ steht und A und R² wie in einer Reihe in Tabelle A definiert sind. |
| | |
| Tabelle A22: | Verbindungen der Formel I, wobei X für CH steht, Z für C-Cl steht, Y für N steht, R¹ für CCl₃ steht und A und R² wie in einer Reihe in Tabelle A definiert sind. |
| | |
| Tabelle A23: | Verbindungen der Formel I, wobei X für CH steht, Z für C-Cl steht, Y für N steht, R¹ für F steht und A und R² wie in einer Reihe in Tabelle A definiert sind. |
| | |
| Tabelle A24: | Verbindungen der Formel I, wobei X für CH steht, Z für C-Cl steht, Y für N steht, R¹ für Cl steht und A und R² wie in einer Reihe in Tabelle A definiert sind. |
| | |
| Tabelle A25: | Verbindungen der Formel I, wobei X für CH steht, Z für C-Cl steht, Y für N steht, R¹ für Br steht und A und R² wie in einer Reihe in Tabelle A definiert sind. |
| | |
| Tabelle A26: | Verbindungen der Formel I, wobei X für CH steht, Z für C-Cl steht, Y für N steht, R¹ für I steht und A und R² wie in einer Reihe in Tabelle A definiert sind. |
| | |
| Tabelle A27: | Verbindungen der Formel I, wobei X für CH steht, Z für C-Cl steht, Y für N steht, R¹ für OCH₃ steht und A und R² wie in einer Reihe in Tabelle A definiert sind. |
| | |
| Tabelle A28: | Verbindungen der Formel I, wobei X für CH steht, Z für C-Cl steht, Y für N steht, R¹ für OCF₃ steht und A und R² wie in einer Reihe in Tabelle A definiert sind. |
| | |
| Tabelle A29: | Verbindungen der Formel I, wobei X für CH steht, Z für C-Cl steht, Y für N steht, R¹ für OCCl₃ steht und A und R² wie in einer Reihe in Tabelle A definiert sind. |
| | |
| Tabelle A30: | Verbindungen der Formel I, wobei X für CH steht, Z für C-Cl steht, Y für N steht, R¹ für OCHF₂ steht und A und R² wie in einer Reihe in Tabelle A definiert sind. |
| | |
| Tabelle A31: | Verbindungen der Formel I, wobei X für CH steht, Z für C-Cl steht, Y für N steht, R¹ für OCCIF₂ steht und A und R² wie in einer Reihe in Tabelle A definiert sind. |
| | |
| Tabelle A32: | Verbindungen der Formel I, wobei X für CH steht, Z für C-Cl steht, Y für N steht, R¹ für OCH₂F steht und A und R² wie in einer Reihe in Tabelle A definiert sind. |
| | |
| Tabelle A33: | Verbindungen der Formel I, wobei X für CH steht, Z für C-Cl steht, Y für N steht, R¹ für OCHCl₂ steht und A und R² wie in einer Reihe in Tabelle A definiert sind. |
| | |
| Tabelle A34: | Verbindungen der Formel I, wobei X für CH steht, Z für C-Cl steht, Y für N steht, R¹ für OCH₂Cl steht und A und R² wie in einer Reihe in Tabelle A definiert sind. |
| | |
| Tabelle A35: | Verbindungen der Formel I, wobei X für CH steht, Z für C-Cl steht, Y für N steht, R¹ für OCH₂-OCH₃ steht und A und R² wie in einer Reihe in Tabelle A definiert sind. |
| | |
| Tabelle A36: | Verbindungen der Formel I, wobei X für CH steht, Z für C-Cl steht, Y für N steht, R¹ für OCH₂CH₃ steht und A und R² wie in einer Reihe in Tabelle A definiert sind. |
| | |
| Tabelle A37: | Verbindungen der Formel I, wobei X für CH steht, Z für C-F steht, Y für N steht, R¹ für CH₃ steht und A und R² wie in einer Reihe in Tabelle A definiert sind. |
| | |
| Tabelle A38: | Verbindungen der Formel I, wobei X für CH steht, Z für C-F steht, Y für N steht, R¹ für C₂H₅ steht und A und R² wie in einer Reihe in Tabelle A definiert sind. |
| | |
| Tabelle A39: | Verbindungen der Formel I, wobei X für CH steht, Z für C-F steht, Y für N steht, R¹ für CF₃ steht und A und R² wie in einer Reihe in Tabelle A definiert sind. |
| | |
| Tabelle A40: | Verbindungen der Formel I, wobei X für CH steht, Z für C-F steht, Y für N steht, R¹ für CCl₃ steht und A und R² wie in einer Reihe in Tabelle A definiert sind. |
| | |
| Tabelle A41: | Verbindungen der Formel I, wobei X für CH steht, Z für C-F steht, Y für N steht, R¹ für F steht und A und R² wie in einer Reihe in Tabelle A definiert sind. |
| | |
| Tabelle A42: | Verbindungen der Formel I, wobei X für CH steht, Z für C-F steht, Y für N steht, R¹ für Cl steht und A und R² wie in einer Reihe in Tabelle A definiert sind. |
| | |
| Tabelle A43: | Verbindungen der Formel I, wobei X für CH steht, Z für C-F steht, Y für N steht, R¹ für Br steht und A und R² wie in einer Reihe in Tabelle A definiert sind. |
| | |
| Tabelle A44: | Verbindungen der Formel I, wobei X für CH steht, Z für C-F steht, Y für N steht, R¹ für I steht und A und R² wie in einer Reihe in Tabelle A definiert sind. |
| | |
| Tabelle A45: | Verbindungen der Formel I, wobei X für CH steht, Z für C-F steht, Y für N steht, R¹ für OCH₃ steht und A und R² wie in einer Reihe in Tabelle A definiert sind. |
| | |
| Tabelle A46: | Verbindungen der Formel I, wobei X für CH steht, Z für C-F steht, Y für N steht, R¹ für OCF₃ steht und A und R² wie in einer Reihe in Tabelle A definiert sind. |
| | |
| Tabelle A47: | Verbindungen der Formel I, wobei X für CH steht, Z für C-F steht, Y für N steht, R¹ für OCCl₃ steht und A und R² wie in einer Reihe in Tabelle A definiert sind. |
| | |
| Tabelle A48: | Verbindungen der Formel I, wobei X für CH steht, Z für C-F steht, Y für N steht, R¹ für OCHF₂ steht und A und R² wie in einer Reihe in Tabelle A definiert sind. |
| | |
| Tabelle A49: | Verbindungen der Formel I, wobei X für CH steht, Z für C-F steht, Y für N steht, R¹ für OCCIF₂ steht und A und R² wie in einer Reihe in Tabelle A definiert sind. |
| | |
| Tabelle A50: | Verbindungen der Formel I, wobei X für CH steht, Z für C-F steht, Y für N steht, R¹ für OCH₂F steht und A und R² wie in einer Reihe in Tabelle A definiert sind. |
| | |
| Tabelle A51: | Verbindungen der Formel I, wobei X für CH steht, Z für C-F steht, Y für N steht, R¹ für OCHCl₂ steht und A und R² wie in einer Reihe in Tabelle A definiert sind. |
| | |
| Tabelle A52: | Verbindungen der Formel I, wobei X für CH steht, Z für C-F steht, Y für N steht, R¹ für OCH₂Cl steht und A und R² wie in einer Reihe in Tabelle A definiert sind. |
| | |
| Tabelle A53: | Verbindungen der Formel I, wobei X für CH steht, Z für C-F steht, Y für N steht, R¹ für OCH₂-OCH₃ steht und A und R² wie in einer Reihe in Tabelle A definiert sind. |
| | |
| Tabelle A54: | Verbindungen der Formel I, wobei X für CH steht, Z für C-F steht, Y für N steht, R¹ für OCH₂CH₃ steht und A und R² wie in einer Reihe in Tabelle A definiert sind. |
| | |
| Tabelle A55: | Verbindungen der Formel I, wobei X für CH steht, Z für C-Br steht, Y für N steht, R¹ für CH₃ steht und A und R² wie in einer Reihe in Tabelle A definiert sind. |
| | |
| Tabelle A56: | Verbindungen der Formel I, wobei X für CH steht, Z für C-Br steht, Y für N steht, R¹ für C₂H₅ steht und A und R² wie in einer Reihe in Tabelle A definiert sind. |
| | |
| Tabelle A57: | Verbindungen der Formel I, wobei X für CH steht, Z für C-Br steht, Y für N steht, R¹ für CF₃ steht und A und R² wie in einer Reihe in Tabelle A definiert sind. |
| | |
| Tabelle A58: | Verbindungen der Formel I, wobei X für CH steht, Z für C-Br steht, Y für N steht, R¹ für CCl₃ steht und A und R² wie in einer Reihe in Tabelle A definiert sind. |
| | |
| Tabelle A59: | Verbindungen der Formel I, wobei X für CH steht, Z für C-Br steht, Y für N steht, R¹ für F steht und A und R² wie in einer Reihe in Tabelle A definiert sind. |
| | |
| Tabelle A60: | Verbindungen der Formel I, wobei X für CH steht, Z für C-Br steht, Y für N steht, R¹ für Cl steht und A und R² wie in einer Reihe in Tabelle A definiert sind. |
| | |
| Tabelle A61: | Verbindungen der Formel I, wobei X für CH steht, Z für C-Br steht, Y für N steht, R¹ für Br steht und A und R² wie in einer Reihe in Tabelle A definiert sind. |
| | |
| Tabelle A62: | Verbindungen der Formel I, wobei X für CH steht, Z für C-Br steht, Y für N steht, R¹ für I steht und A und R² wie in einer Reihe in Tabelle A definiert sind. |
| | |
| Tabelle A63: | Verbindungen der Formel I, wobei X für CH steht, Z für C-Br steht, Y für N steht, R¹ für OCH₃ steht und A und R² wie in einer Reihe in Tabelle A definiert sind. |
| | |
| Tabelle A64: | Verbindungen der Formel I, wobei X für CH steht, Z für C-Br steht, Y für N steht, R¹ für OCF₃ steht und A und R² wie in einer Reihe in Tabelle A definiert sind. |
| | |
| Tabelle A65: | Verbindungen der Formel I, wobei X für CH steht, Z für C-Br steht, Y für N steht, R¹ für OCCl₃ steht und A und R² wie in einer Reihe in Tabelle A definiert sind. |
| | |
| Tabelle A66: | Verbindungen der Formel I, wobei X für CH steht, Z für C-Br steht, Y für N steht, R¹ für OCHF₂ steht und A und R² wie in einer Reihe in Tabelle A definiert sind. |
| | |
| Tabelle A67: | Verbindungen der Formel I, wobei X für CH steht, Z für C-Br steht, Y für N steht, R¹ für OCCIF₂ steht und A und R² wie in einer Reihe in Tabelle A definiert sind. |
| | |
| Tabelle A68: | Verbindungen der Formel I, wobei X für CH steht, Z für C-Br steht, Y für N steht, R¹ für OCH₂F steht und A und R² wie in einer Reihe in Tabelle A definiert sind. |
| | |
| Tabelle A69: | Verbindungen der Formel I, wobei X für CH steht, Z für C-Br steht, Y für N steht, R¹ für OCHCl₂ steht und A und R² wie in einer Reihe in Tabelle A definiert sind. |
| | |
| Tabelle A70: | Verbindungen der Formel I, wobei X für CH steht, Z für C-Br steht, Y für N steht, R¹ für OCH₂Cl steht und A und R² wie in einer Reihe in Tabelle A definiert sind. |
| | |
| Tabelle A71: | Verbindungen der Formel I, wobei X für CH steht, Z für C-Br steht, Y für N steht, R¹ für OCH₂-OCH₃ steht und A und R² wie in einer Reihe in Tabelle A definiert sind. |
| | |
| Tabelle A72: | Verbindungen der Formel I, wobei X für CH steht, Z für C-Br steht, Y für N steht, R¹ für OCH₂CH₃ steht und A und R² wie in einer Reihe in Tabelle A definiert sind. |
| | |
| Tabelle A73: | Verbindungen der Formel I, wobei X für CH steht, Z für C-I steht, Y für N steht, R¹ für CH₃ steht und A und R² wie in einer Reihe in Tabelle A definiert sind. |
| | |
| Tabelle A74: | Verbindungen der Formel I, wobei X für CH steht, Z für C-I steht, Y für N steht, R¹ für C₂H₅ steht und A und R² wie in einer Reihe in Tabelle A definiert sind. |
| | |
| Tabelle A75: | Verbindungen der Formel I, wobei X für CH steht, Z für C-I steht, Y für N steht, R¹ für CF₃ steht und A und R² wie in einer Reihe in Tabelle A definiert sind. |
| | |
| Tabelle A76: | Verbindungen der Formel I, wobei X für CH steht, Z für C-I steht, Y für N steht, R¹ für CCl₃ steht und A und R² wie in einer Reihe in Tabelle A definiert sind. |
| | |
| Tabelle A77: | Verbindungen der Formel I, wobei X für CH steht, Z für C-I steht, Y für N steht, R¹ für F steht und A und R² wie in einer Reihe in Tabelle A definiert sind. |
| | |
| Tabelle A78: | Verbindungen der Formel I, wobei X für CH steht, Z für C-I steht, Y für N steht, R¹ für Cl steht und A und R² wie in einer Reihe in Tabelle A definiert sind. |
| | |
| Tabelle A79: | Verbindungen der Formel I, wobei X für CH steht, Z für C-I steht, Y für N steht, R¹ für Br steht und A und R² wie in einer Reihe in Tabelle A definiert sind. |
| | |
| Tabelle A80: | Verbindungen der Formel I, wobei X für CH steht, Z für C-I steht, Y für N steht, R¹ für I steht und A und R² wie in einer Reihe in Tabelle A definiert sind. |
| | |
| Tabelle A81: | Verbindungen der Formel I, wobei X für CH steht, Z für C-I steht, Y für N steht, R¹ für OCH₃ steht und A und R² wie in einer Reihe in Tabelle A definiert sind. |
| | |
| Tabelle A82: | Verbindungen der Formel I, wobei X für CH steht, Z für C-I steht, Y für N steht, R¹ für OCF₃ steht und A und R² wie in einer Reihe in Tabelle A definiert sind. |
| | |
| Tabelle A83: | Verbindungen der Formel I, wobei X für CH steht, Z für C-I steht, Y für N steht, R¹ für OCCl₃ steht und A und R² wie in einer Reihe in Tabelle A definiert sind. |
| | |
| Tabelle A84: | Verbindungen der Formel I, wobei X für CH steht, Z für C-I steht, Y für N steht, R¹ für OCHF₂ steht und A und R² wie in einer Reihe in Tabelle A definiert sind. |
| | |
| Tabelle A85: | Verbindungen der Formel I, wobei X für CH steht, Z für C-I steht, Y für N steht, R¹ für OCCIF₂ steht und A und R² wie in einer Reihe in Tabelle A definiert sind. |
| | |
| Tabelle A86: | Verbindungen der Formel I, wobei X für CH steht, Z für C-I steht, Y für N steht, R¹ für OCH₂F steht und A und R² wie in einer Reihe in Tabelle A definiert sind. |
| | |
| Tabelle A87: | Verbindungen der Formel I, wobei X für CH steht, Z für C-I steht, Y für N steht, R¹ für OCHCl₂ steht und A und R² wie in einer Reihe in Tabelle A definiert sind. |
| | |
| Tabelle A88: | Verbindungen der Formel I, wobei X für CH steht, Z für C-I steht, Y für N steht, R¹ für OCH₂Cl steht und A und R² wie in einer Reihe in Tabelle A definiert sind. |
| | |
| Tabelle A89: | Verbindungen der Formel I, wobei X für CH steht, Z für C-I steht, Y für N steht, R¹ für OCH₂-OCH₃ steht und A und R² wie in einer Reihe in Tabelle A definiert sind. |
| | |
| Tabelle A90: | Verbindungen der Formel I, wobei X für CH steht, Z für C-I steht, Y für N steht, R¹ für OCH₂CH₃ steht und A und R² wie in einer Reihe in Tabelle A definiert sind. |
| | |
| Tabelle A91: | Verbindungen der Formel I, wobei X für CH steht, Z für C-NH₂ steht, Y für N steht, R¹ für CH₃ steht und A und R² wie in einer Reihe in Tabelle A definiert sind. |
| | |
| Tabelle A92: | Verbindungen der Formel I, wobei X für CH steht, Z für C-NH₂ steht, Y für N steht, R¹ für C₂H₅ steht und A und R² wie in einer Reihe in Tabelle A definiert sind. |
| | |
| Tabelle A93: | Verbindungen der Formel I, wobei X für CH steht, Z für C-NH₂ steht, Y für N steht, R¹ für CF₃ steht und A und R² wie in einer Reihe in Tabelle A definiert sind. |
| | |
| Tabelle A94: | Verbindungen der Formel I, wobei X für CH steht, Z für C-NH₂ steht, Y für N steht, R¹ für CCl₃ steht und A und R² wie in einer Reihe in Tabelle A definiert sind. |
| | |
| Tabelle A95: | Verbindungen der Formel I, wobei X für CH steht, Z für C-NH₂ steht, Y für N steht, R¹ für F steht und A und R² wie in einer Reihe in Tabelle A definiert sind. |
| | |
| Tabelle A96: | Verbindungen der Formel I, wobei X für CH steht, Z für C-NH₂ steht, Y für N steht, R¹ für Cl steht und A und R² wie in einer Reihe in Tabelle A definiert sind. |
| | |
| Tabelle A97: | Verbindungen der Formel I, wobei X für CH steht, Z für C-NH₂ steht, Y für N steht, R¹ für Br steht und A und R² wie in einer Reihe in Tabelle A definiert sind. |
| | |
| Tabelle A98: | Verbindungen der Formel I, wobei X für CH steht, Z für C-NH₂ steht, Y für N steht, R¹ für I steht und A und R² wie in einer Reihe in Tabelle A definiert sind. |
| | |
| Tabelle A99: | Verbindungen der Formel I, wobei X für CH steht, Z für C-NH₂ steht, Y für N steht, R¹ für OCH₃ steht und A und R² wie in einer Reihe in Tabelle A definiert sind. |
| | |
| Tabelle A100: | Verbindungen der Formel I, wobei X für CH steht, Z für C-NH₂ steht, Y für N steht, R¹ für OCF₃ steht und A und R² wie in einer Reihe in Tabelle A definiert sind. |
| | |
| Tabelle A101: | Verbindungen der Formel I, wobei X für CH steht, Z für C-NH₂ steht, Y für N steht, R¹ für OCCl₃ steht und A und R² wie in einer Reihe in Tabelle A definiert sind. |
| | |
| Tabelle A102: | Verbindungen der Formel I, wobei X für CH steht, Z für C-NH₂ steht, Y für N steht, R¹ für OCHF₂ steht und A und R² wie in einer Reihe in Tabelle A definiert sind. |
| | |
| Tabelle A103: | Verbindungen der Formel I, wobei X für CH steht, Z für C-NH₂ steht, Y für N steht, R¹ für OCCIF₂ steht und A und R² wie in einer Reihe in Tabelle A definiert sind. |
| | |
| Tabelle A104: | Verbindungen der Formel I, wobei X für CH steht, Z für C-NH₂ steht, Y für N steht, R¹ für OCH₂F steht und A und R² wie in einer Reihe in Tabelle A definiert sind. |
| | |
| Tabelle A105: | Verbindungen der Formel I, wobei X für CH steht, Z für C-NH₂ steht, Y für N steht, R¹ für OCHCl₂ steht und A und R² wie in einer Reihe in Tabelle A definiert sind. |
| | |
| Tabelle A106: | Verbindungen der Formel I, wobei X für CH steht, Z für C-NH₂ steht, Y für N steht, R¹ für OCH₂Cl steht und A und R² wie in einer Reihe in Tabelle A definiert sind. |
| | |
| Tabelle A107: | Verbindungen der Formel I, wobei X für CH steht, Z für C-NH₂ steht, Y für N steht, R¹ für OCH₂-OCH₃ steht und A und R² wie in einer Reihe in Tabelle A definiert sind. |
| | |
| Tabelle A108: | Verbindungen der Formel I, wobei X für CH steht, Z für C-NH₂ steht, Y für N steht, R¹ für OCH₂CH₃ steht und A und R² wie in einer Reihe in Tabelle A definiert sind. |
| | |
| Tabelle A109: | Verbindungen der Formel I, wobei X für CH steht, Z für C- N(CH₃)₂ steht, Y für N steht, R¹ für CH₃ steht und A und R² wie in einer Reihe in Tabelle A definiert sind. |
| | |
| Tabelle A110: | Verbindungen der Formel I, wobei X für CH steht, Z für C- N(CH₃)₂ steht, Y für N steht, R¹ für C₂H₅ steht und A und R² wie in einer Reihe in Tabelle A definiert sind. |
| | |
| Tabelle A111: | Verbindungen der Formel I, wobei X für CH steht, Z für C- N(CH₃)₂ steht, Y für N steht, R¹ für CF₃ steht und A und R² wie in einer Reihe in Tabelle A definiert sind. |
| | |
| Tabelle A112: | Verbindungen der Formel I, wobei X für CH steht, Z für C- N(CH₃)₂ steht, Y für N steht, R¹ für CCl₃ steht und A und R² wie in einer Reihe in Tabelle A definiert sind. |
| | |
| Tabelle A113: | Verbindungen der Formel I, wobei X für CH steht, Z für C- N(CH₃)₂ steht, Y für N steht, R¹ für F steht und A und R² wie in einer Reihe in Tabelle A definiert sind. |
| | |
| Tabelle A114: | Verbindungen der Formel I, wobei X für CH steht, Z für C- N(CH₃)₂ steht, Y für N steht, R¹ für Cl steht und A und R² wie in einer Reihe in Tabelle A definiert sind. |
| | |
| Tabelle A115: | Verbindungen der Formel I, wobei X für CH steht, Z für C- N(CH₃)₂ steht, Y für N steht, R¹ für Br steht und A und R² wie in einer Reihe in Tabelle A definiert sind. |
| | |
| Tabelle A116: | Verbindungen der Formel I, wobei X für CH steht, Z für C- N(CH₃)₂ steht, Y für N steht, R¹ für I steht und A und R² wie in einer Reihe in Tabelle A definiert sind. |
| | |
| Tabelle A117: | Verbindungen der Formel I, wobei X für CH steht, Z für C- N(CH₃)₂ steht, Y für N steht, R¹ für OCH₃ steht und A und R² wie in einer Reihe in Tabelle A definiert sind. |
| | |
| Tabelle A118: | Verbindungen der Formel I, wobei X für CH steht, Z für C- N(CH₃)₂ steht, Y für N steht, R¹ für OCF₃ steht und A und R² wie in einer Reihe in Tabelle A definiert sind. |
| | |
| Tabelle A119: | Verbindungen der Formel I, wobei X für CH steht, Z für C- N(CH₃)₂ steht, Y für N steht, R¹ für OCCl₃ steht und A und R² wie in einer Reihe in Tabelle A definiert sind. |
| | |
| Tabelle A120: | Verbindungen der Formel I, wobei X für CH steht, Z für C- N(CH₃)₂ steht, Y für N steht, R¹ für OCHF₂ steht und A und R² wie in einer Reihe in Tabelle A definiert sind. |
| | |
| Tabelle A121: | Verbindungen der Formel I, wobei X für CH steht, Z für C- N(CH₃)₂ steht, Y für N steht, R¹ für OCCIF₂ steht und A und R² wie in einer Reihe in Tabelle A definiert sind. |
| | |
| Tabelle A122: | Verbindungen der Formel I, wobei X für CH steht, Z für C- N(CH₃)₂ steht, Y für N steht, R¹ für OCH₂F steht und A und R² wie in einer Reihe in Tabelle A definiert sind. |
| | |
| Tabelle A123: | Verbindungen der Formel I, wobei X für CH steht, Z für C- N(CH₃)₂ steht, Y für N steht, R¹ für OCHCl₂ steht und A und R² wie in einer Reihe in Tabelle A definiert sind. |
| | |
| Tabelle A124: | Verbindungen der Formel I, wobei X für CH steht, Z für C- N(CH₃)₂ steht, Y für N steht, R¹ für OCH₂Cl steht und A und R² wie in einer Reihe in Tabelle A definiert sind. |
| | |
| Tabelle A125: | Verbindungen der Formel I, wobei X für CH steht, Z für C- N(CH₃)₂ steht, Y für N steht, R¹ für OCH₂-OCH₃ steht und A und R² wie in einer Reihe in Tabelle A definiert sind. |
| | |
| Tabelle A126: | Verbindungen der Formel I, wobei X für CH steht, Z für C- N(CH₃)₂ steht, Y für N steht, R¹ für OCH₂CH₃ steht und A und R² wie in einer Reihe in Tabelle A definiert sind. |
| | |
| Tabelle A127: | Verbindungen der Formel I, wobei X für CH steht, Z für C-CH₃ steht, Y für N steht, R¹ für CH₃ steht und A und R² wie in einer Reihe in Tabelle A definiert sind. |
| | |
| Tabelle A128: | Verbindungen der Formel I, wobei X für CH steht, Z für C-CH₃ steht, Y für N steht, R¹ für C₂H₅ steht und A und R² wie in einer Reihe in Tabelle A definiert sind. |
| | |
| Tabelle A129: | Verbindungen der Formel I, wobei X für CH steht, Z für C-CH₃ steht, Y für N steht, R¹ für CF₃ steht und A und R² wie in einer Reihe in Tabelle A definiert sind. |
| | |
| Tabelle A130: | Verbindungen der Formel I, wobei X für CH steht, Z für C-CH₃ steht, Y für N steht, R¹ für CCl₃ steht und A und R² wie in einer Reihe in Tabelle A definiert sind. |
| | |
| Tabelle A131: | Verbindungen der Formel I, wobei X für CH steht, Z für C-CH₃ steht, Y für N steht, R¹ für F steht und A und R² wie in einer Reihe in Tabelle A definiert sind. |
| | |
| Tabelle A132: | Verbindungen der Formel I, wobei X für CH steht, Z für C-CH₃ steht, Y für N steht, R¹ für Cl steht und A und R² wie in einer Reihe in Tabelle A definiert sind. |
| | |
| Tabelle A133: | Verbindungen der Formel I, wobei X für CH steht, Z für C-CH₃ steht, Y für N steht, R¹ für Br steht und A und R² wie in einer Reihe in Tabelle A definiert sind. |
| | |
| Tabelle A134: | Verbindungen der Formel I, wobei X für CH steht, Z für C-CH₃ steht, Y für N steht, R¹ für I steht und A und R² wie in einer Reihe in Tabelle A definiert sind. |
| | |
| Tabelle A135: | Verbindungen der Formel I, wobei X für CH steht, Z für C-CH₃ steht, Y für N steht, R¹ für OCH₃ steht und A und R² wie in einer Reihe in Tabelle A definiert sind. |
| | |
| Tabelle A136: | Verbindungen der Formel I, wobei X für CH steht, Z für C-CH₃ steht, Y für N steht, R¹ für OCF₃ steht und A und R² wie in einer Reihe in Tabelle A definiert sind. |
| | |
| Tabelle A137: | Verbindungen der Formel I, wobei X für CH steht, Z für C-CH₃ steht, Y für N steht, R¹ für OCCl₃ steht und A und R² wie in einer Reihe in Tabelle A definiert sind. |
| | |
| Tabelle A138: | Verbindungen der Formel I, wobei X für CH steht, Z für C-CH₃ steht, Y für N steht, R¹ für OCHF₂ steht und A und R² wie in einer Reihe in Tabelle A definiert sind. |
| | |
| Tabelle A139: | Verbindungen der Formel I, wobei X für CH steht, Z für C-CH₃ steht, Y für N steht, R¹ für OCCIF₂ steht und A und R² wie in einer Reihe in Tabelle A definiert sind. |
| | |
| Tabelle A140: | Verbindungen der Formel I, wobei X für CH steht, Z für C-CH₃ steht, Y für N steht, R¹ für OCH₂F steht und A und R² wie in einer Reihe in Tabelle A definiert sind. |
| | |
| Tabelle A141: | Verbindungen der Formel I, wobei X für CH steht, Z für C-CH₃ steht, Y für N steht, R¹ für OCHCl₂ steht und A und R² wie in einer Reihe in Tabelle A definiert sind. |
| | |
| Tabelle A142: | Verbindungen der Formel I, wobei X für CH steht, Z für C-CH₃ steht, Y für N steht, R¹ für OCH₂Cl steht und A und R² wie in einer Reihe in Tabelle A definiert sind. |
| | |
| Tabelle A143: | Verbindungen der Formel I, wobei X für CH steht, Z für C-CH₃ steht, Y für N steht, R¹ für OCH₂-OCH₃ steht und A und R² wie in einer Reihe in Tabelle A definiert sind. |
| | |
| Tabelle A144: | Verbindungen der Formel I, wobei X für CH steht, Z für C-CH₃ steht, Y für N steht, R¹ für OCH₂CH₃ steht und A und R² wie in einer Reihe in Tabelle A definiert sind. |
| | |
| Tabelle A145: | Verbindungen der Formel I, wobei X für CH steht, Z für C-CF₃ steht, Y für N steht, R¹ für CH₃ steht und A und R² wie in einer Reihe in Tabelle A definiert sind. |
| | |
| Tabelle A146: | Verbindungen der Formel I, wobei X für CH steht, Z für C-CF₃ steht, Y für N steht, R¹ für C₂H₅ steht und A und R² wie in einer Reihe in Tabelle A definiert sind. |
| | |
| Tabelle A147: | Verbindungen der Formel I, wobei X für CH steht, Z für C-CF₃ steht, Y für N steht, R¹ für CF₃ steht und A und R² wie in einer Reihe in Tabelle A definiert sind. |
| | |
| Tabelle A148: | Verbindungen der Formel I, wobei X für CH steht, Z für C-CF₃ steht, Y für N steht, R¹ für CCl₃ steht und A und R² wie in einer Reihe in Tabelle A definiert sind. |
| | |
| Tabelle A149: | Verbindungen der Formel I, wobei X für CH steht, Z für C-CF₃ steht, Y für N steht, R¹ für F steht und A und R² wie in einer Reihe in Tabelle A definiert sind. |
| | |
| Tabelle A150: | Verbindungen der Formel I, wobei X für CH steht, Z für C-CF₃ steht, Y für N steht, R¹ für Cl steht und A und R² wie in einer Reihe in Tabelle A definiert sind. |
| | |
| Tabelle A151: | Verbindungen der Formel I, wobei X für CH steht, Z für C-CF₃ steht, Y für N steht, R¹ für Br steht und A und R² wie in einer Reihe in Tabelle A definiert sind. |
| | |
| Tabelle A152: | Verbindungen der Formel I, wobei X für CH steht, Z für C-CF₃ steht, Y für N steht, R¹ für I steht und A und R² wie in einer Reihe in Tabelle A definiert sind. |
| | |
| Tabelle A153: | Verbindungen der Formel I, wobei X für CH steht, Z für C-CF₃ steht, Y für N steht, R¹ für OCH₃ steht und A und R² wie in einer Reihe in Tabelle A definiert sind. |
| | |
| Tabelle A154: | Verbindungen der Formel I, wobei X für CH steht, Z für C-CF₃ steht, Y für N steht, R¹ für OCF₃ steht und A und R² wie in einer Reihe in Tabelle A definiert sind. |
| | |
| Tabelle A155: | Verbindungen der Formel I, wobei X für CH steht, Z für C-CF₃ steht, Y für N steht, R¹ für OCCl₃ steht und A und R² wie in einer Reihe in Tabelle A definiert sind. |
| | |
| Tabelle A156: | Verbindungen der Formel I, wobei X für CH steht, Z für C-CF₃ steht, Y für N steht, R¹ für OCHF₂ steht und A und R² wie in einer Reihe in Tabelle A definiert sind. |
| | |
| Tabelle A157: | Verbindungen der Formel I, wobei X für CH steht, Z für C-CF₃ steht, Y für N steht, R¹ für OCCIF₂ steht und A und R² wie in einer Reihe in Tabelle A definiert sind. |
| | |
| Tabelle A158: | Verbindungen der Formel I, wobei X für CH steht, Z für C-CF₃ steht, Y für N steht, R¹ für OCH₂F steht und A und R² wie in einer Reihe in Tabelle A definiert sind. |
| | |
| Tabelle A159: | Verbindungen der Formel I, wobei X für CH steht, Z für C-CF₃ steht, Y für N steht, R¹ für OCHCl₂ steht und A und R² wie in einer Reihe in Tabelle A definiert sind. |
| | |
| Tabelle A160: | Verbindungen der Formel I, wobei X für CH steht, Z für C-CF₃ steht, Y für N steht, R¹ für OCH₂Cl steht und A und R² wie in einer Reihe in Tabelle A definiert sind. |
| | |
| Tabelle A161: | Verbindungen der Formel I, wobei X für CH steht, Z für C-CF₃ steht, Y für N steht, R¹ für OCH₂-OCH₃ steht und A und R² wie in einer Reihe in Tabelle A definiert sind. |
| | |
| Tabelle A162: | Verbindungen der Formel I, wobei X für CH steht, Z für C-CF₃ steht, Y für N steht, R¹ für OCH₂CH₃ steht und A und R² wie in einer Reihe in Tabelle A definiert sind. |
| | |
| Tabelle A163: | Verbindungen der Formel I, wobei X für CH steht, Z für C-OCH₃ steht, Y für N steht, R¹ für CH₃ steht und A und R² wie in einer Reihe in Tabelle A definiert sind. |
| | |
| Tabelle A164: | Verbindungen der Formel I, wobei X für CH steht, Z für C-OCH₃ steht, Y für N steht, R¹ für C₂H₅ steht und A und R² wie in einer Reihe in Tabelle A definiert sind. |
| | |
| Tabelle A165: | Verbindungen der Formel I, wobei X für CH steht, Z für C-OCH₃ steht, Y für N steht, R¹ für CF₃ steht und A und R² wie in einer Reihe in Tabelle A definiert sind. |
| | |
| Tabelle A166: | Verbindungen der Formel I, wobei X für CH steht, Z für C-OCH₃ steht, Y für N steht, R¹ für CCl₃ steht und A und R² wie in einer Reihe in Tabelle A definiert sind. |
| | |
| Tabelle A167: | Verbindungen der Formel I, wobei X für CH steht, Z für C-OCH₃ steht, Y für N steht, R¹ für F steht und A und R² wie in einer Reihe in Tabelle A definiert sind. |
| | |
| Tabelle A168: | Verbindungen der Formel I, wobei X für CH steht, Z für C-OCH₃ steht, Y für N steht, R¹ für Cl steht und A und R² wie in einer Reihe in Tabelle A definiert sind. |
| | |
| Tabelle A169: | Verbindungen der Formel I, wobei X für CH steht, Z für C-OCH₃ steht, Y für N steht, R¹ für Br steht und A und R² wie in einer Reihe in Tabelle A definiert sind. |
| | |
| Tabelle A170: | Verbindungen der Formel I, wobei X für CH steht, Z für C-OCH₃ steht, Y für N steht, R¹ für I steht und A und R² wie in einer Reihe in Tabelle A definiert sind. |
| | |
| Tabelle A171: | Verbindungen der Formel I, wobei X für CH steht, Z für C-OCH₃ steht, Y für N steht, R¹ für OCH₃ steht und A und R² wie in einer Reihe in Tabelle A definiert sind. |
| | |
| Tabelle A172: | Verbindungen der Formel I, wobei X für CH steht, Z für C-OCH₃ steht, Y für N steht, R¹ für OCF₃ steht und A und R² wie in einer Reihe in Tabelle A definiert sind. |
| | |
| Tabelle A173: | Verbindungen der Formel I, wobei X für CH steht, Z für C-OCH₃ steht, Y für N steht, R¹ für OCCl₃ steht und A und R² wie in einer Reihe in Tabelle A definiert sind. |
| | |
| Tabelle A174: | Verbindungen der Formel I, wobei X für CH steht, Z für C-OCH₃ steht, Y für N steht, R¹ für OCHF₂ steht und A und R² wie in einer Reihe in Tabelle A definiert sind. |
| | |
| Tabelle A175: | Verbindungen der Formel I, wobei X für CH steht, Z für C-OCH₃ steht, Y für N steht, R¹ für OCCIF₂ steht und A und R² wie in einer Reihe in Tabelle A definiert sind. |
| | |
| Tabelle A176: | Verbindungen der Formel I, wobei X für CH steht, Z für C-OCH₃ steht, Y für N steht, R¹ für OCH₂F steht und A und R² wie in einer Reihe in Tabelle A definiert sind. |
| | |
| Tabelle A177: | Verbindungen der Formel I, wobei X für CH steht, Z für C-OCH₃ steht, Y für N steht, R¹ für OCHCl₂ steht und A und R² wie in einer Reihe in Tabelle A definiert sind. |
| | |
| Tabelle A178: | Verbindungen der Formel I, wobei X für CH steht, Z für C-OCH₃ steht, Y für N steht, R¹ für OCH₂Cl steht und A und R² wie in einer Reihe in Tabelle A definiert sind. |
| | |
| Tabelle A179: | Verbindungen der Formel I, wobei X für CH steht, Z für C-OCH₃ steht, Y für N steht, R¹ für OCH₂-OCH₃ steht und A und R² wie in einer Reihe in Tabelle A definiert sind. |
| | |
| Tabelle A180: | Verbindungen der Formel I, wobei X für CH steht, Z für C-OCH₃ steht, Y für N steht, R¹ für OCH₂CH₃ steht und A und R² wie in einer Reihe in Tabelle A definiert sind. |
| | |
| Tabelle A181: | Verbindungen der Formel I, wobei X für CH steht, Z für C-CCl₃ steht, Y für N steht, R¹ für CH₃ steht und A und R² wie in einer Reihe in Tabelle A definiert sind. |
| | |
| Tabelle A182: | Verbindungen der Formel I, wobei X für CH steht, Z für C-CCl₃ steht, Y für N steht, R¹ für C₂H₅ steht und A und R² wie in einer Reihe in Tabelle A definiert sind. |
| | |
| Tabelle A183: | Verbindungen der Formel I, wobei X für CH steht, Z für C-CCl₃ steht, Y für N steht, R¹ für CF₃ steht und A und R² wie in einer Reihe in Tabelle A definiert sind. |
| | |
| Tabelle A184: | Verbindungen der Formel I, wobei X für CH steht, Z für C-CCl₃ steht, Y für N steht, R¹ für CCl₃ steht und A und R² wie in einer Reihe in Tabelle A definiert sind. |
| | |
| Tabelle A185: | Verbindungen der Formel I, wobei X für CH steht, Z für C-CCl₃ steht, Y für N steht, R¹ für F steht und A und R² wie in einer Reihe in Tabelle A definiert sind. |
| | |
| Tabelle A186: | Verbindungen der Formel I, wobei X für CH steht, Z für C-CCl₃ steht, Y für N steht, R¹ für Cl steht und A und R² wie in einer Reihe in Tabelle A definiert sind. |
| | |
| Tabelle A187: | Verbindungen der Formel I, wobei X für CH steht, Z für C-CCl₃ steht, Y für N steht, R¹ für Br steht und A und R² wie in einer Reihe in Tabelle A definiert sind. |
| | |
| Tabelle A188: | Verbindungen der Formel I, wobei X für CH steht, Z für C-CCl₃ steht, Y für N steht, R¹ für I steht und A und R² wie in einer Reihe in Tabelle A definiert sind. |
| | |
| Tabelle A189: | Verbindungen der Formel I, wobei X für CH steht, Z für C-CCl₃ steht, Y für N steht, R¹ für OCH₃ steht und A und R² wie in einer Reihe in Tabelle A definiert sind. |
| | |
| Tabelle A190: | Verbindungen der Formel I, wobei X für CH steht, Z für C-CCl₃ steht, Y für N steht, R¹ für OCF₃ steht und A und R² wie in einer Reihe in Tabelle A definiert sind. |
| | |
| Tabelle A191: | Verbindungen der Formel I, wobei X für CH steht, Z für C-CCl₃ steht, Y für N steht, R¹ für OCCl₃ steht und A und R² wie in einer Reihe in Tabelle A definiert sind. |
| | |
| Tabelle A192: | Verbindungen der Formel I, wobei X für CH steht, Z für C-CCl₃ steht, Y für N steht, R¹ für OCHF₂ steht und A und R² wie in einer Reihe in Tabelle A definiert sind. |
| | |
| Tabelle A193: | Verbindungen der Formel I, wobei X für CH steht, Z für C-CCl₃ steht, Y für N steht, R¹ für OCCIF₂ steht und A und R² wie in einer Reihe in Tabelle A definiert sind. |
| | |
| Tabelle A194: | Verbindungen der Formel I, wobei X für CH steht, Z für C-CCl₃ steht, Y für N steht, R¹ für OCH₂F steht und A und R² wie in einer Reihe in Tabelle A definiert sind. |
| | |
| Tabelle A195: | Verbindungen der Formel I, wobei X für CH steht, Z für C-CCl₃ steht, Y für N steht, R¹ für OCHCl₂ steht und A und R² wie in einer Reihe in Tabelle A definiert sind. |
| | |
| Tabelle A196: | Verbindungen der Formel I, wobei X für CH steht, Z für C-CCl₃ steht, Y für N steht, R¹ für OCH₂Cl steht und A und R² wie in einer Reihe in Tabelle A definiert sind. |
| | |
| Tabelle A197: | Verbindungen der Formel I, wobei X für CH steht, Z für C-CCl₃ steht, Y für N steht, R¹ für OCH₂-OCH₃ steht und A und R² wie in einer Reihe in Tabelle A definiert sind. |
| | |
| Tabelle A198: | Verbindungen der Formel I, wobei X für CH steht, Z für C-CCl₃ steht, Y für N steht, R¹ für OCH₂CH₃ steht und A und R² wie in einer Reihe in Tabelle A definiert sind. |
| | |
| Tabelle A199: | Verbindungen der Formel I, wobei X für CH steht, Z für C-C₂H₅ steht, Y für N steht, R¹ für CH₃ steht und A und R² wie in einer Reihe in Tabelle A definiert sind. |
| | |
| Tabelle A200: | Verbindungen der Formel I, wobei X für CH steht, Z für C-C₂H₅ steht, Y für N steht, R¹ für C₂H₅ steht und A und R² wie in einer Reihe in Tabelle A definiert sind. |
| | |
| Tabelle A201: | Verbindungen der Formel I, wobei X für CH steht, Z für C-C₂H₅ steht, Y für N steht, R¹ für CF₃ steht und A und R² wie in einer Reihe in Tabelle A definiert sind. |
| | |
| Tabelle A202: | Verbindungen der Formel I, wobei X für CH steht, Z für C-C₂H₅ steht, Y für N steht, R¹ für CCl₃ steht und A und R² wie in einer Reihe in Tabelle A definiert sind. |
| | |
| Tabelle A203: | Verbindungen der Formel I, wobei X für CH steht, Z für C-C₂H₅ steht, Y für N steht, R¹ für F steht und A und R² wie in einer Reihe in Tabelle A definiert sind. |
| | |
| Tabelle A204: | Verbindungen der Formel I, wobei X für CH steht, Z für C-C₂H₅ steht, Y für N steht, R¹ für Cl steht und A und R² wie in einer Reihe in Tabelle A definiert sind. |
| | |
| Tabelle A205: | Verbindungen der Formel I, wobei X für CH steht, Z für C-C₂H₅ steht, Y für N steht, R¹ für Br steht und A und R² wie in einer Reihe in Tabelle A definiert sind. |
| | |
| Tabelle A206: | Verbindungen der Formel I, wobei X für CH steht, Z für C-C₂H₅ steht, Y für N steht, R¹ für I steht und A und R² wie in einer Reihe in Tabelle A definiert sind. |
| | |
| Tabelle A207: | Verbindungen der Formel I, wobei X für CH steht, Z für C-C₂H₅ steht, Y für N steht, R¹ für OCH₃ steht und A und R² wie in einer Reihe in Tabelle A definiert sind. |
| | |
| Tabelle A208: | Verbindungen der Formel I, wobei X für CH steht, Z für C-C₂H₅ steht, Y für N steht, R¹ für OCF₃ steht und A und R² wie in einer Reihe in Tabelle A definiert sind. |
| | |
| Tabelle A209: | Verbindungen der Formel I, wobei X für CH steht, Z für C-C₂H₅ steht, Y für N steht, R¹ für OCCl₃ steht und A und R² wie in einer Reihe in Tabelle A definiert sind. |
| | |
| Tabelle A210: | Verbindungen der Formel I, wobei X für CH steht, Z für C-C₂H₅ steht, Y für N steht, R¹ für OCHF₂ steht und A und R² wie in einer Reihe in Tabelle A definiert sind. |
| | |
| Tabelle A211: | Verbindungen der Formel I, wobei X für CH steht, Z für C-C₂H₅ steht, Y für N steht, R¹ für OCCIF₂ steht und A und R² wie in einer Reihe in Tabelle A definiert sind. |
| | |
| Tabelle A212: | Verbindungen der Formel I, wobei X für CH steht, Z für C-C₂H₅ steht, Y für N steht, R¹ für OCH₂F steht und A und R² wie in einer Reihe in Tabelle A definiert sind. |
| | |
| Tabelle A213: | Verbindungen der Formel I, wobei X für CH steht, Z für C-C₂H₅ steht, Y für N steht, R¹ für OCHCl₂ steht und A und R² wie in einer Reihe in Tabelle A definiert sind. |
| | |
| Tabelle A214: | Verbindungen der Formel I, wobei X für CH steht, Z für C-C₂H₅ steht, Y für N steht, R¹ für OCH₂Cl steht und A und R² wie in einer Reihe in Tabelle A definiert sind. |
| | |
| Tabelle A215: | Verbindungen der Formel I, wobei X für CH steht, Z für C-C₂H₅ steht, Y für N steht, R¹ für OCH₂-OCH₃ steht und A und R² wie in einer Reihe in Tabelle A definiert sind. |
| | |
| Tabelle A216: | Verbindungen der Formel I, wobei X für CH steht, Z für C-C₂H₅ steht, Y für N steht, R¹ für OCH₂CH₃ steht und A und R² wie in einer Reihe in Tabelle A definiert sind. |
| | |
| Tabelle A217: | Verbindungen der Formel I, wobei X für CH steht, Z für C-OC₂H₅ steht, Y für N steht, R¹ für CH₃ steht und A und R² wie in einer Reihe in Tabelle A definiert sind. |
| | |
| Tabelle A218: | Verbindungen der Formel I, wobei X für CH steht, Z für C-OC₂H₅ steht, Y für N steht, R¹ für C₂H₅ steht und A und R² wie in einer Reihe in Tabelle A definiert sind. |
| | |
| Tabelle A219: | Verbindungen der Formel I, wobei X für CH steht, Z für C-OC₂H₅ steht, Y für N steht, R¹ für CF₃ steht und A und R² wie in einer Reihe in Tabelle A definiert sind. |
| | |
| Tabelle A220: | Verbindungen der Formel I, wobei X für CH steht, Z für C-OC₂H₅ steht, Y für N steht, R¹ für CCl₃ steht und A und R² wie in einer Reihe in Tabelle A definiert sind. |
| | |
| Tabelle A221: | Verbindungen der Formel I, wobei X für CH steht, Z für C-OC₂H₅ steht, Y für N steht, R¹ für F steht und A und R² wie in einer Reihe in Tabelle A definiert sind. |
| | |
| Tabelle A222: | Verbindungen der Formel I, wobei X für CH steht, Z für C-OC₂H₅ steht, Y für N steht, R¹ für Cl steht und A und R² wie in einer Reihe in Tabelle A definiert sind. |
| | |
| Tabelle A223: | Verbindungen der Formel I, wobei X für CH steht, Z für C-OC₂H₅ steht, Y für N steht, R¹ für Br steht und A und R² wie in einer Reihe in Tabelle A definiert sind. |
| | |
| Tabelle A224: | Verbindungen der Formel I, wobei X für CH steht, Z für C-OC₂H₅ steht, Y für N steht, R¹ für I steht und A und R² wie in einer Reihe in Tabelle A definiert sind. |
| | |
| Tabelle A225: | Verbindungen der Formel I, wobei X für CH steht, Z für C-OC₂H₅ steht, Y für N steht, R¹ für OCH₃ steht und A und R² wie in einer Reihe in Tabelle A definiert sind. |
| | |
| Tabelle A226: | Verbindungen der Formel I, wobei X für CH steht, Z für C-OC₂H₅ steht, Y für N steht, R¹ für OCF₃ steht und A und R² wie in einer Reihe in Tabelle A definiert sind. |
| | |
| Tabelle A227: | Verbindungen der Formel I, wobei X für CH steht, Z für C-OC₂H₅ steht, Y für N steht, R¹ für OCCl₃ steht und A und R² wie in einer Reihe in Tabelle A definiert sind. |
| | |
| Tabelle A228: | Verbindungen der Formel I, wobei X für CH steht, Z für C-OC₂H₅ steht, Y für N steht, R¹ für OCHF₂ steht und A und R² wie in einer Reihe in Tabelle A definiert sind. |
| | |
| Tabelle A229: | Verbindungen der Formel I, wobei X für CH steht, Z für C-OC₂H₅ steht, Y für N steht, R¹ für OCCIF₂ steht und A und R² wie in einer Reihe in Tabelle A definiert sind. |
| | |
| Tabelle A230: | Verbindungen der Formel I, wobei X für CH steht, Z für C-OC₂H₅ steht, Y für N steht, R¹ für OCH₂F steht und A und R² wie in einer Reihe in Tabelle A definiert sind. |
| | |
| Tabelle A231: | Verbindungen der Formel I, wobei X für CH steht, Z für C-OC₂H₅ steht, Y für N steht, R¹ für OCHCl₂ steht und A und R² wie in einer Reihe in Tabelle A definiert sind. |
| | |
| Tabelle A232: | Verbindungen der Formel I, wobei X für CH steht, Z für C-OC₂H₅ steht, Y für N steht, R¹ für OCH₂Cl steht und A und R² wie in einer Reihe in Tabelle A definiert sind. |
| | |
| Tabelle A233: | Verbindungen der Formel I, wobei X für CH steht, Z für C-OC₂H₅ steht, Y für N steht, R¹ für OCH₂-OCH₃ steht und A und R² wie in einer Reihe in Tabelle A definiert sind. |
| | |
| Tabelle A234: | Verbindungen der Formel I, wobei X für CH steht, Z für C-OC₂H₅ steht, Y für N steht, R¹ für OCH₂CH₃ steht und A und R² wie in einer Reihe in Tabelle A definiert sind. |
| | |
| Tabelle A235: | Verbindungen der Formel I, wobei Z für CH steht, Y für N steht, X für C-Cl steht, R¹ für CH₃ steht und A und R² wie in einer Reihe in Tabelle A definiert sind. |
| | |
| Tabelle A236: | Verbindungen der Formel I, wobei Z für CH steht, Y für N steht, X für C-Cl steht, R¹ für C₂H₅ steht und A und R² wie in einer Reihe in Tabelle A definiert sind. |
| | |
| Tabelle A237: | Verbindungen der Formel I, wobei Z für CH steht, Y für N steht, X für C-Cl steht, R¹ für CF₃ steht und A und R² wie in einer Reihe in Tabelle A definiert sind. |
| | |
| Tabelle A238: | Verbindungen der Formel I, wobei Z für CH steht, Y für N steht, X für C-Cl steht, R¹ für CCl₃ steht und A und R² wie in einer Reihe in Tabelle A definiert sind. |
| | |
| Tabelle A239: | Verbindungen der Formel I, wobei Z für CH steht, Y für N steht, X für C-Cl steht, R¹ für F steht und A und R² wie in einer Reihe in Tabelle A definiert sind. |
| | |
| Tabelle A240: | Verbindungen der Formel I, wobei Z für CH steht, Y für N steht, X für C-Cl steht, R¹ für Cl steht und A und R² wie in einer Reihe in Tabelle A definiert sind. |
| | |
| Tabelle A241: | Verbindungen der Formel I, wobei Z für CH steht, Y für N steht, X für C-Cl steht, R¹ für Br steht und A und R² wie in einer Reihe in Tabelle A definiert sind. |
| | |
| Tabelle A242: | Verbindungen der Formel I, wobei Z für CH steht, Y für N steht, X für C- Cl steht, R¹ für I steht und A und R² wie in einer Reihe in Tabelle A definiert sind. |
| | |
| Tabelle A243: | Verbindungen der Formel I, wobei Z für CH steht, Y für N steht, X für C-Cl steht, R¹ für OCH₃ steht und A und R² wie in einer Reihe in Tabelle A definiert sind. |
| | |
| Tabelle A244: | Verbindungen der Formel I, wobei Z für CH steht, Y für N steht, X für C-Cl steht, R¹ für OCF₃ steht und A und R² wie in einer Reihe in Tabelle A definiert sind. |
| | |
| Tabelle A245: | Verbindungen der Formel I, wobei Z für CH steht, Y für N steht, X für C-Cl steht, R¹ für OCCl₃ steht und A und R² wie in einer Reihe in Tabelle A definiert sind. |
| | |
| Tabelle A246: | Verbindungen der Formel I, wobei Z für CH steht, Y für N steht, X für C-Cl steht, R¹ für OCHF₂ steht und A und R² wie in einer Reihe in Tabelle A definiert sind. |
| | |
| Tabelle A247: | Verbindungen der Formel I, wobei Z für CH steht, Y für N steht, X für C-Cl steht, R¹ für OCCIF₂ steht und A und R² wie in einer Reihe in Tabelle A definiert sind. |
| | |
| Tabelle A248: | Verbindungen der Formel I, wobei Z für CH steht, Y für N steht, X für C-Cl steht, R¹ für OCH₂F steht und A und R² wie in einer Reihe in Tabelle A definiert sind. |
| | |
| Tabelle A249: | Verbindungen der Formel I, wobei Z für CH steht, Y für N steht, X für C-Cl steht, R¹ für OCHCl₂ steht und A und R² wie in einer Reihe in Tabelle A definiert sind. |
| | |
| Tabelle A250: | Verbindungen der Formel I, wobei Z für CH steht, Y für N steht, X für C-Cl steht, R¹ für OCH₂Cl steht und A und R² wie in einer Reihe in Tabelle A definiert sind. |
| | |
| Tabelle A251: | Verbindungen der Formel I, wobei Z für CH steht, Y für N steht, X für C-Cl steht, R¹ für OCH₂-OCH₃ steht und A und R² wie in einer Reihe in Tabelle A definiert sind. |
| | |
| Tabelle A252: | Verbindungen der Formel I, wobei Z für CH steht, Y für N steht, X für C-Cl steht, R¹ für OCH₂CH₃ steht und A und R² wie in einer Reihe in Tabelle A definiert sind. |
| | |
| Tabelle A253: | Verbindungen der Formel I, wobei Z für CH steht, Y für N steht, X für C-F steht, R¹ für CH₃ steht und A und R² wie in einer Reihe in Tabelle A definiert sind. |
| | |
| Tabelle A254: | Verbindungen der Formel I, wobei Z für CH steht, Y für N steht, X für C-F steht, R¹ für C₂H₅ steht und A und R² wie in einer Reihe in Tabelle A definiert sind. |
| | |
| Tabelle A255: | Verbindungen der Formel I, wobei Z für CH steht, Y für N steht, X für C-F steht, R¹ für CF₃ steht und A und R² wie in einer Reihe in Tabelle A definiert sind. |
| | |
| Tabelle A256: | Verbindungen der Formel I, wobei Z für CH steht, Y für N steht, X für C-F steht, R¹ für CCl₃ steht und A und R² wie in einer Reihe in Tabelle A definiert sind. |
| | |
| Tabelle A257: | Verbindungen der Formel I, wobei Z für CH steht, Y für N steht, X für C-F steht, R¹ für F steht und A und R² wie in einer Reihe in Tabelle A definiert sind. |
| | |
| Tabelle A258: | Verbindungen der Formel I, wobei Z für CH steht, Y für N steht, X für C-F steht, R¹ für Cl steht und A und R² wie in einer Reihe in Tabelle A definiert sind. |
| | |
| Tabelle A259: | Verbindungen der Formel I, wobei Z für CH steht, Y für N steht, X für C-F steht, R¹ für Br steht und A und R² wie in einer Reihe in Tabelle A definiert sind. |
| | |
| Tabelle A260: | Verbindungen der Formel I, wobei Z für CH steht, Y für N steht, X für C-F steht, R¹ für I steht und A und R² wie in einer Reihe in Tabelle A definiert sind. |
| | |
| Tabelle A261: | Verbindungen der Formel I, wobei Z für CH steht, Y für N steht, X für C-F steht, R¹ für OCH₃ steht und A und R² wie in einer Reihe in Tabelle A definiert sind. |
| | |
| Tabelle A262: | Verbindungen der Formel I, wobei Z für CH steht, Y für N steht, X für C-F steht, R¹ für OCF₃ steht und A und R² wie in einer Reihe in Tabelle A definiert sind. |
| | |
| Tabelle A263: | Verbindungen der Formel I, wobei Z für CH steht, Y für N steht, X für C-F steht, R¹ für OCCl₃ steht und A und R² wie in einer Reihe in Tabelle A definiert sind. |
| | |
| Tabelle A264: | Verbindungen der Formel I, wobei Z für CH steht, Y für N steht, X für C-F steht, R¹ für OCHF₂ steht und A und R² wie in einer Reihe in Tabelle A definiert sind. |
| | |
| Tabelle A265: | Verbindungen der Formel I, wobei Z für CH steht, Y für N steht, X für C-F steht, R¹ für OCCIF₂ steht und A und R² wie in einer Reihe in Tabelle A definiert sind. |
| | |
| Tabelle A266: | Verbindungen der Formel I, wobei Z für CH steht, Y für N steht, X für C-F steht, R¹ für OCH₂F steht und A und R² wie in einer Reihe in Tabelle A definiert sind. |
| | |
| Tabelle A267: | Verbindungen der Formel I, wobei Z für CH steht, Y für N steht, X für C-F steht, R¹ für OCHCl₂ steht und A und R² wie in einer Reihe in Tabelle A definiert sind. |
| | |
| Tabelle A268: | Verbindungen der Formel I, wobei Z für CH steht, Y für N steht, X für C-F steht, R¹ für OCH₂Cl steht und A und R² wie in einer Reihe in Tabelle A definiert sind. |
| | |
| Tabelle A269: | Verbindungen der Formel I, wobei Z für CH steht, Y für N steht, X für C-F steht, R¹ für OCH₂-OCH₃ steht und A und R² wie in einer Reihe in Tabelle A definiert sind. |
| | |
| Tabelle A270: | Verbindungen der Formel I, wobei Z für CH steht, Y für N steht, X für C-F steht, R¹ für OCH₂CH₃ steht und A und R² wie in einer Reihe in Tabelle A definiert sind. |
| | |
| Tabelle A271: | Verbindungen der Formel I, wobei Z für CH steht, Y für N steht, X für C-Br steht, R¹ für CH₃ steht und A und R² wie in einer Reihe in Tabelle A definiert sind. |
| | |
| Tabelle A272: | Verbindungen der Formel I, wobei Z für CH steht, Y für N steht, X für C-Br steht, R¹ für C₂H₅ steht und A und R² wie in einer Reihe in Tabelle A definiert sind. |
| | |
| Tabelle A273: | Verbindungen der Formel I, wobei Z für CH steht, Y für N steht, X für C-Br steht, R¹ für CF₃ steht und A und R² wie in einer Reihe in Tabelle A definiert sind. |
| | |
| Tabelle A274: | Verbindungen der Formel I, wobei Z für CH steht, Y für N steht, X für C-Br steht, R¹ für CCl₃ steht und A und R² wie in einer Reihe in Tabelle A definiert sind. |
| | |
| Tabelle A275: | Verbindungen der Formel I, wobei Z für CH steht, Y für N steht, X für C-Br steht, R¹ für F steht und A und R² wie in einer Reihe in Tabelle A definiert sind. |
| | |
| Tabelle A276: | Verbindungen der Formel I, wobei Z für CH steht, Y für N steht, X für C-Br steht, R¹ für Cl steht und A und R² wie in einer Reihe in Tabelle A definiert sind. |
| | |
| Tabelle A277: | Verbindungen der Formel I, wobei Z für CH steht, Y für N steht, X für C-Br steht, R¹ für Br steht und A und R² wie in einer Reihe in Tabelle A definiert sind. |
| | |
| Tabelle A278: | Verbindungen der Formel I, wobei Z für CH steht, Y für N steht, X für C-Br steht, R¹ für I steht und A und R² wie in einer Reihe in Tabelle A definiert sind. |
| | |
| Tabelle A279: | Verbindungen der Formel I, wobei Z für CH steht, Y für N steht, X für C-Br steht, R¹ für OCH₃ steht und A und R² wie in einer Reihe in Tabelle A definiert sind. |
| | |
| Tabelle A280: | Verbindungen der Formel I, wobei Z für CH steht, Y für N steht, X für C-Br steht, R¹ für OCF₃ steht und A und R² wie in einer Reihe in Tabelle A definiert sind. |
| | |
| Tabelle A281: | Verbindungen der Formel I, wobei Z für CH steht, Y für N steht, X für C-Br steht, R¹ für OCCl₃ steht und A und R² wie in einer Reihe in Tabelle A definiert sind. |
| | |
| Tabelle A282: | Verbindungen der Formel I, wobei Z für CH steht, Y für N steht, X für C-Br steht, R¹ für OCHF₂ steht und A und R² wie in einer Reihe in Tabelle A definiert sind. |
| | |
| Tabelle A283: | Verbindungen der Formel I, wobei Z für CH steht, Y für N steht, X für C-Br steht, R¹ für OCCIF₂ steht und A und R² wie in einer Reihe in Tabelle A definiert sind. |
| | |
| Tabelle A284: | Verbindungen der Formel I, wobei Z für CH steht, Y für N steht, X für C-Br steht, R¹ für OCH₂F steht und A und R² wie in einer Reihe in Tabelle A definiert sind. |
| | |
| Tabelle A285: | Verbindungen der Formel I, wobei Z für CH steht, Y für N steht, X für C-Br steht, R¹ für OCHCl₂ steht und A und R² wie in einer Reihe in Tabelle A definiert sind. |
| | |
| Tabelle A286: | Verbindungen der Formel I, wobei Z für CH steht, Y für N steht, X für C-Br steht, R¹ für OCH₂Cl steht und A und R² wie in einer Reihe in Tabelle A definiert sind. |
| | |
| Tabelle A287: | Verbindungen der Formel I, wobei Z für CH steht, Y für N steht, X für C-Br steht, R¹ für OCH₂-OCH₃ steht und A und R² wie in einer Reihe in Tabelle A definiert sind. |
| | |
| Tabelle A288: | Verbindungen der Formel I, wobei Z für CH steht, Y für N steht, X für C-Br steht, R¹ für OCH₂CH₃ steht und A und R² wie in einer Reihe in Tabelle A definiert sind. |
| | |
| Tabelle A289: | Verbindungen der Formel I, wobei Z für CH steht, Y für N steht, X für C-I steht, R¹ für CH₃ steht und A und R² wie in einer Reihe in Tabelle A definiert sind. |
| | |
| Tabelle A290: | Verbindungen der Formel I, wobei Z für CH steht, Y für N steht, X für C-I steht, R¹ für C₂H₅ steht und A und R² wie in einer Reihe in Tabelle A definiert sind. |
| | |
| Tabelle A291: | Verbindungen der Formel I, wobei Z für CH steht, Y für N steht, X für C-I steht, R¹ für CF₃ steht und A und R² wie in einer Reihe in Tabelle A definiert sind. |
| | |
| Tabelle A292: | Verbindungen der Formel I, wobei Z für CH steht, Y für N steht, X für C-I steht, R¹ für CCl₃ steht und A und R² wie in einer Reihe in Tabelle A definiert sind. |
| | |
| Tabelle A293: | Verbindungen der Formel I, wobei Z für CH steht, Y für N steht, X für C-I steht, R¹ für F steht und A und R² wie in einer Reihe in Tabelle A definiert sind. |
| | |
| Tabelle A294: | Verbindungen der Formel I, wobei Z für CH steht, Y für N steht, X für C-I steht, R¹ für Cl steht und A und R² wie in einer Reihe in Tabelle A definiert sind. |
| | |
| Tabelle A295: | Verbindungen der Formel I, wobei Z für CH steht, Y für N steht, X für C-I steht, R¹ für Br steht und A und R² wie in einer Reihe in Tabelle A definiert sind. |
| | |
| Tabelle A296: | Verbindungen der Formel I, wobei Z für CH steht, Y für N steht, X für C-I steht, R¹ für I steht und A und R² wie in einer Reihe in Tabelle A definiert sind. |
| | |
| Tabelle A297: | Verbindungen der Formel I, wobei Z für CH steht, Y für N steht, X für C-I steht, R¹ für OCH₃ steht und A und R² wie in einer Reihe in Tabelle A definiert sind. |
| | |
| Tabelle A298: | Verbindungen der Formel I, wobei Z für CH steht, Y für N steht, X für C-I steht, R¹ für OCF₃ steht und A und R² wie in einer Reihe in Tabelle A definiert sind. |
| | |
| Tabelle A299: | Verbindungen der Formel I, wobei Z für CH steht, Y für N steht, X für C-I steht, R¹ für OCCl₃ steht und A und R² wie in einer Reihe in Tabelle A definiert sind. |
| | |
| Tabelle A300: | Verbindungen der Formel I, wobei Z für CH steht, Y für N steht, X für C-I steht, R¹ für OCHF₂ steht und A und R² wie in einer Reihe in Tabelle A definiert sind. |
| | |
| Tabelle A301: | Verbindungen der Formel I, wobei Z für CH steht, Y für N steht, X für C-I steht, R¹ für OCCIF₂ steht und A und R² wie in einer Reihe in Tabelle A definiert sind. |
| | |
| Tabelle A302: | Verbindungen der Formel I, wobei Z für CH steht, Y für N steht, X für C-I steht, R¹ für OCH₂F steht und A und R² wie in einer Reihe in Tabelle A definiert sind. |
| | |
| Tabelle A303: | Verbindungen der Formel I, wobei Z für CH steht, Y für N steht, X für C-I steht, R¹ für OCHCl₂ steht und A und R² wie in einer Reihe in Tabelle A definiert sind. |
| | |
| Tabelle A304: | Verbindungen der Formel I, wobei Z für CH steht, Y für N steht, X für C-I steht, R¹ für OCH₂Cl steht und A und R² wie in einer Reihe in Tabelle A definiert sind. |
| | |
| Tabelle A305: | Verbindungen der Formel I, wobei Z für CH steht, Y für N steht, X für C-I steht, R¹ für OCH₂-OCH₃ steht und A und R² wie in einer Reihe in Tabelle A definiert sind. |
| | |
| Tabelle A306: | Verbindungen der Formel I, wobei Z für CH steht, Y für N steht, X für C-I steht, R¹ für OCH₂CH₃ steht und A und R² wie in einer Reihe in Tabelle A definiert sind. |
| | |
| Tabelle A307: | Verbindungen der Formel I, wobei Z für CH steht, Y für N steht, X für C-NH₂ steht, R¹ für CH₃ steht und A und R² wie in einer Reihe in Tabelle A definiert sind. |
| | |
| Tabelle A308: | Verbindungen der Formel I, wobei Z für CH steht, Y für N steht, X für C-NH₂ steht, R¹ für C₂H₅ steht und A und R² wie in einer Reihe in Tabelle A definiert sind. |
| | |
| Tabelle A309: | Verbindungen der Formel I, wobei Z für CH steht, Y für N steht, X für C-NH₂ steht, R¹ für CF₃ steht und A und R² wie in einer Reihe in Tabelle A definiert sind. |
| | |
| Tabelle A310: | Verbindungen der Formel I, wobei Z für CH steht, Y für N steht, X für C-NH₂ steht, R¹ für CCl₃ steht und A und R² wie in einer Reihe in Tabelle A definiert sind. |
| | |
| Tabelle A311: | Verbindungen der Formel I, wobei Z für CH steht, Y für N steht, X für C-NH₂ steht, R¹ für F steht und A und R² wie in einer Reihe in Tabelle A definiert sind. |
| | |
| Tabelle A312: | Verbindungen der Formel I, wobei Z für CH steht, Y für N steht, X für C-NH₂ steht, R¹ für Cl steht und A und R² wie in einer Reihe in Tabelle A definiert sind. |
| | |
| Tabelle A313: | Verbindungen der Formel I, wobei Z für CH steht, Y für N steht, X für C-NH₂ steht, R¹ für Br steht und A und R² wie in einer Reihe in Tabelle A definiert sind. |
| | |
| Tabelle A314: | Verbindungen der Formel I, wobei Z für CH steht, Y für N steht, X für C-NH₂ steht, R¹ für I steht und A und R² wie in einer Reihe in Tabelle A definiert sind. |
| | |
| Tabelle A315: | Verbindungen der Formel I, wobei Z für CH steht, Y für N steht, X für C-NH₂ steht, R¹ für OCH₃ steht und A und R² wie in einer Reihe in Tabelle A definiert sind. |
| | |
| Tabelle A316: | Verbindungen der Formel I, wobei Z für CH steht, Y für N steht, X für C-NH₂ steht, R¹ für OCF₃ steht und A und R² wie in einer Reihe in Tabelle A definiert sind. |
| | |
| Tabelle A317: | Verbindungen der Formel I, wobei Z für CH steht, Y für N steht, X für C-NH₂ steht, R¹ für OCCl₃ steht und A und R² wie in einer Reihe in Tabelle A definiert sind. |
| | |
| Tabelle A318: | Verbindungen der Formel I, wobei Z für CH steht, Y für N steht, X für C-NH₂ steht, R¹ für OCHF₂ steht und A und R² wie in einer Reihe in Tabelle A definiert sind. |
| | |
| Tabelle A319: | Verbindungen der Formel I, wobei Z für CH steht, Y für N steht, X für C-NH₂ steht, R¹ für OCCIF₂ steht und A und R² wie in einer Reihe in Tabelle A definiert sind. |
| | |
| Tabelle A320: | Verbindungen der Formel I, wobei Z für CH steht, Y für N steht, X für C-NH₂ steht, R¹ für OCH₂F steht und A und R² wie in einer Reihe in Tabelle A definiert sind. |
| | |
| Tabelle A321: | Verbindungen der Formel I, wobei Z für CH steht, Y für N steht, X für C-NH₂ steht, R¹ für OCHCl₂ steht und A und R² wie in einer Reihe in Tabelle A definiert sind. |
| | |
| Tabelle A322: | Verbindungen der Formel I, wobei Z für CH steht, Y für N steht, X für C-NH₂ steht, R¹ für OCH₂Cl steht und A und R² wie in einer Reihe in Tabelle A definiert sind. |
| | |
| Tabelle A323: | Verbindungen der Formel I, wobei Z für CH steht, Y für N steht, X für C-NH₂ steht, R¹ für OCH₂-OCH₃ steht und A und R² wie in einer Reihe in Tabelle A definiert sind. |
| | |
| Tabelle A324: | Verbindungen der Formel I, wobei Z für CH steht, Y für N steht, X für C-NH₂ steht, R¹ für OCH₂CH₃ steht und A und R² wie in einer Reihe in Tabelle A definiert sind. |
| | |
| Tabelle A325: | Verbindungen der Formel I, wobei Z für CH steht, Y für N steht, X für C-N(CH₃)₂ steht, R¹ für CH₃ steht und A und R² wie in einer Reihe in Tabelle A definiert sind. |
| | |
| Tabelle A326: | Verbindungen der Formel I, wobei Z für CH steht, Y für N steht, X für C-N(CH₃)₂ steht, R¹ für C₂H₅ steht und A und R² wie in einer Reihe in Tabelle A definiert sind. |
| | |
| Tabelle A327: | Verbindungen der Formel I, wobei Z für CH steht, Y für N steht, X für C-N(CH₃)₂ steht, R¹ für CF₃ steht und A und R² wie in einer Reihe in Tabelle A definiert sind. |
| | |
| Tabelle A328: | Verbindungen der Formel I, wobei Z für CH steht, Y für N steht, X für C-N(CH₃)₂ steht, R¹ für CCl₃ steht und A und R² wie in einer Reihe in Tabelle A definiert sind. |
| | |
| Tabelle A329: | Verbindungen der Formel I, wobei Z für CH steht, Y für N steht, X für C-N(CH₃)₂ steht, R¹ für F steht und A und R² wie in einer Reihe in Tabelle A definiert sind. |
| | |
| Tabelle A330: | Verbindungen der Formel I, wobei Z für CH steht, Y für N steht, X für C-N(CH₃)₂ steht, R¹ für Cl steht und A und R² wie in einer Reihe in Tabelle A definiert sind. |
| | |
| Tabelle A331: | Verbindungen der Formel I, wobei Z für CH steht, Y für N steht, X für C-N(CH₃)₂ steht, R¹ für Br steht und A und R² wie in einer Reihe in Tabelle A definiert sind. |
| | |
| Tabelle A332: | Verbindungen der Formel I, wobei Z für CH steht, Y für N steht, X für C-N(CH₃)₂ steht, R¹ für I steht und A und R² wie in einer Reihe in Tabelle A definiert sind. |
| | |
| Tabelle A333: | Verbindungen der Formel I, wobei Z für CH steht, Y für N steht, X für C-N(CH₃)₂ steht, R¹ für OCH₃ steht und A und R² wie in einer Reihe in Tabelle A definiert sind. |
| | |
| Tabelle A334: | Verbindungen der Formel I, wobei Z für CH steht, Y für N steht, X für C-N(CH₃)₂ steht, R¹ für OCF₃ steht und A und R² wie in einer Reihe in Tabelle A definiert sind. |
| | |
| Tabelle A335: | Verbindungen der Formel I, wobei Z für CH steht, Y für N steht, X für C-N(CH₃)₂ steht, R¹ für OCCl₃ steht und A und R² wie in einer Reihe in Tabelle A definiert sind. |
| | |
| Tabelle A336: | Verbindungen der Formel I, wobei Z für CH steht, Y für N steht, X für C-N(CH₃)₂ steht, R¹ für OCHF₂ steht und A und R² wie in einer Reihe in Tabelle A definiert sind. |
| | |
| Tabelle A337: | Verbindungen der Formel I, wobei Z für CH steht, Y für N steht, X für C-N(CH₃)₂ steht, R¹ für OCCIF₂ steht und A und R² wie in einer Reihe in Tabelle A definiert sind. |
| | |
| Tabelle A338: | Verbindungen der Formel I, wobei Z für CH steht, Y für N steht, X für C-N(CH₃)₂ steht, R¹ für OCH₂F steht und A und R² wie in einer Reihe in Tabelle A definiert sind. |
| | |
| Tabelle A339: | Verbindungen der Formel I, wobei Z für CH steht, Y für N steht, X für C-N(CH₃)₂ steht, R¹ für OCHCl₂ steht und A und R² wie in einer Reihe in Tabelle A definiert sind. |
| | |
| Tabelle A340: | Verbindungen der Formel I, wobei Z für CH steht, Y für N steht, X für C-N(CH₃)₂ steht, R¹ für OCH₂Cl steht und A und R² wie in einer Reihe in Tabelle A definiert sind. |
| | |
| Tabelle A341: | Verbindungen der Formel I, wobei Z für CH steht, Y für N steht, X für C-N(CH₃)₂ steht, R¹ für OCH₂-OCH₃ steht und A und R² wie in einer Reihe in Tabelle A definiert sind. |
| | |
| Tabelle A342: | Verbindungen der Formel I, wobei Z für CH steht, Y für N steht, X für C-N(CH₃)₂ steht, R¹ für OCH₂CH₃ steht und A und R² wie in einer Reihe in Tabelle A definiert sind. |
| | |
| Tabelle A343: | Verbindungen der Formel I, wobei Z für CH steht, Y für N steht, X für C-CH₃ steht, R¹ für CH₃ steht und A und R² wie in einer Reihe in Tabelle A definiert sind. |
| | |
| Tabelle A344: | Verbindungen der Formel I, wobei Z für CH steht, Y für N steht, X für C-CH₃ steht, R¹ für C₂H₅ steht und A und R² wie in einer Reihe in Tabelle A definiert sind. |
| | |
| Tabelle A345: | Verbindungen der Formel I, wobei Z für CH steht, Y für N steht, X für C-CH₃ steht, R¹ für CF₃ steht und A und R² wie in einer Reihe in Tabelle A definiert sind. |
| | |
| Tabelle A346: | Verbindungen der Formel I, wobei Z für CH steht, Y für N steht, X für C-CH₃ steht, R¹ für CCl₃ steht und A und R² wie in einer Reihe in Tabelle A definiert sind. |
| | |
| Tabelle A347: | Verbindungen der Formel I, wobei Z für CH steht, Y für N steht, X für C-CH₃ steht, R¹ für F steht und A und R² wie in einer Reihe in Tabelle A definiert sind. |
| | |
| Tabelle A348: | Verbindungen der Formel I, wobei Z für CH steht, Y für N steht, X für C-CH₃ steht, R¹ für Cl steht und A und R² wie in einer Reihe in Tabelle A definiert sind. |
| | |
| Tabelle A349: | Verbindungen der Formel I, wobei Z für CH steht, Y für N steht, X für C-CH₃ steht, R¹ für Br steht und A und R² wie in einer Reihe in Tabelle A definiert sind. |
| | |
| Tabelle A350: | Verbindungen der Formel I, wobei Z für CH steht, Y für N steht, X für C-CH₃ steht, R¹ für I steht und A und R² wie in einer Reihe in Tabelle A definiert sind. |
| | |
| Tabelle A351: | Verbindungen der Formel I, wobei Z für CH steht, Y für N steht, X für C-CH₃ steht, R¹ für OCH₃ steht und A und R² wie in einer Reihe in Tabelle A definiert sind. |
| | |
| Tabelle A352: | Verbindungen der Formel I, wobei Z für CH steht, Y für N steht, X für C-CH₃ steht, R¹ für OCF₃ steht und A und R² wie in einer Reihe in Tabelle A definiert sind. |
| | |
| Tabelle A353: | Verbindungen der Formel I, wobei Z für CH steht, Y für N steht, X für C-CH₃ steht, R¹ für OCCl₃ steht und A und R² wie in einer Reihe in Tabelle A definiert sind. |
| | |
| Tabelle A354: | Verbindungen der Formel I, wobei Z für CH steht, Y für N steht, X für C-CH₃ steht, R¹ für OCHF₂ steht und A und R² wie in einer Reihe in Tabelle A definiert sind. |
| | |
| Tabelle A355: | Verbindungen der Formel I, wobei Z für CH steht, Y für N steht, X für C-CH₃ steht, R¹ für OCCIF₂ steht und A und R² wie in einer Reihe in Tabelle A definiert sind. |
| | |
| Tabelle A356: | Verbindungen der Formel I, wobei Z für CH steht, Y für N steht, X für C-CH₃ steht, R¹ für OCH₂F steht und A und R² wie in einer Reihe in Tabelle A definiert sind. |
| | |
| Tabelle A357: | Verbindungen der Formel I, wobei Z für CH steht, Y für N steht, X für C-CH₃ steht, R¹ für OCHCl₂ steht und A und R² wie in einer Reihe in Tabelle A definiert sind. |
| | |
| Tabelle A358: | Verbindungen der Formel I, wobei Z für CH steht, Y für N steht, X für C-CH₃ steht, R¹ für OCH₂Cl steht und A und R² wie in einer Reihe in Tabelle A definiert sind. |
| | |
| Tabelle A359: | Verbindungen der Formel I, wobei Z für CH steht, Y für N steht, X für C-CH₃ steht, R¹ für OCH₂-OCH₃ steht und A und R² wie in einer Reihe in Tabelle A definiert sind. |
| | |
| Tabelle A360: | Verbindungen der Formel I, wobei Z für CH steht, Y für N steht, X für C-CH₃ steht, R¹ für OCH₂CH₃ steht und A und R² wie in einer Reihe in Tabelle A definiert sind. |
| | |
| Tabelle A361: | Verbindungen der Formel I, wobei Z für CH steht, Y für N steht, X für C-CF₃ steht, R¹ für CH₃ steht und A und R² wie in einer Reihe in Tabelle A definiert sind. |
| | |
| Tabelle A362: | Verbindungen der Formel I, wobei Z für CH steht, Y für N steht, X für C-CF₃ steht, R¹ für C₂H₅ steht und A und R² wie in einer Reihe in Tabelle A definiert sind. |
| | |
| Tabelle A363: | Verbindungen der Formel I, wobei Z für CH steht, Y für N steht, X für C-CF₃ steht, R¹ für CF₃ steht und A und R² wie in einer Reihe in Tabelle A definiert sind. |
| | |
| Tabelle A364: | Verbindungen der Formel I, wobei Z für CH steht, Y für N steht, X für C-CF₃ steht, R¹ für CCl₃ steht und A und R² wie in einer Reihe in Tabelle A definiert sind. |
| | |
| Tabelle A365: | Verbindungen der Formel I, wobei Z für CH steht, Y für N steht, X für C-CF₃ steht, R¹ für F steht und A und R² wie in einer Reihe in Tabelle A definiert sind. |
| | |
| Tabelle A366: | Verbindungen der Formel I, wobei Z für CH steht, Y für N steht, X für C-CF₃ steht, R¹ für Cl steht und A und R² wie in einer Reihe in Tabelle A definiert sind. |
| | |
| Tabelle A367: | Verbindungen der Formel I, wobei Z für CH steht, Y für N steht, X für C-CF₃ steht, R¹ für Br steht und A und R² wie in einer Reihe in Tabelle A definiert sind. |
| | |
| Tabelle A368: | Verbindungen der Formel I, wobei Z für CH steht, Y für N steht, X für C-CF₃ steht, R¹ für I steht und A und R² wie in einer Reihe in Tabelle A definiert sind. |
| | |
| Tabelle A369: | Verbindungen der Formel I, wobei Z für CH steht, Y für N steht, X für C-CF₃ steht, R¹ für OCH₃ steht und A und R² wie in einer Reihe in Tabelle A definiert sind. |
| | |
| Tabelle A370: | Verbindungen der Formel I, wobei Z für CH steht, Y für N steht, X für C-CF₃ steht, R¹ für OCF₃ steht und A und R² wie in einer Reihe in Tabelle A definiert sind. |
| | |
| Tabelle A371: | Verbindungen der Formel I, wobei Z für CH steht, Y für N steht, X für C-CF₃ steht, R¹ für OCCl₃ steht und A und R² wie in einer Reihe in Tabelle A definiert sind. |
| | |
| Tabelle A372: | Verbindungen der Formel I, wobei Z für CH steht, Y für N steht, X für C-CF₃ steht, R¹ für OCHF₂ steht und A und R² wie in einer Reihe in Tabelle A definiert sind. |
| | |
| Tabelle A373: | Verbindungen der Formel I, wobei Z für CH steht, Y für N steht, X für C-CF₃ steht, R¹ für OCCIF₂ steht und A und R² wie in einer Reihe in Tabelle A definiert sind. |
| | |
| Tabelle A374: | Verbindungen der Formel I, wobei Z für CH steht, Y für N steht, X für C-CF₃ steht, R¹ für OCH₂F steht und A und R² wie in einer Reihe in Tabelle A definiert sind. |
| | |
| Tabelle A375: | Verbindungen der Formel I, wobei Z für CH steht, Y für N steht, X für C-CF₃ steht, R¹ für OCHCl₂ steht und A und R² wie in einer Reihe in Tabelle A definiert sind. |
| | |
| Tabelle A376: | Verbindungen der Formel I, wobei Z für CH steht, Y für N steht, X für C-CF₃ steht, R¹ für OCH₂Cl steht und A und R² wie in einer Reihe in Tabelle A definiert sind. |
| | |
| Tabelle A377: | Verbindungen der Formel I, wobei Z für CH steht, Y für N steht, X für C-CF₃ steht, R¹ für OCH₂-OCH₃ steht und A und R² wie in einer Reihe in Tabelle A definiert sind. |
| | |
| Tabelle A378: | Verbindungen der Formel I, wobei Z für CH steht, Y für N steht, X für C-CF₃ steht, R¹ für OCH₂CH₃ steht und A und R² wie in einer Reihe in Tabelle A definiert sind. |
| | |
| Tabelle A379: | Verbindungen der Formel I, wobei Z für CH steht, Y für N steht, X für C-OCH₃ steht, R¹ für CH₃ steht und A und R² wie in einer Reihe in Tabelle A definiert sind. |
| | |
| Tabelle A380: | Verbindungen der Formel I, wobei Z für CH steht, Y für N steht, X für C-OCH₃ steht, R¹ für C₂H₅ steht und A und R² wie in einer Reihe in Tabelle A definiert sind. |
| | |
| Tabelle A381: | Verbindungen der Formel I, wobei Z für CH steht, Y für N steht, X für C-OCH₃ steht, R¹ für CF₃ steht und A und R² wie in einer Reihe in Tabelle A definiert sind. |
| | |
| Tabelle A382: | Verbindungen der Formel I, wobei Z für CH steht, Y für N steht, X für C-OCH₃ steht, R¹ für CCl₃ steht und A und R² wie in einer Reihe in Tabelle A definiert sind. |
| | |
| Tabelle A383: | Verbindungen der Formel I, wobei Z für CH steht, Y für N steht, X für C-OCH₃ steht, R¹ für F steht und A und R² wie in einer Reihe in Tabelle A definiert sind. |
| | |
| Tabelle A384: | Verbindungen der Formel I, wobei Z für CH steht, Y für N steht, X für C-OCH₃ steht, R¹ für Cl steht und A und R² wie in einer Reihe in Tabelle A definiert sind. |
| | |
| Tabelle A385: | Verbindungen der Formel I, wobei Z für CH steht, Y für N steht, X für C-OCH₃ steht, R¹ für Br steht und A und R² wie in einer Reihe in Tabelle A definiert sind. |
| | |
| Tabelle A386: | Verbindungen der Formel I, wobei Z für CH steht, Y für N steht, X für C-OCH₃ steht, R¹ für I steht und A und R² wie in einer Reihe in Tabelle A definiert sind. |
| | |
| Tabelle A387: | Verbindungen der Formel I, wobei Z für CH steht, Y für N steht, X für C-OCH₃ steht, R¹ für OCH₃ steht und A und R² wie in einer Reihe in Tabelle A definiert sind. |
| | |
| Tabelle A388: | Verbindungen der Formel I, wobei Z für CH steht, Y für N steht, X für C-OCH₃ steht, R¹ für OCF₃ steht und A und R² wie in einer Reihe in Tabelle A definiert sind. |
| | |
| Tabelle A389: | Verbindungen der Formel I, wobei Z für CH steht, Y für N steht, X für C-OCH₃ steht, R¹ für OCCl₃ steht und A und R² wie in einer Reihe in Tabelle A definiert sind. |
| | |
| Tabelle A390: | Verbindungen der Formel I, wobei Z für CH steht, Y für N steht, X für C-OCH₃ steht, R¹ für OCHF₂ steht und A und R² wie in einer Reihe in Tabelle A definiert sind. |
| | |
| Tabelle A391: | Verbindungen der Formel I, wobei Z für CH steht, Y für N steht, X für C-OCH₃ steht, R¹ für OCCIF₂ steht und A und R² wie in einer Reihe in Tabelle A definiert sind. |
| | |
| Tabelle A392: | Verbindungen der Formel I, wobei Z für CH steht, Y für N steht, X für C-OCH₃ steht, R¹ für OCH₂F steht und A und R² wie in einer Reihe in Tabelle A definiert sind. |
| | |
| Tabelle A393: | Verbindungen der Formel I, wobei Z für CH steht, Y für N steht, X für C-OCH₃ steht, R¹ für OCHCl₂ steht und A und R² wie in einer Reihe in Tabelle A definiert sind. |
| | |
| Tabelle A394: | Verbindungen der Formel I, wobei Z für CH steht, Y für N steht, X für C-OCH₃ steht, R¹ für OCH₂Cl steht und A und R² wie in einer Reihe in Tabelle A definiert sind. |
| | |
| Tabelle A395: | Verbindungen der Formel I, wobei Z für CH steht, Y für N steht, X für C-OCH₃ steht, R¹ für OCH₂-OCH₃ steht und A und R² wie in einer Reihe in Tabelle A definiert sind. |
| | |
| Tabelle A396: | Verbindungen der Formel I, wobei Z für CH steht, Y für N steht, X für C-OCH₃ steht, R¹ für OCH₂CH₃ steht und A und R² wie in einer Reihe in Tabelle A definiert sind. |
| | |
| Tabelle A397: | Verbindungen der Formel I, wobei Z für CH steht, Y für N steht, X für C-Cl₃ steht, R¹ für CH₃ steht und A und R² wie in einer Reihe in Tabelle A definiert sind. |
| | |
| Tabelle A398: | Verbindungen der Formel I, wobei Z für CH steht, Y für N steht, X für C-Cl₃ steht, R¹ für C₂H₅ steht und A und R² wie in einer Reihe in Tabelle A definiert sind. |
| | |
| Tabelle A399: | Verbindungen der Formel I, wobei Z für CH steht, Y für N steht, X für C-Cl₃ steht, R¹ für CF₃ steht und A und R² wie in einer Reihe in Tabelle A definiert sind. |
| | |
| Tabelle A400: | Verbindungen der Formel I, wobei Z für CH steht, Y für N steht, X für C-Cl₃ steht, R¹ für CCl₃ steht und A und R² wie in einer Reihe in Tabelle A definiert sind. |
| | |
| Tabelle A401: | Verbindungen der Formel I, wobei Z für CH steht, Y für N steht, X für C-Cl₃ steht, R¹ für F steht und A und R² wie in einer Reihe in Tabelle A definiert sind. |
| | |
| Tabelle A402: | Verbindungen der Formel I, wobei Z für CH steht, Y für N steht, X für C-Cl₃ steht, R¹ für Cl steht und A und R² wie in einer Reihe in Tabelle A definiert sind. |
| | |
| Tabelle A403: | Verbindungen der Formel I, wobei Z für CH steht, Y für N steht, X für C-Cl₃ steht, R¹ für Br steht und A und R² wie in einer Reihe in Tabelle A definiert sind. |
| | |
| Tabelle A404: | Verbindungen der Formel I, wobei Z für CH steht, Y für N steht, X für C-Cl₃ steht, R¹ für I steht und A und R² wie in einer Reihe in Tabelle A definiert sind. |
| | |
| Tabelle A405: | Verbindungen der Formel I, wobei Z für CH steht, Y für N steht, X für C-Cl₃ steht, R¹ für OCH₃ steht und A und R² wie in einer Reihe in Tabelle A definiert sind. |
| | |
| Tabelle A406: | Verbindungen der Formel I, wobei Z für CH steht, Y für N steht, X für C-Cl₃ steht, R¹ für OCF₃ steht und A und R² wie in einer Reihe in Tabelle A definiert sind. |
| | |
| Tabelle A407: | Verbindungen der Formel I, wobei Z für CH steht, Y für N steht, X für C-Cl₃ steht, R¹ für OCCl₃ steht und A und R² wie in einer Reihe in Tabelle A definiert sind. |
| | |
| Tabelle A408: | Verbindungen der Formel I, wobei Z für CH steht, Y für N steht, X für C-Cl₃ steht, R¹ für OCHF₂ steht und A und R² wie in einer Reihe in Tabelle A definiert sind. |
| | |
| Tabelle A409: | Verbindungen der Formel I, wobei Z für CH steht, Y für N steht, X für C-Cl₃ steht, R¹ für OCCIF₂ steht und A und R² wie in einer Reihe in Tabelle A definiert sind. |
| | |
| Tabelle A410: | Verbindungen der Formel I, wobei Z für CH steht, Y für N steht, X für C-Cl₃ steht, R¹ für OCH₂F steht und A und R² wie in einer Reihe in Tabelle A definiert sind. |
| | |
| Tabelle A411: | Verbindungen der Formel I, wobei Z für CH steht, Y für N steht, X für C-Cl₃ steht, R¹ für OCHCl₂ steht und A und R² wie in einer Reihe in Tabelle A definiert sind. |
| | |
| Tabelle A412: | Verbindungen der Formel I, wobei Z für CH steht, Y für N steht, X für C-Cl₃ steht, R¹ für OCH₂Cl steht und A und R² wie in einer Reihe in Tabelle A definiert sind. |
| | |
| Tabelle A413: | Verbindungen der Formel I, wobei Z für CH steht, Y für N steht, X für C-Cl₃ steht, R¹ für OCH₂-OCH₃ steht und A und R² wie in einer Reihe in Tabelle A definiert sind. |
| | |
| Tabelle A414: | Verbindungen der Formel I, wobei Z für CH steht, Y für N steht, X für C-Cl₃ steht, R¹ für OCH₂CH₃ steht und A und R² wie in einer Reihe in Tabelle A definiert sind. |
| | |
| Tabelle A415: | Verbindungen der Formel I, wobei Z für CH steht, Y für N steht, X für C-C₂H₅ steht, R¹ für CH₃ steht und A und R² wie in einer Reihe in Tabelle A definiert sind. |
| | |
| Tabelle A416: | Verbindungen der Formel I, wobei Z für CH steht, Y für N steht, X für C-C₂H₅ steht, R¹ für C₂H₅ steht und A und R² wie in einer Reihe in Tabelle A definiert sind. |
| | |
| Tabelle A417: | Verbindungen der Formel I, wobei Z für CH steht, Y für N steht, X für C-C₂H₅ steht, R¹ für CF₃ steht und A und R² wie in einer Reihe in Tabelle A definiert sind. |
| | |
| Tabelle A418: | Verbindungen der Formel I, wobei Z für CH steht, Y für N steht, X für C-C₂H₅ steht, R¹ für CCl₃ steht und A und R² wie in einer Reihe in Tabelle A definiert sind. |
| | |
| Tabelle A419: | Verbindungen der Formel I, wobei Z für CH steht, Y für N steht, X für C-C₂H₅ steht, R¹ für F steht und A und R² wie in einer Reihe in Tabelle A definiert sind. |
| | |
| Tabelle A420: | Verbindungen der Formel I, wobei Z für CH steht, Y für N steht, X für C-C₂H₅ steht, R¹ für Cl steht und A und R² wie in einer Reihe in Tabelle A definiert sind. |
| | |
| Tabelle A421: | Verbindungen der Formel I, wobei Z für CH steht, Y für N steht, X für C-C₂H₅ steht, R¹ für Br steht und A und R² wie in einer Reihe in Tabelle A definiert sind. |
| | |
| Tabelle A422: | Verbindungen der Formel I, wobei Z für CH steht, Y für N steht, X für C-C₂H₅ steht, R¹ für I steht und A und R² wie in einer Reihe in Tabelle A definiert sind. |
| | |
| Tabelle A423: | Verbindungen der Formel I, wobei Z für CH steht, Y für N steht, X für C-C₂H₅ steht, R¹ für OCH₃ steht und A und R² wie in einer Reihe in Tabelle A definiert sind. |
| | |
| Tabelle A424: | Verbindungen der Formel I, wobei Z für CH steht, Y für N steht, X für C-C₂H₅ steht, R¹ für OCF₃ steht und A und R² wie in einer Reihe in Tabelle A definiert sind. |
| | |
| Tabelle A425: | Verbindungen der Formel I, wobei Z für CH steht, Y für N steht, X für C-C₂H₅ steht, R¹ für OCCl₃ steht und A und R² wie in einer Reihe in Tabelle A definiert sind. |
| | |
| Tabelle A426: | Verbindungen der Formel I, wobei Z für CH steht, Y für N steht, X für C-C₂H₅ steht, R¹ für OCHF₂ steht und A und R² wie in einer Reihe in Tabelle A definiert sind. |
| | |
| Tabelle A427: | Verbindungen der Formel I, wobei Z für CH steht, Y für N steht, X für C-C₂H₅ steht, R¹ für OCCIF₂ steht und A und R² wie in einer Reihe in Tabelle A definiert sind. |
| | |
| Tabelle A428: | Verbindungen der Formel I, wobei Z für CH steht, Y für N steht, X für C-C₂H₅ steht, R¹ für OCH₂F steht und A und R² wie in einer Reihe in Tabelle A definiert sind. |
| | |
| Tabelle A429: | Verbindungen der Formel I, wobei Z für CH steht, Y für N steht, X für C-C₂H₅ steht, R¹ für OCHCl₂ steht und A und R² wie in einer Reihe in Tabelle A definiert sind. |
| | |
| Tabelle A430: | Verbindungen der Formel I, wobei Z für CH steht, Y für N steht, X für C-C₂H₅ steht, R¹ für OCH₂Cl steht und A und R² wie in einer Reihe in Tabelle A definiert sind. |
| | |
| Tabelle A431: | Verbindungen der Formel I, wobei Z für CH steht, Y für N steht, X für C-C₂H₅ steht, R¹ für OCH₂-OCH₃ steht und A und R² wie in einer Reihe in Tabelle A definiert sind. |
| | |
| Tabelle A432: | Verbindungen der Formel I, wobei Z für CH steht, Y für N steht, X für C-C₂H₅ steht, R¹ für OCH₂CH₃ steht und A und R² wie in einer Reihe in Tabelle A definiert sind. |
| | |
| Tabelle A433: | Verbindungen der Formel I, wobei Z für CH steht, Y für N steht, X für C-OC₂H₅ steht, R¹ für CH₃ steht und A und R² wie in einer Reihe in Tabelle A definiert sind. |
| | |
| Tabelle A434: | Verbindungen der Formel I, wobei Z für CH steht, Y für N steht, X für C-OC₂H₅ steht, R¹ für C₂H₅ steht und A und R² wie in einer Reihe in Tabelle A definiert sind. |
| | |
| Tabelle A435: | Verbindungen der Formel I, wobei Z für CH steht, Y für N steht, X für C-OC₂H₅ steht, R¹ für CF₃ steht und A und R² wie in einer Reihe in Tabelle A definiert sind. |
| | |
| Tabelle A436: | Verbindungen der Formel I, wobei Z für CH steht, Y für N steht, X für C-OC₂H₅ steht, R¹ für CCl₃ steht und A und R² wie in einer Reihe in Tabelle A definiert sind. |
| | |
| Tabelle A437: | Verbindungen der Formel I, wobei Z für CH steht, Y für N steht, X für C-OC₂H₅ steht, R¹ für F steht und A und R² wie in einer Reihe in Tabelle A definiert sind. |
| | |
| Tabelle A438: | Verbindungen der Formel I, wobei Z für CH steht, Y für N steht, X für C-OC₂H₅ steht, R¹ für Cl steht und A und R² wie in einer Reihe in Tabelle A definiert sind. |
| | |
| Tabelle A439: | Verbindungen der Formel I, wobei Z für CH steht, Y für N steht, X für C-OC₂H₅ steht, R¹ für Br steht und A und R² wie in einer Reihe in Tabelle A definiert sind. |
| | |
| Tabelle A440: | Verbindungen der Formel I, wobei Z für CH steht, Y für N steht, X für C-OC₂H₅ steht, R¹ für I steht und A und R² wie in einer Reihe in Tabelle A definiert sind. |
| | |
| Tabelle A441: | Verbindungen der Formel I, wobei Z für CH steht, Y für N steht, X für C-OC₂H₅ steht, R¹ für OCH₃ steht und A und R² wie in einer Reihe in Tabelle A definiert sind. |
| | |
| Tabelle A442: | Verbindungen der Formel I, wobei Z für CH steht, Y für N steht, X für C-OC₂H₅ steht, R¹ für OCF₃ steht und A und R² wie in einer Reihe in Tabelle A definiert sind. |
| | |
| Tabelle A443: | Verbindungen der Formel I, wobei Z für CH steht, Y für N steht, X für C-OC₂H₅ steht, R¹ für OCCl₃ steht und A und R² wie in einer Reihe in Tabelle A definiert sind. |
| | |
| Tabelle A444: | Verbindungen der Formel I, wobei Z für CH steht, Y für N steht, X für C-OC₂H₅ steht, R¹ für OCHF₂ steht und A und R² wie in einer Reihe in Tabelle A definiert sind. |
| | |
| Tabelle A445: | Verbindungen der Formel I, wobei Z für CH steht, Y für N steht, X für C-OC₂H₅ steht, R¹ für OCCIF₂ steht und A und R² wie in einer Reihe in Tabelle A definiert sind. |
| | |
| Tabelle A446: | Verbindungen der Formel I, wobei Z für CH steht, Y für N steht, X für C-OC₂H₅ steht, R¹ für OCH₂F steht und A und R² wie in einer Reihe in Tabelle A definiert sind. |
| | |
| Tabelle A447: | Verbindungen der Formel I, wobei Z für CH steht, Y für N steht, X für C-OC₂H₅ steht, R¹ für OCHCl₂ steht und A und R² wie in einer Reihe in Tabelle A definiert sind. |
| | |
| Tabelle A448: | Verbindungen der Formel I, wobei Z für CH steht, Y für N steht, X für C-OC₂H₅ steht, R¹ für OCH₂Cl steht und A und R² wie in einer Reihe in Tabelle A definiert sind. |
| | |
| Tabelle A449: | Verbindungen der Formel I, wobei Z für CH steht, Y für N steht, X für C-OC₂H₅ steht, R¹ für OCH₂-OCH₃ steht und A und R² wie in einer Reihe in Tabelle A definiert sind. |
| | |
| Tabelle A450: | Verbindungen der Formel I, wobei Z für CH steht, Y für N steht, X für C-OC₂H₅ steht, R¹ für OCH₂CH₃ steht und A und R² wie in einer Reihe in Tabelle A definiert sind. |
| | |
| Tabelle 451 bis 666: | Verbindungen der Formel I, wobei X für C-Cl steht, A und R² wie in einer Reihe in Tabelle A definiert sind; und Y, Z und R¹ die Bedeutung der Tabellen 19 bis 234 haben. |
| | |
| Tabelle 667 bis 882: | Verbindungen der Formel I, wobei X für C-Br steht, A und R² wie in einer Reihe in Tabelle A definiert sind; und Y, Z und R¹ die Bedeutung der Tabellen 19 bis 234 haben. |
| | |
| Tabelle 883 bis 1098: | Verbindungen der Formel I, wobei X für C-F steht, A und R² wie in einer Reihe in Tabelle A definiert sind; und Y, Z und R¹ die Bedeutung der Tabellen 19 bis 234 haben. |
| | |
| Tabelle 1099 bis 1314: | Verbindungen der Formel I, wobei X für C-I steht, A und R² wie in einer Reihe in Tabelle A definiert sind; und Y, Z und R¹ die Bedeutung der Tabellen 19 bis 234 haben. |
| | |
| Tabelle 1315 bis 1530: | Verbindungen der Formel I, wobei X für C-NH₂ steht, A und R² wie in einer Reihe in Tabelle A definiert sind; und Y, Z und R¹ die Bedeutung der Tabellen 19 bis 234 haben. |
| | |
| Tabelle 1531 bis 1746: | Verbindungen der Formel I, wobei X für C-N(CH₃)₂ steht, A und R² wie in einer Reihe in Tabelle A definiert sind; und Y, Z und R¹ die Bedeutung der Tabellen 19 bis 234 haben. |
| | |
| Tabelle 1747 bis 1962: | Verbindungen der Formel I, wobei X für C-CH₃ steht, A und R² wie in einer Reihe in Tabelle A definiert sind; und Y, Z und R¹ die Bedeutung der Tabellen 19 bis 234 haben. |
| | |
| Tabelle 1963 bis 2178: | Verbindungen der Formel I, wobei X für C-C₂H₅ steht, A und R² wie in einer Reihe in Tabelle A definiert sind; und Y, Z und R¹ die Bedeutung der Tabellen 19 bis 234 haben. |
| | |
| Tabelle 2179 bis 2394: | Verbindungen der Formel I, wobei X für C-OCH₃ steht, A und R² wie in einer Reihe in Tabelle A definiert sind; und Y, Z und R¹ die Bedeutung der Tabellen 19 bis 234 haben. |
| | |
| Tabelle 2395 bis 2610: | Verbindungen der Formel I, wobei X für C-OC₂H₅ steht, A und R² wie in einer Reihe in Tabelle A definiert sind; und Y, Z und R¹ die Bedeutung der Tabellen 19 bis 234 haben. |
| | |
| Tabelle 2611 bis 2826: | Verbindungen der Formel I, wobei X für C-CF₃ steht, A und R² wie in einer Reihe in Tabelle A definiert sind; und Y, Z und R¹ die Bedeutung der Tabellen 19 bis 234 haben. |
| | |
| Tabelle 2827 bis 3042: | Verbindungen der Formel I, wobei X für C-CCl₃ steht, A und R² wie in einer Reihe in Tabelle A definiert sind; und Y, Z und R¹ die Bedeutung der Tabellen 19 bis 234 haben. |
| | |
| Tabelle 3043 bis 3258: | Verbindungen der Formel I, wobei Z für C-Cl steht, A und R² wie in einer Reihe in Tabelle A definiert sind; und X, Y und R¹ die Bedeutung der Tabellen 235 bis 450 haben. |
| | |
| Tabelle 3259 bis 3474: | Verbindungen der Formel I, wobei Z für C-Br steht, A und R² wie in einer Reihe in Tabelle A definiert sind; und X, Y und R¹ die Bedeutung der Tabellen 235 bis 450 haben. |
| | |
| Tabelle 3475 bis 3690: | Verbindungen der Formel I, wobei Z für C-F steht, A und R² wie in einer Reihe in Tabelle A definiert sind; und X, Y und R¹ die Bedeutung der Tabellen 235 bis 450 haben. |
| | |
| Tabelle 3691 bis 3906: | Verbindungen der Formel I, wobei Z für C-I steht, A und R² wie in einer Reihe in Tabelle A definiert sind; und X, Y und R¹ die Bedeutung der Tabellen 235 bis 450 haben. |
| Tabelle 3907 bis 4122: | Verbindungen der Formel I, wobei Z für C-NH₂ steht, A und R² wie in einer Reihe in Tabelle A definiert sind; und X, Y und R¹ die Bedeutung der Tabellen 235 bis 450 haben. |
| | |
| Tabelle 4123 bis 4338: | Verbindungen der Formel I, wobei Z für C-N(CH₃)₂ steht, A und R² wie in einer Reihe in Tabelle A definiert sind; und X, Y und R¹ die Bedeutung der Tabellen 235 bis 450 haben. |
| | |
| Tabelle 4339 bis 4554: | Verbindungen der Formel I, wobei Z für C-CH₃ steht, A und R² wie in einer Reihe in Tabelle A definiert sind; und X, Y und R¹ die Bedeutung der Tabellen 235 bis 450 haben. |
| | |
| Tabelle 4555 bis 4770: | Verbindungen der Formel I, wobei Z für C-C₂H₅ steht, A und R² wie in einer Reihe in Tabelle A definiert sind; und X, Y und R¹ die Bedeutung der Tabellen 235 bis 450 haben. |
| | |
| Tabelle 4771 bis 4986: | Verbindungen der Formel I, wobei Z für C-OCH₃ steht, A und R² wie in einer Reihe in Tabelle A definiert sind; und X, Y und R¹ die Bedeutung der Tabellen 235 bis 450 haben. |
| | |
| Tabelle 4987 bis 5202: | Verbindungen der Formel I, wobei Z für C-OC₂H₅ steht, A und R² wie in einer Reihe in Tabelle A definiert sind; und X, Y und R¹ die Bedeutung der Tabellen 235 bis 450 haben. |
| | |
| Tabelle 5203 bis 5418: | Verbindungen der Formel I, wobei Z für C-CF₃ steht, A und R² wie in einer Reihe in Tabelle A definiert sind; und X, Y und R¹ die Bedeutung der Tabellen 235 bis 450 haben. |
| | |
| Tabelle 5419 bis 5634: | Verbindungen der Formel I, wobei Z für C-CCl₃ steht, A und R² wie in einer Reihe in Tabelle A definiert sind; und X, Y und R¹ die Bedeutung der Tabellen 235 bis 450 haben. |
| | |
| Tabelle 5635 bis 11268: | Verbindungen der Formel I, wobei Y für N-O teht, A und R² wie in einer Reihe in Tabelle A definiert sind; und X, Z und R¹ die Bedeutung der Tabellen 1 bis 5634 haben. |

**Tabelle A:**

| | **R²** | **A** |
|---|---|---|
| **1.** | H | H |
| **2.** | CH₃ | H |
| **3.** | CH₃CH₂- | H |
| **4.** | (CH₃)₂CH- | H |
| **5.** | CH₃CH₂CH₂- | H |
| **6.** | n-C₄H₉ | H |
| **7.** | (CH₃)₃C- | H |
| **8.** | (CH₃)₂CH-CH₂- | H |
| **9.** | n-C₅H₁₁ | H |
| **10.** | (CH₃)₂CH-CH₂-CH₂- | H |
| **11.** | (C₂H₅)₂-CH- | H |
| **12.** | (CH₃)₃C-CH₂- | H |
| **13.** | (CH₃)₃C-CH₂-CH₂- | H |
| **14.** | C₂H₅CH(CH₃)-CH₂- | H |
| **15.** | CH₃-CH₂-C(CH₃)₂- | H |
| **16.** | (CH₃)₂CH-CH(CH₃)- | H |
| **17.** | (CH₃)₃C-CH(CH₃)- | H |
| **18.** | (CH₃)₂CH-CH₂-CH(CH₃)- | H |
| **19.** | CH₃-CH₂-C(CH₃)(C₂H₅)- | H |
| **20.** | CH₃-CH₂-CH₂-C(CH₃)₂- | H |
| **21.** | C₂H₅-CH₂-CH(CH₃)-CH₂- | H |
| **22.** | Cyclopropyl | H |
| **23.** | Cyclopropyl-CH₂- | H |
| **24.** | Cyclopropyl-CH(CH₃)- | H |
| **25.** | Cyclobutyl | H |
| **26.** | Cyclopentyl | H |
| **27.** | Cyclohexyl | H |
| **28.** | HC≡C-CH₂- | H |
| **29.** | HC≡C-CH(CH₃)- | H |
| **30.** | HC≡C-C(CH₃)₂- | H |
| **31.** | HC≡C-C(CH₃)(C₂H₅)- | H |
| **32.** | HC≡C-C(CH₃)(C₃H₇)- | H |
| **33.** | CH₂=CH-CH₂- | H |
| **34.** | H₂C=CH-CH(CH₃)- | H |
| **35.** | H₂C=CH-C(CH₃)₂- | H |
| **36.** | H₂C=CH-C(C₂H₅)(CH₃)- | H |
| **37.** | C₆H₅-CH₂- | H |
| **38.** | 4-(CH₃)₃C-C₆H₄-CH₂- | H |
| **39.** | C₆H₅-CH₂- | H |
| **40.** | 4-(CH₃)₃C-C₆H₄-CH₂- | H |
| **41.** | 4-Cl-C₆H₄-CH₂- | H |
| **42.** | 3-(CH₃O)-C₆H₄-CH₂- | H |
| **43.** | 4-(CH₃O)-C₆H₄-CH₂- | H |
| **44.** | 2-(CH₃O)-C₆H₄-CH₂- | H |
| **45.** | 3-Cl-C₆H₄-CH₂- | H |
| **46.** | 2-Cl-C₆H₄-CH₂- | H |
| **47.** | 4-(F₃C)-C₆H₄-CH₂- | H |
| **48.** | NC-CH₂- | H |
| **49.** | NC-CH₂-CH₂- | H |
| **50.** | NC-CH₂-CH(CH₃)- | H |
| **51.** | NC-CH₂-C(CH₃)₂- | H |
| **52.** | NC-CH₂-CH₂-CH₂- | H |
| **53.** | FH₂C-CH₂- | H |
| **54.** | CIH₂C-CH₂- | H |
| **55.** | BrH₂C-CH₂- | H |
| **56.** | FH₂C-CH(CH₃)- | H |
| **57.** | CIH₂C-CH(CH₃)- | H |
| **58.** | BrH₂C-CH(CH₃)-CH₃ | H |
| **59.** | F₂HC-CH₂- | H |
| **60.** | F₃C-CH₂- | H |
| **61.** | FH₂C-CH₂-CH₂- | H |
| **62.** | CIH₂C-CH₂-CH₂- | H |
| **63.** | BrH₂C-CH₂-CH₂- | H |
| **64.** | F₂HC-CH₂-CH₂- | H |
| **65.** | F₃C-CH₂-CH₂- | H |
| **66.** | CH₃-O-CH₂-CH₂- | H |
| **67.** | CH₃-S-CH₂-CH₂- | H |
| **68.** | CH₃-SO₂-CH₂-CH₂- | H |
| **69.** | C₂H₅-O-CH₂-CH₂- | H |
| **70.** | (CH₃)₂CH-O-CH₂-CH₂- | H |
| **71.** | C₂H₅-S-CH₂-CH₂- | H |
| **72.** | C₂H₅-SO₂-CH₂-CH₂- | H |
| **73.** | (CH₃)₂N-CH₂-CH₂- | H |
| **74.** | (C₂H₅)₂N-CH₂-CH₂- | H |
| **75.** | [(CH₃)₂CH]₂N-CH₂-CH₂- | H |
| **76.** | CH₃-O-CH₂-CH(CH₃)- | H |
| **77.** | CH₃-S-CH₂-CH(CH₃)- | H |
| **78.** | CH₃-SO₂-CH₂-CH(CH₃)- | H |
| **79.** | C₂H₅-O-CH₂-CH(CH₃)- | H |
| **80.** | C₂H₅-S-CH₂-CH(CH₃)- | H |
| **81.** | C₂H₅-SO₂-CH₂-CH(CH₃)- | H |
| **82.** | (CH₃)₂N-CH₂-CH(CH₃)- | H |
| **83.** | (C₂H₅)₂-N-CH₂-CH(CH₃)- | H |
| **84.** | [(CH₃)₂CH]₂N-CH₂-CH(CH₃)- | H |
| **85.** | CH₃-O-CH(CH₃)-CH₂- | H |
| **86.** | CH₃-S-CH(CH₃)-CH₂- | H |
| **87.** | CH₃-SO₂-CH(CH₃)-CH₂ | H |
| **88.** | C₂H₅-O-CH(CH₃)-CH₂- | H |
| **89.** | C₂H₅-S-CH(CH₃)-CH₂- | H |
| **90.** | C₂H₅-SO₂-CH(CH₃)-CH₂ | H |
| **91.** | (CH₃)₂-N-CH(CH₃)-CH₂- | H |
| **92.** | (C₂H₅)₂N-CH(CH₃)-CH₂- | H |
| **93.** | [(CH₃)₂CH]₂N-CH(CH₃)-CH₂- | H |
| **94.** | CH₃-O-CH₂-CH₂-CH₂- | H |
| **95.** | CH₃-S-CH₂-CH₂-CH₂- | H |
| **96.** | CH₃-SO₂-CH₂-CH₂-CH₂- | H |
| **97.** | C₂H₅-O-CH₂-CH₂-CH₂- | H |
| **98.** | C₂H₅-S-CH₂-CH₂-CH₂- | H |
| **99.** | C₂H₅-SO₂-CH₂-CH₂-CH₂. | H |
| **100.** | (CH₃)₂N-CH₂-CH₂-CH₂- | H |
| **101.** | (C₂H₅)₂N-CH₂-CH₂-CH₂- | H |
| **102.** | CH₃-O-CH₂-C(CH₃)₂- | H |
| **103.** | CH₃-S-CH₂-C(CH₃)₂- | H |
| **104.** | CH₃-SO₂-CH₂-C(CH₃)₂- | H |
| **105.** | C₂H₅-O-CH₂-C(CH₃)₂- | H |
| **106.** | C₂H₅-S-CH₂-C(CH₃)₂- | H |
| **107.** | C₂H₅-SO₂-CH₂-C(CH₃)₂- | H |
| **108.** | (CH₃)₂N-CH₂-C(CH₃)₂- | H |
| **109.** | (C₂H₅)₂N-CH₂-C(CH₃)₂- | H |
| **110.** | [(CH₃)₂CH]₂N-CH₂-C(CH₃)₂- | H |
| **111.** | CI-CH₂-C≡C-CH₂- | H |
| **112.** | CH₃-O-C(O)-CH₂ | H |
| **113.** | C₂H₅-O-C(O)-CH₂ | H |
| **114.** | CH₃-O-C(O)-CH(CH₃)- | H |
| **115.** | C₂H₅-O-C(O)-CH(CH₃)- | H |
| **116.** | (CH₃O)₂CH-CH₂- | H |
| **117.** | (C₂H₅O)₂CH-CH₂- | H |
| **118.** | C(=O)CH₃ | H |
| **119.** | C(=O)CH₂-CH₃- | H |
| **120.** | C(=O)CF₃ | H |
| **121.** | C(=O)CCl₃ | H |
| **122.** | C(=O)CH₂-CH₂-CH₃ | H |
| **123.** | C(=O)C-CH₃)₃ | H |
| **124.** | C(=O)CH₂-C₆H₅ | H |
| **125.** | C(=O)CH₂-CH₂-CH₃ | H |
| **126.** | H | CH₃ |
| **127.** | CH₃ | CH₃ |
| **128.** | CH₃CH₂- | CH₃ |
| **129.** | (CH₃)₂CH- | CH₃ |
| **130.** | CH₃CH₂CH₂- | CH₃ |
| **131.** | n-C₄H₉ | CH₃ |
| **132.** | (CH₃)₃C- | CH₃ |
| **133.** | (CH₃)₂CH-CH₂- | CH₃ |
| **134.** | n-C₅H₁₁ | CH₃ |
| **135.** | (CH₃)₂CH-CH₂-CH₂- | CH₃ |
| **136.** | (C₂H₅)₂-CH- | CH₃ |
| **137.** | (CH₃)₃C-CH₂- | CH₃ |
| **138.** | (CH₃)₃C-CH₂-CH₂- | CH₃ |
| **139.** | C₂H₅CH(CH₃)-CH₂- | CH₃ |
| **140.** | CH₃-CH₂-C(CH₃)₂- | CH₃ |
| **141.** | (CH₃)₂CH-CH(CH₃)- | CH₃ |
| **142.** | (CH₃)₃C-CH(CH₃)- | CH₃ |
| **143.** | (CH₃)₂CH-CH₂-CH(CH₃)- | CH₃ |
| **144.** | CH₃-CH₂-C(CH₃)(C₂H₅)- | CH₃ |
| **145.** | CH₃-CH₂-CH₂-C(CH₃)₂- | CH₃ |
| **146.** | C₂H₅-CH₂-CH(CH₃)-CH₂- | CH₃ |
| **147.** | Cyclopropyl | CH₃ |
| **148.** | Cyclopropyl-CH₂- | CH₃ |
| **149.** | Cyclopropyl-CH(CH₃)- | CH₃ |
| **150.** | Cyclobutyl | CH₃ |
| **151.** | Cyclopentyl | CH₃ |
| **152.** | Cyclohexyl | CH₃ |
| **153.** | HC≡C-CH₂- | CH₃ |
| **154.** | HC≡C-CH(CH₃)- | CH₃ |
| **155.** | HC≡C-C(CH₃)₂- | CH₃ |
| **156.** | HC≡C-C(CH₃)(C₂H₅)- | CH₃ |
| **157.** | HC≡C-C(CH₃)(C₃H₇)- | CH₃ |
| **158.** | CH₂=CH-CH₂- | CH₃ |
| **159.** | H₂C=CH-CH(CH₃)- | CH₃ |
| **160.** | H₂C=CH-C(CH₃)₂- | CH₃ |
| **161.** | H₂C=CH-C(C₂H₅)(CH₃)- | CH₃ |
| **162.** | C₆H₅-CH₂- | CH₃ |
| **163.** | 4-(CH₃)₃C-C₆H₄-CH₂- | CH₃ |
| **164.** | C₆H₅-CH₂- | CH₃ |
| **165.** | 4-(CH₃)₃C-C₆H₄-CH₂- | CH₃ |
| **166.** | 4-Cl-C₆H₄-CH₂- | CH₃ |
| **167.** | 3-(CH₃O)-C₆H₄-CH₂- | CH₃ |
| **168.** | 4-(CH₃O)-C₆H₄-CH₂- | CH₃ |
| **169.** | 2-(CH₃O)-C₆H₄-CH₂- | CH₃ |
| **170.** | 3-Cl-C₆H₄-CH₂- | CH₃ |
| **171.** | 2-Cl-C₆H₄-CH₂- | CH₃ |
| **172.** | 4-(F₃C)-C₆H₄-CH₂- | CH₃ |
| **173.** | NC-CH₂- | CH₃ |
| **174.** | NC-CH₂-CH₂- | CH₃ |
| **175.** | NC-CH₂-CH(CH₃)- | CH₃ |
| **176.** | NC-CH₂-C(CH₃)₂- | CH₃ |
| **177.** | NC-CH₂-CH₂-CH₂- | CH₃ |
| **178.** | FH₂C-CH₂- | CH₃ |
| **179.** | CIH₂C-CH₂- | CH₃ |
| **180.** | BrH₂C-CH₂- | CH₃ |
| **181.** | FH₂C-CH(CH₃)- | CH₃ |
| **182.** | CIH₂C-CH(CH₃)- | CH₃ |
| **183.** | BrH₂C-CH(CH₃)-CH₃ | CH₃ |
| **184.** | F₂HC-CH₂- | CH₃ |
| **185.** | F₃C-CH₂- | CH₃ |
| **186.** | FH₂C-CH₂-CH₂- | CH₃ |
| **187.** | CIH₂C-CH₂-CH₂- | CH₃ |
| **188.** | BrH₂C-CH₂-CH₂- | CH₃ |
| **189.** | F₂HC-CH₂-CH₂- | CH₃ |
| **190.** | F₃C-CH₂-CH₂- | CH₃ |
| **191.** | CH₃-O-CH₂-CH₂- | CH₃ |
| **192.** | CH₃-S-CH₂-CH₂- | CH₃ |
| **193.** | CH₃-SO₂-CH₂-CH₂- | CH₃ |
| **194.** | C₂H₅-O-CH₂-CH₂- | CH₃ |
| **195.** | (CH₃)₂CH-O-CH₂-CH₂- | CH₃ |
| **196.** | C₂H₅-S-CH₂-CH₂- | CH₃ |
| **197.** | C₂H₅-SO₂-CH₂-CH₂- | CH₃ |
| **198.** | (CH₃)₂N-CH₂-CH₂- | CH₃ |
| **199.** | (C₂H₅)₂N-CH₂-CH₂- | CH₃ |
| **200.** | [(CH₃)₂CH]₂N-CH₂-CH₂- | CH₃ |
| **201.** | CH₃-O-CH₂-CH(CH₃)- | CH₃ |
| **202.** | CH₃-S-CH₂-CH(CH₃)- | CH₃ |
| **203.** | CH₃-SO₂-CH₂-CH(CH₃)- | CH₃ |
| **204.** | C₂H₅-O-CH₂-CH(CH₃)- | CH₃ |
| **205.** | C₂H₅-S-CH₂-CH(CH₃)- | CH₃ |
| **206.** | C₂H₅-SO₂-CH₂-CH(CH₃)- | CH₃ |
| **207.** | (CH₃)₂N-CH₂-CH(CH₃)- | CH₃ |
| **208.** | (C₂H₅)₂-N-CH₂-CH(CH₃)- | CH₃ |
| **209.** | [(CH₃)₂CH]₂N-CH₂-CH(CH₃)- | CH₃ |
| **210.** | CH₃-O-CH(CH₃)-CH₂- | CH₃ |
| **211.** | CH₃-S-CH(CH₃)-CH₂- | CH₃ |
| **212.** | CH₃-SO₂-CH(CH₃)-CH₂ | CH₃ |
| **213.** | C₂H₅-O-CH(CH₃)-CH₂- | CH₃ |
| **214.** | C₂H₅-S-CH(CH₃)-CH₂- | CH₃ |
| **215.** | C₂H₅-SO₂-CH(CH₃)-CH₂ | CH₃ |
| **216.** | (CH₃)₂-N-CH(CH₃)-CH₂- | CH₃ |
| **217.** | (C₂H₅)₂N-CH(CH₃)-CH₂- | CH₃ |
| **218.** | [(CH₃)₂CH]₂N-CH(CH₃)-CH₂- | CH₃ |
| **219.** | CH₃-O-CH₂-CH₂-CH₂- | CH₃ |
| **220.** | CH₃-S-CH₂-CH₂-CH₂- | CH₃ |
| **221.** | CH₃-SO₂-CH₂-CH₂-CH₂- | CH₃ |
| **222.** | C₂H₅-O-CH₂-CH₂-CH₂- | CH₃ |
| **223.** | C₂H₅-S-CH₂-CH₂-CH₂- | CH₃ |
| **224.** | C₂H₅-SO₂-CH₂-CH₂-CH₂. | CH₃ |
| **225.** | (CH₃)₂N-CH₂-CH₂-CH₂- | CH₃ |
| **226.** | (C₂H₅)₂N-CH₂-CH₂-CH₂- | CH₃ |
| **227.** | CH₃-O-CH₂-C(CH₃)₂- | CH₃ |
| **228.** | CH₃-S-CH₂-C(CH₃)₂- | CH₃ |
| **229.** | CH₃-SO₂-CH₂-C(CH₃)₂- | CH₃ |
| **230.** | C₂H₅-O-CH₂-C(CH₃)₂- | CH₃ |
| **231.** | C₂H₅-S-CH₂-C(CH₃)₂- | CH₃ |
| **232.** | C₂H₅-SO₂-CH₂-C(CH₃)₂- | CH₃ |
| **233.** | (CH₃)₂N-CH₂-C(CH₃)₂- | CH₃ |
| **234.** | (C₂H₅)₂N-CH₂-C(CH₃)₂- | CH₃ |
| **235.** | [(CH₃)₂CH]₂N-CH₂-C(CH₃)₂- | CH₃ |
| **236.** | CI-CH₂-C≡C-CH₂- | CH₃ |
| **237.** | CH₃-O-C(O)-CH₂ | CH₃ |
| **238.** | C₂H₅-O-C(O)-CH₂ | CH₃ |
| **239.** | CH₃-O-C(O)-CH(CH₃)- | CH₃ |
| **240.** | C₂H₅-O-C(O)-CH(CH₃)- | CH₃ |
| **241.** | (CH₃O)₂CH-CH₂- | CH₃ |
| **242.** | (C₂H₅O)₂CH-CH₂- | CH₃ |
| **243.** | C(=O)CH₃ | CH₃ |
| **244.** | C(=O)CH₂-CH₃- | CH₃ |
| **245.** | C(=O)CF₃ | CH₃ |
| **246.** | C(=O)CCl₃ | CH₃ |
| **247.** | C(=O)CH₂-CH₂-CH₃ | CH₃ |
| **248.** | C(=O)C-CH₃)₃ | CH₃ |
| **249.** | C(=O)CH₂-C₆H₅ | CH₃ |
| **250.** | C(=O)CH₂-CH₂-CH₃ | CH₃ |
| **251.** | H | C₂H₅ |
| **252.** | CH₃ | C₂H₅ |
| **253.** | CH₃CH₂- | C₂H₅ |
| **254.** | (CH₃)₂CH- | C₂H₅ |
| **255.** | CH₃CH₂CH₂- | C₂H₅ |
| **256.** | n-C₄H₉ | C₂H₅ |
| **257.** | (CH₃)₃C- | C₂H₅ |
| **258.** | (CH₃)₂CH-CH₂- | C₂H₅ |
| **259.** | n-C₅H₁₁ | C₂H₅ |
| **260.** | (CH₃)₂CH-CH₂-CH₂- | C₂H₅ |
| **261.** | (C₂H₅)₂-CH- | C₂H₅ |
| **262.** | (CH₃)₃C-CH₂- | C₂H₅ |
| **263.** | (CH₃)₃C-CH₂-CH₂- | C₂H₅ |
| **264.** | C₂H₅CH(CH₃)-CH₂- | C₂H₅ |
| **265.** | CH₃-CH₂-C(CH₃)₂- | C₂H₅ |
| **266.** | (CH₃)₂CH-CH(CH₃)- | C₂H₅ |
| **267.** | (CH₃)₃C-CH(CH₃)- | C₂H₅ |
| **268.** | (CH₃)₂CH-CH₂-CH(CH₃)- | C₂H₅ |
| **269.** | CH₃-CH₂-C(CH₃)(C₂H₅)- | C₂H₅ |
| **270.** | CH₃-CH₂-CH₂-C(CH₃)₂- | C₂H₅ |
| **271.** | C₂H₅-CH₂-CH(CH₃)-CH₂- | C₂H₅ |
| **272.** | Cyclopropyl | C₂H₅ |
| **273.** | Cyclopropyl-CH₂- | C₂H₅ |
| **274.** | Cyclopropyl-CH(CH₃)- | C₂H₅ |
| **275.** | Cyclobutyl | C₂H₅ |
| **276.** | Cyclopentyl | C₂H₅ |
| **277.** | Cyclohexyl | C₂H₅ |
| **278.** | HC≡C-CH₂- | C₂H₅ |
| **279.** | HC≡C-CH(CH₃)- | C₂H₅ |
| **280.** | HC≡C-C(CH₃)₂- | C₂H₅ |
| **281.** | HC≡C-C(CH₃)(C₂H₅)- | C₂H₅ |
| **282.** | HC≡C-C(CH₃)(C₃H₇)- | C₂H₅ |
| **283.** | CH₂=CH-CH₂- | C₂H₅ |
| **284.** | H₂C=CH-CH(CH₃)- | C₂H₅ |
| **285.** | H₂C=CH-C(CH₃)₂- | C₂H₅ |
| **286.** | H₂C=CH-C(C₂H₅)(CH₃)- | C₂H₅ |
| **287.** | C₆H₅-CH₂- | C₂H₅ |
| **288.** | 4-(CH₃)₃C-C₆H₄-CH₂- | C₂H₅ |
| **289.** | C₆H₅-CH₂- | C₂H₅ |
| **290.** | 4-(CH₃)₃C-C₆H₄-CH₂- | C₂H₅ |
| **291.** | 4-Cl-C₆H₄-CH₂- | C₂H₅ |
| **292.** | 3-(CH₃O)-C₆H₄-CH₂- | C₂H₅ |
| **293.** | 4-(CH₃O)-C₆H₄-CH₂- | C₂H₅ |
| **294.** | 2-(CH₃O)-C₆H₄-CH₂- | C₂H₅ |
| **295.** | 3-Cl-C₆H₄-CH₂- | C₂H₅ |
| **296.** | 2-Cl-C₆H₄-CH₂- | C₂H₅ |
| **297.** | 4-(F₃C)-C₆H₄-CH₂- | C₂H₅ |
| **298.** | NC-CH₂- | C₂H₅ |
| **299.** | NC-CH₂-CH₂- | C₂H₅ |
| **300.** | NC-CH₂-CH(CH₃)- | C₂H₅ |
| **301.** | NC-CH₂-C(CH₃)₂- | C₂H₅ |
| **302.** | NC-CH₂-CH₂-CH₂- | C₂H₅ |
| **303.** | FH₂C-CH₂- | C₂H₅ |
| **304.** | CIH₂C-CH₂- | C₂H₅ |
| **305.** | BrH₂C-CH₂- | C₂H₅ |
| **306.** | FH₂C-CH(CH₃)- | C₂H₅ |
| **307.** | CIH₂C-CH(CH₃)- | C₂H₅ |
| **308.** | BrH₂C-CH(CH₃)-CH₃ | C₂H₅ |
| **309.** | F₂HC-CH₂- | C₂H₅ |
| **310.** | F₃C-CH₂- | C₂H₅ |
| **311.** | FH₂C-CH₂-CH₂- | C₂H₅ |
| **312.** | CIH₂C-CH₂-CH₂- | C₂H₅ |
| **313.** | BrH₂C-CH₂-CH₂- | C₂H₅ |
| **314.** | F₂HC-CH₂-CH₂- | C₂H₅ |
| **315.** | F₃C-CH₂-CH₂- | C₂H₅ |
| **316.** | CH₃-O-CH₂-CH₂- | C₂H₅ |
| **317.** | CH₃-S-CH₂-CH₂- | C₂H₅ |
| **318.** | CH₃-SO₂-CH₂-CH₂- | C₂H₅ |
| **319.** | C₂H₅-O-CH₂-CH₂- | C₂H₅ |
| **320.** | (CH₃)₂CH-O-CH₂-CH₂- | C₂H₅ |
| **321.** | C₂H₅-S-CH₂-CH₂- | C₂H₅ |
| **322.** | C₂H₅-SO₂-CH₂-CH₂- | C₂H₅ |
| **323.** | (CH₃)₂N-CH₂-CH₂- | C₂H₅ |
| **324.** | (C₂H₅)₂N-CH₂-CH₂- | C₂H₅ |
| **325.** | [(CH₃)₂CH]₂N-CH₂-CH₂- | C₂H₅ |
| **326.** | CH₃-O-CH₂-CH(CH₃)- | C₂H₅ |
| **327.** | CH₃-S-CH₂-CH(CH₃)- | C₂H₅ |
| **328.** | CH₃-SO₂-CH₂-CH(CH₃)- | C₂H₅ |
| **329.** | C₂H₅-O-CH₂-CH(CH₃)- | C₂H₅ |
| **330.** | C₂H₅-S-CH₂-CH(CH₃)- | C₂H₅ |
| **331.** | C₂H₅-SO₂-CH₂-CH(CH₃)- | C₂H₅ |
| **332.** | (CH₃)₂N-CH₂-CH(CH₃)- | C₂H₅ |
| **333.** | (C₂H₅)₂-N-CH₂-CH(CH₃)- | C₂H₅ |
| **334.** | [(CH₃)₂CH]₂N-CH₂-CH(CH₃)- | C₂H₅ |
| **335.** | CH₃-O-CH(CH₃)-CH₂- | C₂H₅ |
| **336.** | CH₃-S-CH(CH₃)-CH₂- | C₂H₅ |
| **337.** | CH₃-SO₂-CH(CH₃)-CH₂ | C₂H₅ |
| **338.** | C₂H₅-O-CH(CH₃)-CH₂- | C₂H₅ |
| **339.** | C₂H₅-S-CH(CH₃)-CH₂- | C₂H₅ |
| **340.** | C₂H₅-SO₂-CH(CH₃)-CH₂ | C₂H₅ |
| **341.** | (CH₃)₂-N-CH(CH₃)-CH₂- | C₂H₅ |
| **342.** | (C₂Hs)₂N-CH(CH₃)-CH₂- | C₂H₅ |
| **343.** | [(CH₃)₂CH]₂N-CH(CH₃)-CH₂- | C₂H₅ |
| **344.** | CH₃-O-CH₂-CH₂-CH₂- | C₂H₅ |
| **345.** | CH₃-S-CH₂-CH₂-CH₂- | C₂H₅ |
| **346.** | CH₃-SO₂-CH₂-CH₂-CH₂- | C₂H₅ |
| **347.** | C₂H₅-O-CH₂-CH₂-CH₂- | C₂H₅ |
| **348.** | C₂H₅-S-CH₂-CH₂-CH₂- | C₂H₅ |
| **349.** | C₂H₅-SO₂-CH₂-CH₂-CH₂. | C₂H₅ |
| **350.** | (CH₃)₂N-CH₂-CH₂-CH₂- | C₂H₅ |
| **351.** | (C₂H₅)₂N-CH₂-CH₂-CH₂- | C₂H₅ |
| **352.** | CH₃-O-CH₂-C(CH₃)₂- | C₂H₅ |
| **353.** | CH₃-s-CH₂-C(CH₃)₂- | C₂H₅ |
| **354.** | CH₃-SO₂-CH₂-C(CH₃)₂- | C₂H₅ |
| **355.** | C₂H₅-O-CH₂-C(CH₃)₂- | C₂H₅ |
| **356.** | C₂Hs-S-CH₂-C(CH₃)₂- | C₂H₅ |
| **357.** | C₂H₅-SO₂-CH₂-C(CH₃)₂- | C₂H₅ |
| **358.** | (CH₃)₂N-CH₂-C(CH₃)₂- | C₂H₅ |
| **359.** | (C₂H₅)₂N-CH₂-C(CH₃)₂- | C₂H₅ |
| **360.** | [(CH₃)₂CH]₂N-CH₂-C(CH₃)₂- | C₂H₅ |
| **361.** | CI-CH₂-C≡C-CH₂- | C₂H₅ |
| **362.** | CH₃-O-C(O)-CH₂ | C₂H₅ |
| **363.** | C₂H₅-O-C(O)-CH₂ | C₂H₅ |
| **364.** | CH₃-O-C(O)-CH(CH₃)- | C₂H₅ |
| **365.** | C₂H₅-O-C(O)-CH(CH₃)- | C₂H₅ |
| **366.** | (CH₃O)₂CH-CH₂- | C₂H₅ |
| **367.** | (C₂H₅O)₂CH-CH₂- | C₂H₅ |
| **368.** | C(=O)CH₃ | C₂H₅ |
| **369.** | C(=O)CH₂-CH₃- | C₂H₅ |
| **370.** | C(=O)CF₃ | C₂H₅ |
| **371.** | C(=O)CCl₃ | C₂H₅ |
| **372.** | C(=O)CH₂-CH₂-CH₃ | C₂H₅ |
| **373.** | C(=O)C-CH₃)₃ | C₂H₅ |
| **374.** | C(=O)CH₂-C₆H₅ | C₂H₅ |
| **375.** | C(=O)CH₂-CH₂-CH₃ | C₂H₅ |
| **376.** | H | C(=O)CH₃ |
| **377.** | CH₃ | C(=O)CH₃ |
| **378.** | CH₃CH₂- | C(=O)CH₃ |
| **379.** | (CH₃)₂CH- | C(=O)CH₃ |
| **380.** | CH₃CH₂CH₂- | C(=O)CH₃ |
| **381.** | n-C₄H₉ | C(=O)CH₃ |
| **382.** | (CH₃)₃C- | C(=O)CH₃ |
| **383.** | (CH₃)₂CH-CH₂- | C(=O)CH₃ |
| **384.** | n-C₅H₁₁ | C(=O)CH₃ |
| **385.** | (CH₃)₂CH-CH₂-CH₂- | C(=O)CH₃ |
| **386.** | (C₂H₅)₂-CH- | C(=O)CH₃ |
| **387.** | (CH₃)₃C-CH₂- | C(=O)CH₃ |
| **388.** | (CH₃)₃C-CH₂-CH₂- | C(=O)CH₃ |
| **389.** | C₂H₅CH(CH₃)-CH₂- | C(=O)CH₃ |
| **390.** | CH₃-CH₂-C(CH₃)₂- | C(=O)CH₃ |
| **391.** | (CH₃)₂CH-CH(CH₃)- | C(=O)CH₃ |
| **392.** | (CH₃)₃C-CH(CH₃)- | C(=O)CH₃ |
| **393.** | (CH₃)₂CH-CH₂-CH(CH₃)- | C(=O)CH₃ |
| **394.** | CH₃-CH₂-C(CH₃)(C₂H₅)- | C(=O)CH₃ |
| **395.** | CH₃-CH₂-CH₂-C(CH₃)₂- | C(=O)CH₃ |
| **396.** | C₂H₅-CH₂-CH(CH₃)-CH₂- | C(=O)CH₃ |
| **397.** | Cyclopropyl | C(=O)CH₃ |
| **398.** | Cyclopropyl-CH₂- | C(=O)CH₃ |
| **399.** | Cyclopropyl-CH(CH₃)- | C(=O)CH₃ |
| **400.** | Cyclobutyl | C(=O)CH₃ |
| **401.** | Cyclopentyl | C(=O)CH₃ |
| **402.** | Cyclohexyl | C(=O)CH₃ |
| **403.** | HC≡C-CH₂- | C(=O)CH₃ |
| **404.** | HC≡C-CH(CH₃)- | C(=O)CH₃ |
| **405.** | HC≡C-C(CH₃)₂- | C(=O)CH₃ |
| **406.** | HC≡C-C(CH₃)(C₂H₅)- | C(=O)CH₃ |
| **407.** | HC≡C-C(CH₃)(C₃H₇)- | C(=O)CH₃ |
| **408.** | CH₂=CH-CH₂- | C(=O)CH₃ |
| **409.** | H₂C=CH-CH(CH₃)- | C(=O)CH₃ |
| **410.** | H₂C=CH-C(CH₃)₂- | C(=O)CH₃ |
| **411.** | H₂C=CH-C(C₂H₅)(CH₃)- | C(=O)CH₃ |
| **412.** | C₆H₅-CH₂- | C(=O)CH₃ |
| **413.** | 4-(CH₃)₃C-C₆H₄-CH₂- | C(=O)CH₃ |
| **414.** | C₆H₅-CH₂- | C(=O)CH₃ |
| **415.** | 4-(CH₃)₃C-C₆H₄-CH₂- | C(=O)CH₃ |
| **416.** | 4-Cl-C₆H₄-CH₂- | C(=O)CH₃ |
| **417.** | 3-(CH₃O)-C₆H₄-CH₂- | C(=O)CH₃ |
| **418.** | 4-(CH₃O)-C₆H₄-CH₂- | C(=O)CH₃ |
| **419.** | 2-(CH₃O)-C₆H₄-CH₂- | C(=O)CH₃ |
| **420.** | 3-Cl-C₆H₄-CH₂- | C(=O)CH₃ |
| **421.** | 2-Cl-C₆H₄-CH₂- | C(=O)CH₃ |
| **422.** | 4-(F₃C)-C₆H₄-CH₂- | C(=O)CH₃ |
| **423.** | NC-CH₂- | C(=O)CH₃ |
| **424.** | NC-CH₂-CH₂- | C(=O)CH₃ |
| **425.** | NC-CH₂-CH(CH₃)- | C(=O)CH₃ |
| **426.** | NC-CH₂-C(CH₃)₂- | C(=O)CH₃ |
| **427.** | NC-CH₂-CH₂-CH₂- | C(=O)CH₃ |
| **428.** | FH₂C-CH₂- | C(=O)CH₃ |
| **429.** | CIH₂C-CH₂- | C(=O)CH₃ |
| **430.** | BrH₂C-CH₂- | C(=O)CH₃ |
| **431.** | FH₂C-CH(CH₃)- | C(=O)CH₃ |
| **432.** | CIH₂C-CH(CH₃)- | C(=O)CH₃ |
| **433.** | BrH₂C-CH(CH₃)-CH₃ | C(=O)CH₃ |
| **434.** | F₂HC-CH₂- | C(=O)CH₃ |
| **435.** | F₃C-CH₂- | C(=O)CH₃ |
| **436.** | FH₂C-CH₂-CH₂- | C(=O)CH₃ |
| **437.** | CIH₂C-CH₂-CH₂- | C(=O)CH₃ |
| **438.** | BrH₂C-CH₂-CH₂- | C(=O)CH₃ |
| **439.** | F₂HC-CH₂-CH₂- | C(=O)CH₃ |
| **440.** | F₃C-CH₂-CH₂- | C(=O)CH₃ |
| **441.** | CH₃-O-CH₂-CH₂- | C(=O)CH₃ |
| **442.** | CH₃-S-CH₂-CH₂- | C(=O)CH₃ |
| **443.** | CH₃-SO₂-CH₂-CH₂- | C(=O)CH₃ |
| **444.** | C₂H₅-O-CH₂-CH₂- | C(=O)CH₃ |
| **445.** | (CH₃)₂CH-O-CH₂-CH₂- | C(=O)CH₃ |
| **446.** | C₂H₅-_{S}-CH₂-CH₂- | C(=O)CH₃ |
| **447.** | C₂H₅-SO₂-CH₂-CH₂- | C(=O)CH₃ |
| **448.** | (CH₃)₂N-CH₂-CH₂- | C(=O)CH₃ |
| **449.** | (C₂H₅)₂N-CH₂-CH₂- | C(=O)CH₃ |
| **450.** | [(CH₃)₂CH]₂N-CH₂-CH₂- | C(=O)CH₃ |
| **451.** | CH₃-O-CH₂-CH(CH₃)- | C(=O)CH₃ |
| **452.** | CH₃-S-CH₂-CH(CH₃)- | C(=O)CH₃ |
| **453.** | CH₃-SO₂-CH₂-CH(CH₃)- | C(=O)CH₃ |
| **454.** | C₂H₅-O-CH₂-CH(CH₃)- | C(=O)CH₃ |
| **455.** | C₂H₅-S-CH₂-CH(CH₃)- | C(=O)CH₃ |
| **456.** | C₂H₅-SO₂-CH₂-CH(CH₃)- | C(=O)CH₃ |
| **457.** | (CH₃)₂N-CH₂-CH(CH₃)- | C(=O)CH₃ |
| **458.** | (C₂H₅)₂-N-CH₂-CH(CH₃)- | C(=O)CH₃ |
| **459.** | [(CH₃)₂CH]₂N-CH₂-CH(CH₃)- | C(=O)CH₃ |
| **460.** | CH₃-O-CH(CH₃)-CH₂- | C(=O)CH₃ |
| **461.** | CH₃-S-CH(CH₃)-CH₂- | C(=O)CH₃ |
| **462.** | CH₃-SO₂-CH(CH₃)-CH₂ | C(=O)CH₃ |
| **463.** | C₂H₅-O-CH(CH₃)-CH₂- | C(=O)CH₃ |
| **464.** | C₂H₅-S-CH(CH₃)-CH₂- | C(=O)CH₃ |
| **465.** | C₂H₅-SO₂-CH(CH₃)-CH₂ | C(=O)CH₃ |
| **466.** | (CH₃)₂-N-CH(CH₃)-CH₂- | C(=O)CH₃ |
| **467.** | (C₂H₅)₂N-CH(CH₃)-CH₂- | C(=O)CH₃ |
| **468.** | [(CH₃)₂CH]₂N-CH(CH₃)-CH₂- | C(=O)CH₃ |
| **469.** | CH₃-O-CH₂-CH₂-CH₂- | C(=O)CH₃ |
| **470.** | CH₃-S-CH₂-CH₂-CH₂- | C(=O)CH₃ |
| **471.** | CH₃-SO₂-CH₂-CH₂-CH₂- | C(=O)CH₃ |
| **472.** | C₂H₅-O-CH₂-CH₂-CH₂- | C(=O)CH₃ |
| **473.** | C₂H₅-S-CH₂-CH₂-CH₂- | C(=O)CH₃ |
| **474.** | C₂H₅-SO₂-CH₂-CH₂-CH₂. | C(=O)CH₃ |
| **475.** | (CH₃)₂N-CH₂-CH₂-CH₂- | C(=O)CH₃ |
| **476.** | (C₂H₅)₂N-CH₂-CH₂-CH₂- | C(=O)CH₃ |
| **477.** | CH₃-O-CH₂-C(CH₃)₂- | C(=O)CH₃ |
| **478.** | CH₃-S-CH₂-C(CH₃)₂- | C(=O)CH₃ |
| **479.** | CH₃-SO₂-CH₂-C(CH₃)₂- | C(=O)CH₃ |
| **480.** | C₂H₅-O-CH₂-C(CH₃)₂- | C(=O)CH₃ |
| **481.** | C₂H₅-S-CH₂-C(CH₃)₂- | C(=O)CH₃ |
| **482.** | C₂H₅-SO₂-CH₂-C(CH₃)₂- | C(=O)CH₃ |
| **483.** | (CH₃)₂N-CH₂-C(CH₃)₂- | C(=O)CH₃ |
| **484.** | (C₂H₅)₂N-CH₂-C(CH₃)₂- | C(=O)CH₃ |
| **485.** | [(CH₃)₂CH]₂N-CH₂-C(CH₃)₂- | C(=O)CH₃ |
| **486.** | CI-CH₂-C≡C-CH₂- | C(=O)CH₃ |
| **487.** | CH₃-O-C(O)-CH₂ | C(=O)CH₃ |
| **488.** | C₂H₅-O-C(O)-CH₂ | C(=O)CH₃ |
| **489.** | CH₃-O-C(O)-CH(CH₃)- | C(=O)CH₃ |
| **490.** | C₂H₅-O-C(O)-CH(CH₃)- | C(=O)CH₃ |
| **491.** | (CH₃O)₂CH-CH₂- | C(=O)CH₃ |
| **492.** | (C₂H₅O)₂CH-CH₂- | C(=O)CH₃ |
| **493.** | C(=O)CH₃ | C(=O)CH₃ |
| **494.** | C(=O)CH₂-CH₃- | C(=O)CH₃ |
| **495.** | C(=O)CF₃ | C(=O)CH₃ |
| **496.** | C(=O)CCl₃ | C(=O)CH₃ |
| **497.** | C(=O)CH₂-CH₂-CH₃ | C(=O)CH₃ |
| **498.** | C(=O)C-CH₃)₃ | C(=O)CH₃ |
| **499.** | C(=O)CH₂-C₆H₅ | C(=O)CH₃ |
| **500.** | C(=O)CH₂-CH₂-CH₃ | C(=O)CH₃ |
| **501.** | H | C(=O)C₂H₅ |
| **502.** | CH₃ | C(=O)C₂H₅ |
| **503.** | CH₃CH₂- | C(=O)C₂H₅ |
| **504.** | (CH₃)₂CH- | C(=O)C₂H₅ |
| **505.** | CH₃CH₂CH₂- | C(=O)C₂H₅ |
| **506.** | n-C₄H₉ | C(=O)C₂H₅ |
| **507.** | (CH₃)₃C- | C(=O)C₂H₅ |
| **508.** | (CH₃)₂CH-CH₂- | C(=O)C₂H₅ |
| **509.** | n-C₅H₁₁ | C(=O)C₂H₅ |
| **510.** | (CH₃)₂CH-CH₂-CH₂- | C(=O)C₂H₅ |
| **511.** | (C₂H₅)₂-CH- | C(=O)C₂H₅ |
| **512.** | (CH₃)₃C-CH₂- | C(=O)C₂H₅ |
| **513.** | (CH₃)₃C-CH₂-CH₂- | C(=O)C₂H₅ |
| **514.** | C₂H₅CH(CH₃₎-CH₂- | C(=O)C₂H₅ |
| **515.** | CH₃-CH₂-C(CH₃)₂- | C(=O)C₂H₅ |
| **516.** | (CH₃)₂CH-CH(CH₃)- | C(=O)C₂H₅ |
| **517.** | (CH₃)₃C-CH(CH₃)- | C(=O)C₂H₅ |
| **518.** | (CH₃)₂CH-CH₂-CH(CH₃)- | C(=O)C₂H₅ |
| **519.** | CH₃-CH₂-C(CH₃)(C₂H₅)- | C(=O)C₂H₅ |
| **520.** | CH₃-CH₂-CH₂-C(CH₃)₂- | C(=O)C₂H₅ |
| **521.** | C₂H₅-CH₂-CH(CH₃)-CH₂- | C(=O)C₂H₅ |
| **522.** | Cyclopropyl | C(=O)C₂H₅ |
| **523.** | Cyclopropyl-CH₂- | C(=O)C₂H₅ |
| **524.** | Cyclopropyl-CH(CH₃)- | C(=O)C₂H₅ |
| **525.** | Cyclobutyl | C(=O)C₂H₅ |
| **526.** | Cyclopentyl | C(=O)C₂H₅ |
| **527.** | Cyclohexyl | C(=O)C₂H₅ |
| **528.** | HC≡C-CH₂- | C(=O)C₂H₅ |
| **529.** | HC≡C-CH(CH₃)- | C(=O)C₂H₅ |
| **530.** | HC≡C-C(CH₃)₂- | C(=O)C₂H₅ |
| **531.** | HC≡C-C(CH₃)(C₂H₅)- | C(=O)C₂H₅ |
| **532.** | HC≡C-C(CH₃)(C₃H₇)- | C(=O)C₂H₅ |
| **533.** | CH₂=CH-CH₂- | C(=O)C₂H₅ |
| **534.** | H₂C=CH-CH(CH₃)- | C(=O)C₂H₅ |
| **535.** | H₂C=CH-C(CH₃)₂- | C(=O)C₂H₅ |
| **536.** | H₂C=CH-C(C₂H₅)(CH₃)- | C(=O)C₂H₅ |
| **537.** | C₆H₅-CH₂- | C(=O)C₂H₅ |
| **538.** | 4-(CH₃)₃C-C₆H₄-CH₂- | C(=O)C₂H₅ |
| **539.** | C₆H₅-CH₂- | C(=O)C₂H₅ |
| **540.** | 4-(CH₃)₃C-C₆H₄-CH₂- | C(=O)C₂H₅ |
| **541.** | 4-Cl-C₆H₄-CH₂- | C(=O)C₂H₅ |
| **542.** | 3-(CH₃O)-C₆H₄-CH₂- | C(=O)C₂H₅ |
| **543.** | 4-(CH₃O)-C₆H₄-CH₂- | C(=O)C₂H₅ |
| **544.** | 2-(CH₃O)-C₆H₄-CH₂- | C(=O)C₂H₅ |
| **545.** | 3-Cl-C₆H₄-CH₂- | C(=O)C₂H₅ |
| **546.** | 2-Cl-C₆H₄-CH₂- | C(=O)C₂H₅ |
| **547.** | 4-(F₃C)-C₆H₄-CH₂- | C(=O)C₂H₅ |
| **548.** | NC-CH₂- | C(=O)C₂H₅ |
| **549.** | NC-CH₂-CH₂- | C(=O)C₂H₅ |
| **550.** | NC-CH₂-CH(CH₃)- | C(=O)C₂H₅ |
| **551.** | NC-CH₂-C(CH₃)₂- | C(=O)C₂H₅ |
| **552.** | NC-CH₂-CH₂-CH₂- | C(=O)C₂H₅ |
| **553.** | FH₂C-CH₂- | C(=O)C₂H₅ |
| **554.** | CIH₂C-CH₂- | C(=O)C₂H₅ |
| **555.** | BrH₂C-CH₂- | C(=O)C₂H₅ |
| **556.** | FH₂C-CH(CH₃)- | C(=O)C₂H₅ |
| **557.** | CIH₂C-CH(CH₃)- | C(=O)C₂H₅ |
| **558.** | BrH₂C-CH(CH₃)-CH₃ | C(=O)C₂H₅ |
| **559.** | F₂HC-CH₂- | C(=O)C₂H₅ |
| **560.** | F₃C-CH₂- | C(=O)C₂H₅ |
| **561.** | FH₂C-CH₂-CH₂- | C(=O)C₂H₅ |
| **562.** | CIH₂C-CH₂-CH₂- | C(=O)C₂H₅ |
| **563.** | BrH₂C-CH₂-CH₂- | C(=O)C₂H₅ |
| **564.** | F₂HC-CH₂-CH₂- | C(=O)C₂H₅ |
| **565.** | F₃C-CH₂-CH₂- | C(=O)C₂H₅ |
| **566.** | CH₃-O-CH₂-CH₂- | C(=O)C₂H₅ |
| **567.** | CH₃-S-CH₂-CH₂- | C(=O)C₂H₅ |
| **568.** | CH₃-SO₂-CH₂-CH₂- | C(=O)C₂H₅ |
| **569.** | C₂H₅-O-CH₂-CH₂- | C(=O)C₂H₅ |
| **570.** | (CH₃)₂CH-O-CH₂-CH₂- | C(=O)C₂H₅ |
| **571.** | C₂H₅-S-CH₂-CH₂- | C(=O)C₂H₅ |
| **572.** | C₂H₅-SO₂-CH₂-CH₂- | C(=O)C₂H₅ |
| **573.** | (CH₃)₂N-CH₂-CH₂- | C(=O)C₂H₅ |
| **574.** | (C₂H₅)₂N-CH₂-CH₂- | C(=O)C₂H₅ |
| **575.** | [(CH₃)₂CH]₂N-CH₂-CH₂- | C(=O)C₂H₅ |
| **576.** | CH₃-O-CH₂-CH(CH₃)- | C(=O)C₂H₅ |
| **577.** | CH₃-S-CH₂-CH(CH₃)- | C(=O)C₂H₅ |
| **578.** | CH₃-SO₂-CH₂-CH(CH₃)- | C(=O)C₂H₅ |
| **579.** | C₂H₅-O-CH₂-CH(CH₃)- | C(=O)C₂H₅ |
| **580.** | C₂H₅-S-CH₂-CH(CH₃)- | C(=O)C₂H₅ |
| **581.** | C₂H₅-SO₂-CH₂-CH(CH₃)- | C(=O)C₂H₅ |
| **582.** | (CH₃)₂N-CH₂-CH(CH₃)- | C(=O)C₂H₅ |
| **583.** | (C₂H₅)₂-N-CH₂-CH(CH₃)- | C(=O)C₂H₅ |
| **584.** | [(CH₃)₂CH]₂N-CH₂-CH(CH₃)- | C(=O)C₂H₅ |
| **585.** | CH₃-O-CH(CH₃)-CH₂- | C(=O)C₂H₅ |
| **586.** | CH₃-S-CH(CH₃)-CH₂- | C(=O)C₂H₅ |
| **587.** | CH₃-SO₂-CH(CH₃)-CH₂ | C(=O)C₂H₅ |
| **588.** | C₂H₅-O-CH(CH₃)-CH₂- | C(=O)C₂H₅ |
| **589.** | C₂H₅-S-CH(CH₃)-CH₂- | C(=O)C₂H₅ |
| **590.** | C₂H₅-SO₂-CH(CH₃)-CH₂ | C(=O)C₂H₅ |
| **591.** | (CH₃)₂-N-CH(CH₃)-CH₂- | C(=O)C₂H₅ |
| **592.** | (C₂H₅)₂N-CH(CH₃)-CH₂- | C(=O)C₂H₅ |
| **593.** | [(CH₃)₂CH]₂N-CH(CH₃)-CH₂- | C(=O)C₂H₅ |
| **594.** | CH₃-O-CH₂-CH₂-CH₂- | C(=O)C₂H₅ |
| **595.** | CH₃-S-CH₂-CH₂-CH₂- | C(=O)C₂H₅ |
| **596.** | CH₃-SO₂-CH₂-CH₂-CH₂- | C(=O)C₂H₅ |
| **597.** | C₂H₅-O-CH₂-CH₂-CH₂- | C(=O)C₂H₅ |
| **598.** | C₂H₅-S-CH₂-CH₂-CH₂- | C(=O)C₂H₅ |
| **599.** | C₂H₅-SO₂-CH₂-CH₂-CH₂. | C(=O)C₂H₅ |
| **600.** | (CH₃)₂N-CH₂-CH₂-CH₂- | C(=O)C₂H₅ |
| **601.** | (C₂H₅)₂N-CH₂-CH₂-CH₂- | C(=O)C₂H₅ |
| **602.** | CH₃-O-CH₂-C(CH₃)₂- | C(=O)C₂H₅ |
| **603.** | CH₃-S-CH₂-C(CH₃)₂- | C(=O)C₂H₅ |
| **604.** | CH₃-SO₂-CH₂-C(CH₃)₂- | C(=O)C₂H₅ |
| **605.** | C₂H₅-O-CH₂-C(CH₃)₂- | C(=O)C₂H₅ |
| **606.** | C₂H₅-S-CH₂-C(CH₃)₂- | C(=O)C₂H₅ |
| **607.** | C₂H₅-SO₂-CH₂-C(CH₃)₂- | C(=O)C₂H₅ |
| **608.** | (CH₃)₂N-CH₂-C(CH₃)₂- | C(=O)C₂H₅ |
| **609.** | (C₂H₅)₂N-CH₂-C(CH₃)₂- | C(=O)C₂H₅ |
| **610.** | [(CH₃)₂CH]₂N-CH₂-C(CH₃)₂- | C(=O)C₂H₅ |
| **611.** | CI-CH₂-C≡C-CH₂- | C(=O)C₂H₅ |
| **612.** | CH₃-O-C(O)-CH₂ | C(=O)C₂H₅ |
| **613.** | C₂H₅-O-C(O)-CH₂ | C(=O)C₂H₅ |
| **614.** | CH₃-O-C(O)-CH(CH₃)- | C(=O)C₂H₅ |
| **615.** | C₂H₅-O-C(O)-CH(CH₃)- | C(=O)C₂H₅ |
| **616.** | (CH₃O)₂CH-CH₂- | C(=O)C₂H₅ |
| **617.** | (C₂H₅O)₂CH-CH₂- | C(=O)C₂H₅ |
| **618.** | C(=O)CH₃ | C(=O)C₂H₅ |
| **619.** | C(=O)CH₂-CH₃- | C(=O)C₂H₅ |
| **620.** | C(=O)CF₃ | C(=O)C₂H₅ |
| **621.** | C(=O)CCl₃ | C(=O)C₂H₅ |
| **622.** | C(=O)CH₂-CH₂-CH₃ | C(=O)C₂H₅ |
| **623.** | C(=O)C-CH₃)₃ | C(=O)C₂H₅ |
| **624.** | C(=O)CH₂-C₆H₅ | C(=O)C₂H₅ |
| **625.** | C(=O)CH₂-CH₂-CH₃ | C(=O)C₂H₅ |
| **626.** | H | C(=O)C(CH₃)₃ |
| **627.** | CH₃ | C(=O)C(CH₃)₃ |
| **628.** | CH₃CH₂- | C(=O)C(CH₃)₃ |
| **629.** | (CH₃)₂CH- | C(=O)C(CH₃)₃ |
| **630.** | CH₃CH₂CH₂- | C(=O)C(CH₃)₃ |
| **631.** | n-C₄H₉ | C(=O)C(CH₃)₃ |
| **632.** | (CH₃)₃C- | C(=O)C(CH₃)₃ |
| **633.** | (CH₃)₂CH-CH₂- | C(=O)C(CH₃)₃ |
| **634.** | n-C₅H₁₁ | C(=O)C(CH₃)₃ |
| **635.** | (CH₃)₂CH-CH₂-CH₂- | C(=O)C(CH₃)₃ |
| **636.** | (C₂H₅)₂-CH- | C(=O)C(CH₃)₃ |
| **637.** | (CH₃)₃C-CH₂- | C(=O)C(CH₃)₃ |
| **638.** | (CH₃)₃C-CH₂-CH₂- | C(=O)C(CH₃)₃ |
| **639.** | C₂H₅CH(CH₃)-CH₂- | C(=O)C(CH₃)₃ |
| **640.** | CH₃-CH₂-C(CH₃)₂- | C(=O)C(CH₃)₃ |
| **641.** | (CH₃)₂CH-CH(CH₃)- | C(=O)C(CH₃)₃ |
| **642.** | (CH₃)₃C-CH(CH₃)- | C(=O)C(CH₃)₃ |
| **643.** | (CH₃)₂CH-CH₂-CH(CH₃)- | C(=O)C(CH₃)₃ |
| **644.** | CH₃-CH₂-C(CH₃)(C₂H₅)- | C(=O)C(CH₃)₃ |
| **645.** | CH₃-CH₂-CH₂-C(CH₃)₂- | C(=O)C(CH₃)₃ |
| **646.** | C₂H₅-CH₂-CH(CH₃)-CH₂- | C(=O)C(CH₃)₃ |
| **647.** | Cyclopropyl | C(=O)C(CH₃)₃ |
| **648.** | Cyclopropyl-CH₂- | C(=O)C(CH₃)₃ |
| **649.** | Cyclopropyl-CH(CH₃)- | C(=O)C(CH₃)₃ |
| **650.** | Cyclobutyl | C(=O)C(CH₃)₃ |
| **651.** | Cyclopentyl | C(=O)C(CH₃)₃ |
| **652.** | Cyclohexyl | C(=O)C(CH₃)₃ |
| **653.** | HC≡C-CH₂- | C(=O)C(CH₃)₃ |
| **654.** | HC≡C-CH(CH₃)- | C(=O)C(CH₃)₃ |
| **655.** | HC≡C-C(CH₃)₂- | C(=O)C(CH₃)₃ |
| **656.** | HC≡C-C(CH₃)(C₂H₅)- | C(=O)C(CH₃)₃ |
| **657.** | HC≡C-C(CH₃)(C₃H₇)- | C(=O)C(CH₃)₃ |
| **658.** | CH₂=CH-CH₂- | C(=O)C(CH₃)₃ |
| **659.** | H₂C=CH-CH(CH₃)- | C(=O)C(CH₃)₃ |
| **660.** | H₂C=CH-C(CH₃)₂- | C(=O)C(CH₃)₃ |
| **661.** | H₂C=CH-C(C₂H₅)(CH₃)- | C(=O)C(CH₃)₃ |
| **662.** | C₆H₅-CH₂- | C(=O)C(CH₃)₃ |
| **663.** | 4-(CH₃)₃C-C₆H₄-CH₂- | C(=O)C(CH₃)₃ |
| **664.** | C₆H₅-CH₂- | C(=O)C(CH₃)₃ |
| **665.** | 4-(CH₃)₃C-C₆H₄-CH₂- | C(=O)C(CH₃)₃ |
| **666.** | 4-Cl-C₆H₄-CH₂- | C(=O)C(CH₃)₃ |
| **667.** | 3-(CH₃O)-C₆H₄-CH₂- | C(=O)C(CH₃)₃ |
| **668.** | 4-(CH₃O)-C₆H₄-CH₂- | C(=O)C(CH₃)₃ |
| **669.** | 2-(CH₃O)-C₆H₄-CH₂- | C(=O)C(CH₃)₃ |
| **670.** | 3-Cl-C₆H₄-CH₂- | C(=O)C(CH₃)₃ |
| **671.** | 2-Cl-C₆H₄-CH₂- | C(=O)C(CH₃)₃ |
| **672.** | 4-(F₃C)-C₆H₄-CH₂- | C(=O)C(CH₃)₃ |
| **673.** | NC-CH₂- | C(=O)C(CH₃)₃ |
| **674.** | NC-CH₂-CH₂- | C(=O)C(CH₃)₃ |
| **675.** | NC-CH₂-CH(CH₃)- | C(=O)C(CH₃)₃ |
| **676.** | NC-CH₂-C(CH₃)₂- | C(=O)C(CH₃)₃ |
| **677.** | NC-CH₂-CH₂-CH₂- | C(=O)C(CH₃)₃ |
| **678.** | FH₂C-CH₂- | C(=O)C(CH₃)₃ |
| **679.** | CIH₂C-CH₂- | C(=O)C(CH₃)₃ |
| **680.** | BrH₂C-CH₂- | C(=O)C(CH₃)₃ |
| **681.** | FH₂C-CH(CH₃)- | C(=O)C(CH₃)₃ |
| **682.** | CIH₂C-CH(CH₃)- | C(=O)C(CH₃)₃ |
| **683.** | BrH₂C-CH(CH₃)-CH₃ | C(=O)C(CH₃)₃ |
| **684.** | F₂HC-CH₂- | C(=O)C(CH₃)₃ |
| **685.** | F₃C-CH₂- | C(=O)C(CH₃)₃ |
| **686.** | FH₂C-CH₂-CH₂- | C(=O)C(CH₃)₃ |
| **687.** | CIH₂C-CH₂-CH₂- | C(=O)C(CH₃)₃ |
| **688.** | BrH₂C-CH₂-CH₂- | C(=O)C(CH₃)₃ |
| **689.** | F₂HC-CH₂-CH₂- | C(=O)C(CH₃)₃ |
| **690.** | F₃C-CH₂-CH₂- | C(=O)C(CH₃)₃ |
| **691.** | CH₃-O-CH₂-CH₂- | C(=O)C(CH₃)₃ |
| **692.** | CH₃-S-CH₂-CH₂- | C(=O)C(CH₃)₃ |
| **693.** | CH₃-SO₂-CH₂-CH₂- | C(=O)C(CH₃)₃ |
| **694.** | C₂H₅-O-CH₂-CH₂- | C(=O)C(CH₃)₃ |
| **695.** | (CH₃)₂CH-O-CH₂-CH₂- | C(=O)C(CH₃)₃ |
| **696.** | C₂H₅-S-CH₂-CH₂- | C(=O)C(CH₃)₃ |
| **697.** | C₂H₅-SO₂-CH₂-CH₂- | C(=O)C(CH₃)₃ |
| **698.** | (CH₃)₂N-CH₂-CH₂- | C(=O)C(CH₃)₃ |
| **699.** | (C₂H₅)₂N-CH₂-CH₂- | C(=O)C(CH₃)₃ |
| **700.** | [(CH₃)₂CH]₂N-CH₂-CH₂- | C(=O)C(CH₃)₃ |
| **701.** | CH₃-O-CH₂-CH(CH₃)- | C(=O)C(CH₃)₃ |
| **702.** | CH₃-S-CH₂-CH(CH₃)- | C(=O)C(CH₃)₃ |
| **703.** | CH₃-SO₂-CH₂-CH(CH₃)- | C(=O)C(CH₃)₃ |
| **704.** | C₂H₅-O-CH₂-CH(CH₃)- | C(=O)C(CH₃)₃ |
| **705.** | C₂H₅-S-CH₂-CH(CH₃)- | C(=O)C(CH₃)₃ |
| **706.** | C₂H₅-SO₂-CH₂-CH(CH₃)- | C(=O)C(CH₃)₃ |
| **707.** | (CH₃)₂N-CH₂-CH(CH₃)- | C(=O)C(CH₃)₃ |
| **708.** | (C₂H₅)₂-N-CH₂-CH(CH₃)- | C(=O)C(CH₃)₃ |
| **709.** | [(CH₃)₂CH]₂N-CH₂-CH(CH₃)- | C(=O)C(CH₃)₃ |
| **710.** | CH₃-O-CH(CH₃)-CH₂- | C(=O)C(CH₃)₃ |
| **711.** | CH₃-S-CH(CH₃)-CH₂- | C(=O)C(CH₃)₃ |
| **712.** | CH₃-SO₂-CH(CH₃)-CH₂ | C(=O)C(CH₃)₃ |
| **713.** | C₂H₅-O-CH(CH₃)-CH₂- | C(=O)C(CH₃)₃ |
| **714.** | C₂H₅-S-CH(CH₃)-CH₂- | C(=O)C(CH₃)₃ |
| **715.** | C₂H₅-SO₂-CH(CH₃)-CH₂ | C(=O)C(CH₃)₃ |
| **716.** | (CH₃)₂-N-CH(CH₃)-CH₂- | C(=O)C(CH₃)₃ |
| **717.** | (C₂H₅)₂N-CH(CH₃)-CH₂- | C(=O)C(CH₃)₃ |
| **718.** | [(CH₃)₂CH]₂N-CH(CH₃)-CH₂- | C(=O)C(CH₃)₃ |
| **719.** | CH₃-O-CH₂-CH₂-CH₂- | C(=O)C(CH₃)₃ |
| **720.** | CH₃-S-CH₂-CH₂-CH₂- | C(=O)C(CH₃)₃ |
| **721.** | CH₃-SO₂-CH₂-CH₂-CH₂- | C(=O)C(CH₃)₃ |
| **722.** | C₂H₅-O-CH₂-CH₂-CH₂- | C(=O)C(CH₃)₃ |
| **723.** | C₂H₅-S-CH₂-CH₂-CH₂- | C(=O)C(CH₃)₃ |
| **724.** | C₂H₅-SO₂-CH₂-CH₂-CH₂. | C(=O)C(CH₃)₃ |
| **725.** | (CH₃)₂N-CH₂-CH₂-CH₂- | C(=O)C(CH₃)₃ |
| **726.** | (C₂H₅)₂N-CH₂-CH₂-CH₂- | C(=O)C(CH₃)₃ |
| **727.** | CH₃-O-CH₂-C(CH₃)₂- | C(=O)C(CH₃)₃ |
| **728.** | CH₃-S-CH₂-C(CH₃)₂- | C(=O)C(CH₃)₃ |
| **729.** | CH₃-SO₂-CH₂-C(CH₃)₂- | C(=O)C(CH₃)₃ |
| **730.** | C₂H₅-O-CH₂-C(CH₃)₂- | C(=O)C(CH₃)₃ |
| **731.** | C₂H₅-S-CH₂-C(CH₃)₂- | C(=O)C(CH₃)₃ |
| **732.** | C₂H₅-SO₂-CH₂-C(CH₃)₂- | C(=O)C(CH₃)₃ |
| **733.** | (CH₃)₂N-CH₂-C(CH₃)₂- | C(=O)C(CH₃)₃ |
| **734.** | (C₂H₅)₂N-CH₂-C(CH₃)₂- | C(=O)C(CH₃)₃ |
| **735.** | [(CH₃)₂CH]₂N-CH₂-C(CH₃)₂- | C(=O)C(CH₃)₃ |
| **736.** | CI-CH₂-C≡C-CH₂- | C(=O)C(CH₃)₃ |
| **737.** | CH₃-O-C(O)-CH₂ | C(=O)C(CH₃)₃ |
| **738.** | C₂H₅-O-C(O)-CH₂ | C(=O)C(CH₃)₃ |
| **739.** | CH₃-O-C(O)-CH(CH₃)- | C(=O)C(CH₃)₃ |
| **740.** | C₂H₅-O-C(O)-CH(CH₃)- | C(=O)C(CH₃)₃ |
| **741.** | (CH₃O)₂CH-CH₂- | C(=O)C(CH₃)₃ |
| **742.** | (C₂H₅O)₂CH-CH₂- | C(=O)C(CH₃)₃ |
| **743.** | C(=O)CH₃ | C(=O)C(CH₃)₃ |
| **744.** | C(=O)CH₂-CH₃- | C(=O)C(CH₃)₃ |
| **745.** | C(=O)CF₃ | C(=O)C(CH₃)₃ |
| **746.** | C(=O)CCl₃ | C(=O)C(CH₃)₃ |
| **747.** | C(=O)CH₂-CH₂-CH₃ | C(=O)C(CH₃)₃ |
| **748.** | C(=O)C-CH₃)₃ | C(=O)C(CH₃)₃ |
| **749.** | C(=O)CH₂-C₆H₅ | C(=O)C(CH₃)₃ |
| **750.** | C(=O)CH₂-CH₂-CH₃ | C(=O)C(CH₃)₃ |
| **751.** | H | C(=O)CF₃ |
| **752.** | CH₃ | C(=O)CF₃ |
| **753.** | CH₃CH₂- | C(=O)CF₃ |
| **754.** | (CH₃)₂CH- | C(=O)CF₃ |
| **755.** | CH₃CH₂CH₂- | C(=O)CF₃ |
| **756.** | n-C₄H₉ | C(=O)CF₃ |
| **757.** | (CH₃)₃C- | C(=O)CF₃ |
| **758.** | (CH₃)₂CH-CH₂- | C(=O)CF₃ |
| **759.** | n-C₅H₁₁ | C(=O)CF₃ |
| **760.** | (CH₃)₂CH-CH₂-CH₂- | C(=O)CF₃ |
| **761.** | (C₂H₅)₂-CH- | C(=O)CF₃ |
| **762.** | (CH₃)₃C-CH₂- | C(=O)CF₃ |
| **763.** | (CH₃)₃C-CH₂-CH₂- | C(=O)CF₃ |
| **764.** | C₂H₅CH(CH₃)-CH₂- | C(=O)CF₃ |
| **765.** | CH₃-CH₂-C(CH₃)₂- | C(=O)CF₃ |
| **766.** | (CH₃)₂CH-CH(CH₃)- | C(=O)CF₃ |
| **767.** | (CH₃)₃C-CH(CH₃)- | C(=O)CF₃ |
| **768.** | (CH₃)₂CH-CH₂-CH(CH₃)- | C(=O)CF₃ |
| **769.** | CH₃-CH₂-C(CH₃)(C₂H₅)- | C(=O)CF₃ |
| **770.** | CH₃-CH₂-CH₂-C(CH₃)₂- | C(=O)CF₃ |
| **771.** | C₂H₅-CH₂-CH(CH₃)-CH₂- | C(=O)CF₃ |
| **772.** | Cyclopropyl | C(=O)CF₃ |
| **773.** | Cyclopropyl-CH₂- | C(=O)CF₃ |
| **774.** | Cyclopropyl-CH(CH₃)- | C(=O)CF₃ |
| **775.** | Cyclobutyl | C(=O)CF₃ |
| **776.** | Cyclopentyl | C(=O)CF₃ |
| **777.** | Cyclohexyl | C(=O)CF₃ |
| **778.** | HC≡C-CH₂- | C(=O)CF₃ |
| **779.** | HC≡C-CH(CH₃)- | C(=O)CF₃ |
| **780.** | HC≡C-C(CH₃)₂- | C(=O)CF₃ |
| **781.** | HC≡C-C(CH₃)(C₂H₅)- | C(=O)CF₃ |
| **782.** | HC≡C-C(CH₃)(C₃H₇)- | C(=O)CF₃ |
| **783.** | CH₂=CH-CH₂- | C(=O)CF₃ |
| **784.** | H₂C=CH-CH(CH₃)- | C(=O)CF₃ |
| **785.** | H₂C=CH-C(CH₃)₂- | C(=O)CF₃ |
| **786.** | H₂C=CH-C(C₂H₅)(CH₃)- | C(=O)CF₃ |
| **787.** | C₆H₅-CH₂- | C(=O)CF₃ |
| **788.** | 4-(CH₃)₃C-C₆H₄-CH₂- | C(=O)CF₃ |
| **789.** | C₆H₅-CH₂- | C(=O)CF₃ |
| **790.** | 4-(CH₃)₃C-C₆H₄-CH₂- | C(=O)CF₃ |
| **791.** | 4-Cl-C₆H₄-CH₂- | C(=O)CF₃ |
| **792.** | 3-(CH₃O)-C₆H₄-CH₂- | C(=O)CF₃ |
| **793.** | 4-(CH₃O)-C₆H₄-CH₂- | C(=O)CF₃ |
| **794.** | 2-(CH₃O)-C₆H₄-CH₂- | C(=O)CF₃ |
| **795.** | 3-Cl-C₆H₄-CH₂- | C(=O)CF₃ |
| **796.** | 2-Cl-C₆H₄-CH₂- | C(=O)CF₃ |
| **797.** | 4-(F₃C)-C₆H₄-CH₂- | C(=O)CF₃ |
| **798.** | NC-CH₂- | C(=O)CF₃ |
| **799.** | NC-CH₂-CH₂- | C(=O)CF₃ |
| **800.** | NC-CH₂-CH(CH₃)- | C(=O)CF₃ |
| **801.** | NC-CH₂-C(CH₃)₂- | C(=O)CF₃ |
| **802.** | NC-CH₂-CH₂-CH₂- | C(=O)CF₃ |
| **803.** | FH₂C-CH₂- | C(=O)CF₃ |
| **804.** | CIH₂C-CH₂- | C(=O)CF₃ |
| **805.** | BrH₂C-CH₂- | C(=O)CF₃ |
| **806.** | FH₂C-CH(CH₃)- | C(=O)CF₃ |
| **807.** | CIH₂C-CH(CH₃)- | C(=O)CF₃ |
| **808.** | BrH₂C-CH(CH₃)-CH₃ | C(=O)CF₃ |
| **809.** | F₂HC-CH₂- | C(=O)CF₃ |
| **810.** | F₃C-CH₂- | C(=O)CF₃ |
| **811.** | FH₂C-CH₂-CH₂- | C(=O)CF₃ |
| **812.** | CIH₂C-CH₂-CH₂- | C(=O)CF₃ |
| **813.** | BrH₂C-CH₂-CH₂- | C(=O)CF₃ |
| **814.** | F₂HC-CH₂-CH₂- | C(=O)CF₃ |
| **815.** | F₃C-CH₂-CH₂- | C(=O)CF₃ |
| **816.** | CH₃-O-CH₂-CH₂- | C(=O)CF₃ |
| **817.** | CH₃-S-CH₂-CH₂- | C(=O)CF₃ |
| **818.** | CH₃-SO₂-CH₂-CH₂- | C(=O)CF₃ |
| **819.** | C₂H₅-O-CH₂-CH₂- | C(=O)CF₃ |
| **820.** | (CH₃)₂CH-O-CH₂-CH₂- | C(=O)CF₃ |
| **821.** | C₂H₅-S-CH₂-CH₂- | C(=O)CF₃ |
| **822.** | C₂H₅-SO₂-CH₂-CH₂- | C(=O)CF₃ |
| **823.** | (CH₃)₂N-CH₂-CH₂- | C(=O)CF₃ |
| **824.** | (C₂H₅)₂N-CH₂-CH₂- | C(=O)CF₃ |
| **825.** | [(CH₃)₂CH]₂N-CH₂-CH₂- | C(=O)CF₃ |
| **826.** | CH₃-O-CH₂-CH(CH₃)- | C(=O)CF₃ |
| **827.** | CH₃-S-CH₂-CH(CH₃)- | C(=O)CF₃ |
| **828.** | CH₃-SO₂-CH₂-CH(CH₃)- | C(=O)CF₃ |
| **829.** | C₂H₅-O-CH₂-CH(CH₃)- | C(=O)CF₃ |
| **830.** | C₂H₅-S-CH₂-CH(CH₃)- | C(=O)CF₃ |
| **831.** | C₂H₅-SO₂-CH₂-CH(CH₃)- | C(=O)CF₃ |
| **832.** | (CH₃)₂N-CH₂-CH(CH₃)- | C(=O)CF₃ |
| **833.** | (C₂H₅)₂-N-CH₂-CH(CH₃)- | C(=O)CF₃ |
| **834.** | [(CH₃)₂CH]₂N-CH₂-CH(CH₃)- | C(=O)CF₃ |
| **835.** | CH₃-O-CH(CH₃)-CH₂- | C(=O)CF₃ |
| **836.** | CH₃-S-CH(CH₃)-CH₂- | C(=O)CF₃ |
| **837.** | CH₃-SO₂-CH(CH₃)-CH₂ | C(=O)CF₃ |
| **838.** | C₂H₅-O-CH(CH₃)-CH₂- | C(=O)CF₃ |
| **839.** | C₂H₅-S-CH(CH₃)-CH₂- | C(=O)CF₃ |
| **840.** | C₂H₅-SO₂-CH(CH₃)-CH₂ | C(=O)CF₃ |
| **841.** | (CH₃)₂-N-CH(CH₃)-CH₂- | C(=O)CF₃ |
| **842.** | (C₂H₅)₂N-CH(CH₃)-CH₂- | C(=O)CF₃ |
| **843.** | [(CH₃)₂CH]₂N-CH(CH₃)-CH₂- | C(=O)CF₃ |
| **844.** | CH₃-O-CH₂-CH₂-CH₂- | C(=O)CF₃ |
| **845.** | CH₃-S-CH₂-CH₂-CH₂- | C(=O)CF₃ |
| **846.** | CH₃-SO₂-CH₂-CH₂-CH₂- | C(=O)CF₃ |
| **847.** | C₂H₅-O-CH₂-CH₂-CH₂- | C(=O)CF₃ |
| **848.** | C₂H₅-S-CH₂-CH₂-CH₂- | C(=O)CF₃ |
| **849.** | C₂H₅-SO₂-CH₂-CH₂-CH₂. | C(=O)CF₃ |
| **850.** | (CH₃)₂N-CH₂-CH₂-CH₂- | C(=O)CF₃ |
| **851.** | (C₂H₅)₂N-CH₂-CH₂-CH₂- | C(=O)CF₃ |
| **852.** | CH₃-O-CH₂-C(CH₃)₂- | C(=O)CF₃ |
| **853.** | CH₃-S-CH₂-C(CH₃)₂- | C(=O)CF₃ |
| **854.** | CH₃-SO₂-CH₂-C(CH₃)₂₋ | C(=O)CF₃ |
| **855.** | C₂H₅-O-CH₂-C(CH₃)₂- | C(=O)CF₃ |
| **856.** | C₂H₅-S-CH₂-C(CH₃)₂- | C(=O)CF₃ |
| **857.** | C₂H₅-SO₂-CH₂-C(CH₃)₂- | C(=O)CF₃ |
| **858.** | (CH₃)₂N-CH₂-C(CH₃)₂- | C(=O)CF₃ |
| **859.** | (C₂H₅)₂N-CH₂-C(CH₃)₂- | C(=O)CF₃ |
| **860.** | [(CH₃)₂CH]₂N-CH₂-C(CH₃)₂- | C(=O)CF₃ |
| **861.** | CI-CH₂-C≡C-CH₂- | C(=O)CF₃ |
| **862.** | CH₃-O-C(O)-CH₂ | C(=O)CF₃ |
| **863.** | C₂H₅-O-C(O)-CH₂ | C(=O)CF₃ |
| **864.** | CH₃-O-C(O)-CH(CH₃)- | C(=O)CF₃ |
| **865.** | C₂H₅-O-C(O)-CH(CH₃)- | C(=O)CF₃ |
| **866.** | (CH₃O)₂CH-CH₂- | C(=O)CF₃ |
| **867.** | (C₂H₅O)₂CH-CH₂- | C(=O)CF₃ |
| **868.** | C(=O)CH₃ | C(=O)CF₃ |
| **869.** | C(=O)CH₂-CH₃- | C(=O)CF₃ |
| **870.** | C(=O)CF₃ | C(=O)CF₃ |
| **871.** | C(=O)CCl₃ | C(=O)CF₃ |
| **872.** | C(=O)CH₂-CH₂-CH₃ | C(=O)CF₃ |
| **873.** | C(=O)C-CH₃)₃ | C(=O)CF₃ |
| **874.** | C(=O)CH₂-C₆H₅ | C(=O)CF₃ |
| **875.** | C(=O)CH₂-CH₂-CH₃ | C(=O)CF₃ |
| **876.** | H | C(=O)CCl₃ |
| **877.** | CH₃ | C(=O)CCl₃ |
| **878.** | CH₃CH₂- | C(=O)CCl₃ |
| **879.** | (CH₃)₂CH- | C(=O)CCl₃ |
| **880.** | CH₃CH₂CH₂- | C(=O)CCl₃ |
| **881.** | n-C₄H₉ | C(=O)CCl₃ |
| **882.** | (CH₃)₃C- | C(=O)CCl₃ |
| **883.** | (CH₃)₂CH-CH₂- | C(=O)CCl₃ |
| **884.** | n-C₅H₁₁ | C(=O)CCl₃ |
| **885.** | (CH₃)₂CH-CH₂-CH₂- | C(=O)CCl₃ |
| **886.** | (C₂H₅)₂-CH- | C(=O)CCl₃ |
| **887.** | (CH₃)₃C-CH₂- | C(=O)CCl₃ |
| **888.** | (CH₃)₃C-CH₂-CH₂- | C(=O)CCl₃ |
| **889.** | C₂H₅CH(CH₃)-CH₂- | C(=O)CCl₃ |
| **890.** | CH₃-CH₂-C(CH₃)₂- | C(=O)CCl₃ |
| **891.** | (CH₃)₂CH-CH(CH₃)- | C(=O)CCl₃ |
| **892.** | (CH₃)₃C-CH(CH₃)- | C(=O)CCl₃ |
| **893.** | (CH₃)₂CH-CH₂-CH(CH₃)- | C(=O)CCl₃ |
| **894.** | CH₃-CH₂-C(CH₃)(CH₃)- | C(=O)CCl₃ |
| **895.** | CH₃-CH₂-CH₂-C(CH₃)₂- | C(=O)CCl₃ |
| **896.** | C₂H₅-CH₂-CH(CH₃)-CH₂- | C(=O)CCl₃ |
| **897.** | Cyclopropyl | C(=O)CCl₃ |
| **898.** | Cyclopropyl-CH₂- | C(=O)CCl₃ |
| **899.** | Cyclopropyl-CH(CH₃)- | C(=O)CCl₃ |
| **900.** | Cyclobutyl | C(=O)CCl₃ |
| **901.** | Cyclopentyl | C(=O)CCl₃ |
| **902.** | Cyclohexyl | C(=O)CCl₃ |
| **903.** | HC≡C-CH₂- | C(=O)CCl₃ |
| **904.** | HC≡C-CH(CH₃)- | C(=O)CCl₃ |
| **905.** | HC≡C-C(CH₃)₂- | C(=O)CCl₃ |
| **906.** | HC≡C-C(CH₃)(C₂H₅)- | C(=O)CCl₃ |
| **907.** | HC≡C-C(CH₃)(C₃H₇)- | C(=O)CCl₃ |
| **908.** | CH₂=CH-CH₂- | C(=O)CCl₃ |
| **909.** | H₂C=CH-CH(CH₃)- | C(=O)CCl₃ |
| **910.** | H₂C=CH-C(CH₃)₂- | C(=O)CCl₃ |
| **911.** | H₂C=CH-C(C₂H₅)(CH₃)- | C(=O)CCl₃ |
| **912.** | C₆H₅-CH₂- | C(=O)CCl₃ |
| **913.** | 4-(CH₃)₃C-C₆H₄-CH₂- | C(=O)CCl₃ |
| **914.** | C₆H₅-CH₂- | C(=O)CCl₃ |
| **915.** | 4-(CH₃)₃C-C₆H₄-CH₂- | C(=O)CCl₃ |
| **916.** | 4-Cl-C₆H₄-CH₂- | C(=O)CCl₃ |
| **917.** | 3-(CH₃O)-C₆H₄-CH₂- | C(=O)CCl₃ |
| **918.** | 4-(CH₃O)-C₆H₄-CH₂- | C(=O)CCl₃ |
| **919.** | 2-(CH₃O)-C₆H₄-CH₂- | C(=O)CCl₃ |
| **920.** | 3-Cl-C₆H₄-CH₂- | C(=O)CCl₃ |
| **921.** | 2-Cl-C₆H₄-CH₂- | C(=O)CCl₃ |
| **922.** | 4-(F₃C)-C₆H₄-CH₂- | C(=O)CCl₃ |
| **923.** | NC-CH₂- | C(=O)CCl₃ |
| **924.** | NC-CH₂-CH₂- | C(=O)CCl₃ |
| **925.** | NC-CH₂-CH(CH₃)- | C(=O)CCl₃ |
| **926.** | NC-CH₂-C(CH₃)₂- | C(=O)CCl₃ |
| **927.** | NC-CH₂-CH₂-CH₂- | C(=O)CCl₃ |
| **928.** | FH₂C-CH₂- | C(=O)CCl₃ |
| **929.** | CIH₂C-CH₂- | C(=O)CCl₃ |
| **930.** | BrH₂C-CH₂- | C(=O)CCl₃ |
| **931.** | FH₂C-CH(CH₃)- | C(=O)CCl₃ |
| **932.** | CIH₂C-CH(CH₃)- | C(=O)CCl₃ |
| **933.** | BrH₂C-CH(CH₃)-CH₃ | C(=O)CCl₃ |
| **934.** | F₂HC-CH₂- | C(=O)CCl₃ |
| **935.** | F₃C-CH₂- | C(=O)CCl₃ |
| **936.** | FH₂C-CH₂-CH₂- | C(=O)CCl₃ |
| **937.** | CIH₂C-CH₂-CH₂- | C(=O)CCl₃ |
| **938.** | BrH₂C-CH₂-CH₂- | C(=O)CCl₃ |
| **939.** | F₂HC-CH₂-CH₂- | C(=O)CCl₃ |
| **940.** | F₃C-CH₂-CH₂- | C(=O)CCl₃ |
| **941.** | CH₃-O-CH₂-CH₂- | C(=O)CCl₃ |
| **942.** | CH₃-S-CH₂-CH₂- | C(=O)CCl₃ |
| **943.** | CH₃-SO₂-CH₂-CH₂- | C(=O)CCl₃ |
| **944.** | C₂H₅-O-CH₂-CH₂- | C(=O)CCl₃ |
| **945.** | (CH₃)₂CH-O-CH₂-CH₂- | C(=O)CCl₃ |
| **946.** | C₂H₅-S-CH₂-CH₂- | C(=O)CCl₃ |
| **947.** | C₂H₅-SO₂-CH₂-CH₂- | C(=O)CCl₃ |
| **948.** | (CH₃)₂N-CH₂-CH₂- | C(=O)CCl₃ |
| **949.** | (C₂H₅)₂N-CH₂-CH₂- | C(=O)CCl₃ |
| **950.** | [(CH₃)₂CH]₂N-CH₂-CH₂- | C(=O)CCl₃ |
| **951.** | CH₃-O-CH₂-CH(CH₃)- | C(=O)CCl₃ |
| **952.** | CH₃-S-CH₂-CH(CH₃)- | C(=O)CCl₃ |
| **953.** | CH₃-SO₂-CH₂-CH(CH₃)- | C(=O)CCl₃ |
| **954.** | C₂H₅-O-CH₂-CH(CH₃)- | C(=O)CCl₃ |
| **955.** | C₂H₅-S-CH₂-CH(CH₃)- | C(=O)CCl₃ |
| **956.** | C₂H₅-SO₂-CH₂-CH(CH₃)- | C(=O)CCl₃ |
| **957.** | (CH₃)₂N-CH₂-CH(CH₃)- | C(=O)CCl₃ |
| **958.** | (C₂H₅)₂-N-CH₂-CH(CH₃)- | C(=O)CCl₃ |
| **959.** | [(CH₃)₂CH]₂N-CH₂-CH(CH₃)- | C(=O)CCl₃ |
| **960.** | CH₃-O-CH(CH₃)-CH₂- | C(=O)CCl₃ |
| **961.** | CH₃-S-CH(CH₃)-CH₂- | C(=O)CCl₃ |
| **962.** | CH₃-SO₂-CH(CH₃)-CH₂ | C(=O)CCl₃ |
| **963.** | C₂H₅-O-CH(CH₃)-CH₂- | C(=O)CCl₃ |
| **964.** | C₂H₅-S-CH(CH₃)-CH₂- | C(=O)CCl₃ |
| **965.** | C₂H₅-SO₂-CH(CH₃)-CH₂ | C(=O)CCl₃ |
| **966.** | (CH₃)₂-N-CH(CH₃)-CH₂- | C(=O)CCl₃ |
| **967.** | (C₂H₅)₂N-CH(CH₃)-CH₂- | C(=O)CCl₃ |
| **968.** | [(CH₃)₂CH]₂N-CH(CH₃)-CH₂- | C(=O)CCl₃ |
| **969.** | CH₃-O-CH₂-CH₂-CH₂- | C(=O)CCl₃ |
| **970.** | CH₃-S-CH₂-CH₂-CH₂- | C(=O)CCl₃ |
| **971.** | CH₃-SO₂-CH₂-CH₂-CH₂- | C(=O)CCl₃ |
| **972.** | C₂H₅-O-CH₂-CH₂-CH₂- | C(=O)CCl₃ |
| **973.** | C₂H₅-S-CH₂-CH₂-CH₂- | C(=O)CCl₃ |
| **974.** | C₂H₅-SO₂-CH₂-CH₂-CH₂. | C(=O)CCl₃ |
| **975.** | (CH₃)₂N-CH₂-CH₂-CH₂- | C(=O)CCl₃ |
| **976.** | (C₂H₅)₂N-CH₂-CH₂-CH₂- | C(=O)CCl₃ |
| **977.** | CH₃-O-CH₂-C(CH₃)₂- | C(=O)CCl₃ |
| **978.** | CH₃-S-CH₂-C(CH₃)₂- | C(=O)CCl₃ |
| **979.** | CH₃-SO₂-CH₂-C(CH₃)₂- | C(=O)CCl₃ |
| **980.** | C₂H₅-O-CH₂-C(CH₃)₂- | C(=O)CCl₃ |
| **981.** | C₂H₅-S-CH₂-C(CH₃)₂- | C(=O)CCl₃ |
| **982.** | C₂H₅-SO₂-CH₂-C(CH₃)₂- | C(=O)CCl₃ |
| **983.** | (CH₃)₂N-CH₂-C(CH₃)₂- | C(=O)CCl₃ |
| **984.** | (C₂H₅)₂N-CH₂-C(CH₃)₂- | C(=O)CCl₃ |
| **985.** | [(CH₃)₂CH]₂N-CH₂-C(CH₃)₂- | C(=O)CCl₃ |
| **986.** | Cl-CH₂-C≡C-CH₂- | C(=O)CCl₃ |
| **987.** | CH₃-O-C(O)-CH₂ | C(=O)CCl₃ |
| **988.** | C₂H₅-O-C(O)-CH₂ | C(=O)CCl₃ |
| **989.** | CH₃-O-C(O)-CH(CH₃)- | C(=O)CCl₃ |
| **990.** | C₂H₅-O-C(O)-CH(CH₃)- | C(=O)CCl₃ |
| **991.** | (CH₃O)₂CH-CH₂- | C(=O)CCl₃ |
| **992.** | (C₂H₅O)₂CH-CH₂- | C(=O)CCl₃ |
| **993.** | C(=O)CH₃ | C(=O)CCl₃ |
| **994.** | C(=O)CH₂-CH₃- | C(=O)CCl₃ |
| **995.** | C(=O)CF₃ | C(=O)CCl₃ |
| **996.** | C(=O)CCl₃ | C(=O)CCl₃ |
| **997.** | C(=O)CH₂-CH₂-CH₃ | C(=O)CCl₃ |
| **998.** | C(=O)C-CH₃)₃ | C(=O)CCl₃ |
| **999.** | C(=O)CH₂-C₆H₅ | C(=O)CCl₃ |
| **1000.** | C(=O)CH₂-CH₂-CH₃ | C(=O)CCl₃ |

## Patentansprüche

1. Zusammensetzung umfassend
- mindestens einen insektiziden und/oder akariziden Wirkstoff aus der Klasse der 2-Cyano(het)-arylsulfonamide und deren isomerer Formen
- mindestens ein Salz der Formel (II) 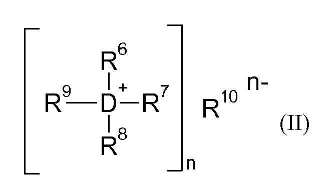
in welcher
D für Stickstoff oder Phosphor steht,
R⁶ R⁷, R⁸ und R⁹ unabhängig voneinander für Wasserstoff oder jeweils gegebenenfalls substituiertes C₁-C₈-Alkyl oder einfach oder mehrfach ungesättigtes, gegebenenfalls substituiertes C₁-C₈-Alkylen stehen, wobei die Substituenten aus Halogen, Nitro und Cyano ausgewählt sein können,
n für 1, 2, 3 oder 4 steht,
R¹⁰ für ein anorganisches oder organisches Anion steht.

2. Zusammensetzung gemäß Anspruch 1, **dadurch gekennzeichnet, dass** der Wirkstoff ein 2-Cyano(het)-arylsulfonamid der allgemeinen Formel (I) ist 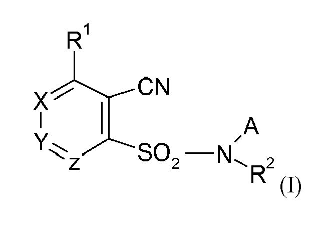 in welcher
A für Wasserstoff, C₁-C₆-Alkyl, C₂-C₆-Alkenyl oder C₁-C₆-Alkylcarbonyl steht, wobei die letztgenannten 3 Reste unsubstituiert, teilweise oder vollständig halogeniert sein können,
R¹ für Wasserstoff, Halogen, C₁-C₄-Alkyl, C₁-C₄-Halogenalkyl, C₁-C₄-Halogenalkoxy, oder C₁-C₄-Alkoxy steht, wobei der letztgenannte Rest einen oder zwei Reste aus der Gruppe C₁-C₄-Alkoxy tragen kann;
R² für Wasserstoff, C₁-C₆-Alkyl, C₂-C₆-Alkenyl, C₂-C₇-Alkinyl, C₃-C₈-Cycloalkyl oder C₁-C₄-Alkoxy, C₁-C₄-Alkylcarbonyl, wobei die sechs letztgenannten Reste unsubstituiert, teilweise oder vollständig halogeniert sein können und/oder einen, zwei oder drei Reste aus der Gruppe C₁-C₄-Alkoxy, C₁-C₄-Alkylthio, C₁-C₄-Alkylsulfinyl, C₁-C₄-Alkylsulfonyl, C₁-C₄-Halogenalkoxy, C₁-C₄-Halogenalkylthio, C₁-C₄-Alkylcarbonyl, C₁-C₄-Alkoxycarbonyl, Cyano, Amino, (C₁-C₄-Alkyl)amino, Di-(C₁-C₄-alkyl)amino, C₃-C₈-Cycloalkyl und Phenyl tragen können, wobei das Phenyl unsubstituiert, teilweise oder vollständig halogeniert sein kann und/oder einen, zwei oder drei Substituenten aus der Gruppe C₁-C₄-Alkyl, C₁-C₄-Halogenalkyl, C₁-C₄-Alkoxy, C₁-C₄-Halogenalkoxy tragen kann, steht;
X für N, N-O oder C-R³ steht,
Y für N, N-O oder C-R⁴ steht,
Z für N, N-O oder C-R⁵ steht, mit der Maßgabe, dass mindestens eine der Gruppen X, Y oder Z für N oder N-O steht;
R³ R⁴ und R⁵ unabhängig voneinander für Wasserstoff, Halogen, Cyano, Nitro, C₁-C₆-Alkyl, C₃-C₈-Cycloalkyl, C₁-C₄-Halogenalkyl, C₁-C₄-Alkoxy, C₁-C₄-Alkylthio, C₁-C₄-Alkylsulfinyl, C₁-C₄-Alkylsulfonyl, C₁-C₄-Halogenalkoxy, C₁-C₄-Halogenalkylthio, C₂-C₆-Alkenyl, C₂-C₆-Alkinyl, C₁-C₄-Alkoxycarbonyl, Amino, (C₁-C₄-Alkyl)amino, Di-(C₁-C₄-alkyl)amino, Aminocarbonyl, (C₁-C₄-Alkyl)aminocarbonyl und Di- (C₁-C₄-alkyl)aminocarbonyl stehen.

3. Zusammensetzung gemäß Anspruch 1 oder 2, **dadurch gekennzeichnet, dass** der Wirkstoff ein 2-Cyano(het)-arylsulfonamid der allgemeinen Formel (I) und/oder der isomeren Form (I-A) ist 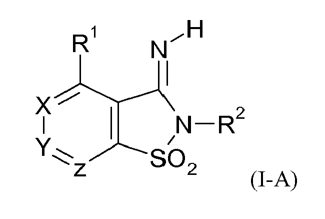 in welcher
R¹ für Wasserstoff, Halogen, C₁-C₄-Alkyl, C₁-C₄-Halogenalkyl, C₁-C₄-Halogenalkoxy, oder C₁-C₄-Alkoxy steht, wobei der letztgenannte Rest einen oder zwei Reste aus der Gruppe C₁-C₄-Alkoxy tragen kann;
R² für C₁-C₆-Alkyl, C₂-C₆-Alkenyl, C₂-C₇-Alkinyl, C₃-C₈-Cycloalkyl oder C₁-C₄-Alkoxy, C₁-C₄-Alkylcarbonyl, wobei die sechs letztgenannten Reste unsubstituiert, teilweise oder vollständig halogeniert sein können und/oder einen, zwei oder drei Reste aus der Gruppe C₁-C₄-Alkoxy, C₁-C₄-Alkylthio, C₁-C₄-Alkylsulfinyl, C₁-C₄-Alkylsulfonyl, C₁-C₄-Halogenalkoxy, C₁-C₄-Halogenalkylthio, C₁-C₄-Alkylcarbonyl, C₁-C₄-Alkoxycarbonyl, Cyano, Amino, (C₁-C₄-Alkyl)amino, Di-(C₁-C₄-alkyl)amino, C₃-C₈-Cycloalkyl und Phenyl tragen können, wobei das Phenyl unsubstituiert, teilweise oder vollständig halogeniert sein kann und/oder einen, zwei oder drei Substituenten aus der Gruppe C₁-C₄-Alkyl, C₁-C₄-Halogenalkyl, C₁-C₄-Alkoxy, C₁-C₄-Halogenalkoxy tragen kann, steht;
X für N, N-O oder C-R³ steht,
Y für N, N-O oder C-R⁴ steht,
Z für N, N-O oder C-R⁵ steht,
mit der Maßgabe, dass mindestens eine der Gruppen X, Y oder Z für N oder N-O steht;
R³, R⁴ und R⁵ unabhängig voneinander für Wasserstoff, Halogen, Cyano, Nitro, C₁-C₆-Alkyl, C₃-C₈-Cycloalkyl, C₁-C₄-Halogenalkyl, C₁-C₄-Alkoxy, C₁-C₄-Alkylthio, C₁-C₄-Alkylsulfinyl, C₁-C₄-Alkylsulfonyl, C₁-C₄-
Halogenalkoxy, C₁-C₄-Halogenalkylthio, C₂-C₆-Alkenyl, C₂-C₆-Alkinyl, C₁-C₄-Alkoxycarbonyl, Amino, (C₁-C₄-Alkyl)amino, Di-(C₁-C₄-alkyl)amino, Aminocarbonyl, (C₁-C₄-Alkyl)aminocarbonyl und Di-(C₁-C₄-alkyl)aminocarbonyl stehen.

4. Zusammensetzung gemäß Anspruch 1 oder 2, **dadurch gekennzeichnet, dass** der Wirkstoff ein 2-Cyano(het)-arylsulfonamid der allgemeinen Formel (I) und/oder der isomeren Form (I-B) ist 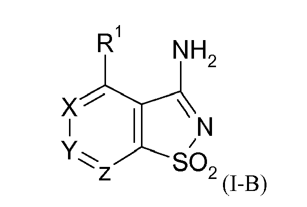 in welcher
R¹, R³, R⁴, R⁵, X, Y,Z die in Anspruch 2 angegebenen Bedeutungen haben.

5. Zusammensetzung gemäß der Ansprüche 1 bis 4, **dadurch gekennzeichnet, dass** der Wirkstoffgehalt zwischen 0,5 und 50 Gew. % beträgt.

6. Zusammensetzung gemäß der Ansprüche 1 bis 5, **dadurch gekennzeichnet, dass** der Gehalt an Ammonium- oder Phosphoniumsalz zwischen 0.5 und 80 mmol/l beträgt

7. Zusammensetzung gemäß der Ansprüche 1 bis 6, **dadurch gekennzeichnet, dass** D für Stickstoff steht.

8. Zusammensetzung gemäß Anspruch 7, **dadurch gekennzeichnet, dass** R¹⁰ für Hydrogencarbonat, Tetraborat, Fluorid, Bromid, Jodid, Chlorid, Monohydrogenphosphat, Dihydrogenphosphat, Hydrogensulfat, Tartrat, Sulfat, Nitrat, Thiosulfat, Thiocyanat, Formiat, Laktat, Acetat, Propionat, Butyrat, Pentanoat, Citrat oder Oxalat steht.

9. Zusammensetzung gemäß Anspruch 7, **dadurch gekennzeichnet, dass** R¹⁰ für Thiocyanat, Dihydrogenphosphat, Monohydrogenphosphat oder Sulfat steht.

10. Zusammensetzung gemäß Anspruch 7, **dadurch gekennzeichnet, dass** R¹⁰ für Sulfat steht.

11. Zusammensetzung gemäß der Ansprüche 1 bis 10, **dadurch gekennzeichnet, dass** sie mindestens einen Penetrationsförderer enthält.

12. Zusammensetzung gemäß Anspruch 11, **dadurch gekennzeichnet, dass** der Penetrationsförderer ein Fettalkohol-Alkoxylat der Formel (III)
R-O-(-AO)_{V}-R' (III)
in welcher
R für geradkettiges oder verzweigtes Alkyl mit 4 bis 20 Kohlenstoffatomen steht,
R' für Wasserstoff, Methyl, Ethyl, n-Propyl, i-Propyl, n-Butyl, i-Butyl, t-Butyl, n-Pentyl oder n-Hexyl steht,
AO für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
v für Zahlen von 2 bis 30 steht,
oder ein mineralisches oder vegetabiles Öl oder der Ester eines mineralischen oder vegetabilen Öls ist.

13. Zusammensetzung gemäß Anspruch 11, **dadurch gekennzeichnet, dass** der Penetrationsförderer Rapsölmethylester ist.

14. Zusammensetzung gemäß der Ansprüche 1 bis 13, **dadurch gekennzeichnet, dass** der Gehalt an Penetrationsförderer 1 bis 95 Gew. % beträgt.

15. Verfahren zur Bekämpfung von Schadinsekten und/oder Spinnmilben, **dadurch gekennzeichnet, dass** eine Zusammensetzung gemäß einem oder mehreren der Ansprüche 1 bis 14 unverdünnt oder verdünnt in solcher Menge auf Insekten und/oder Spinnmilben oder ihren Lebensraum appliziert wird, dass eine wirksame Menge der enthaltenen insektiziden Wirkstoffe auf die Insekten und/oder Spinnmilben oder ihren Lebensraum wirkt.

16. Verfahren zur Steigerung der Wirkung von Pflanzenschutzmitteln enthaltend einen Wirkstoff aus der Klasse der 2-Cyanobenzolsulfonamide der allgemeinen Formel (I) und/oder deren isomerer Formen (I-A) oder (I-B) gemäß der Ansprüche 2 bis 4, **dadurch gekennzeichnet, dass** das anwendungsfertige Mittel (Spritzbrühe) unter Einsatz eines Salzes der Formel (II) gemäß Anspruch 1 zubereitet wird.

17. Verfahren gemäß Anspruch 16, **dadurch gekennzeichnet, dass** die Spritzbrühe unter Einsatz eines Penetrationsförderers zubereitet wird.

18. Verfahren gemäß Anspruch 16 oder 17, **dadurch gekennzeichnet, dass** der Penetrationsförderer in einer Endkonzentration von 0,1 bis 10 g/l und/oder das Salz der Formel (II) in einer Endkonzentration von 0,5 bis 80 mmol/l vorliegt.

19. Verwendung eines Salzes der Formel (II) gemäß Anspruch 1 zur Steigerung der Wirkung eines Pflanzenschutzmittels enthaltend einen Wirkstoff aus der Klasse der 2-Cyanobenzolsulfonamid der allgemeinen Formel (I) und/oder deren isomerer Form (I-A) oder (I-B) gemäß der Ansprüche 2 bis 4, **dadurch gekennzeichnet, dass** das Salz bei der Zubereitung eines anwendungsfertigen Pflanzenschutzmittels (Spritzbrühe) eingesetzt wird.

20. Verwendung gemäß Anspruch 19, **dadurch gekennzeichnet, dass** das Salz der Formel (II) in dem anwendungsfertigen Pflanzenschutzmittel in einer Konzentration von 0,5 bis 80 mmol/l vorliegt.

21. Verwendung gemäß Anspruch 19 oder 20, **dadurch gekennzeichnet, dass** das Salz bei der Zubereitung eines anwendungsfertigen Pflanzenschutzmittels (Spritzbrühe) eingesetzt wird, das weiterhin einen Penetrationsförderer enthält.
